(19) Europäisches Patentamt
European Patent Office
Office européen des brevets

(11) EP 1 956 596 A1

(12) **EUROPEAN PATENT APPLICATION**
published in accordance with Art. 158(3) EPC

(43) Date of publication:
**13.08.2008 Bulletin 2008/33**

(21) Application number: **06833663.5**

(22) Date of filing: **29.11.2006**

(51) Int Cl.:
***G11B 7/24*** *(2006.01)* ***G11B 7/254*** *(2006.01)*
***G11B 7/257*** *(2006.01)*

(86) International application number:
**PCT/JP2006/323860**

(87) International publication number:
**WO 2007/063923 (07.06.2007 Gazette 2007/23)**

(84) Designated Contracting States:
**DE FR GB**

(30) Priority: **30.11.2005 JP 2005345922**
**23.03.2006 JP 2006081068**
**21.11.2006 JP 2006314255**
**21.11.2006 JP 2006314275**

(71) Applicant: **Fujifilm Corporation**
**Minato-Ku**
**Tokyo 106-8620 (JP)**

(72) Inventors:
- **IMAMURA, Kiyofumi**
  **Odawara-shi, Kanagawa 250-0001 (JP)**
- **SHIBATA, Michihiro**
  **Odawara-shi, Kanagawa 250-0001 (JP)**
- **NII, Kazumi**
  **Minamiashigara-shi, Kanagawa 250-0193 (JP)**

(74) Representative: **HOFFMANN EITLE**
**Patent- und Rechtsanwälte**
**Arabellastrasse 4**
**81925 München (DE)**

# (54) OPTICAL INFORMATION RECORDING MEDIUM, METHOD FOR MANUFACTURING OPTICAL INFORMATION RECORDING MEDIUM, METHOD FOR VISIBLE INFORMATION RECORDING, USE OF MIXTURE, AND MIXTURE

(57) This invention provides an optical information recording medium (10A) that can record information by laser beam (38) irradiation. The optical information recording medium (10A) comprises a visible information recording layer (24) on which visible information is to be recorded. The visible information recording layer (24) contains a coloring matter, and at least one metal atom selected from the group consisting of Na, Mg, K, and Ca. The coloring matter is at least one material selected from the group consisting of oxonol coloring matter, cyanine coloring matter, azo coloring matter, phthalocyanine coloring matter, and pyrromethene coloring matter.

FIG. 1

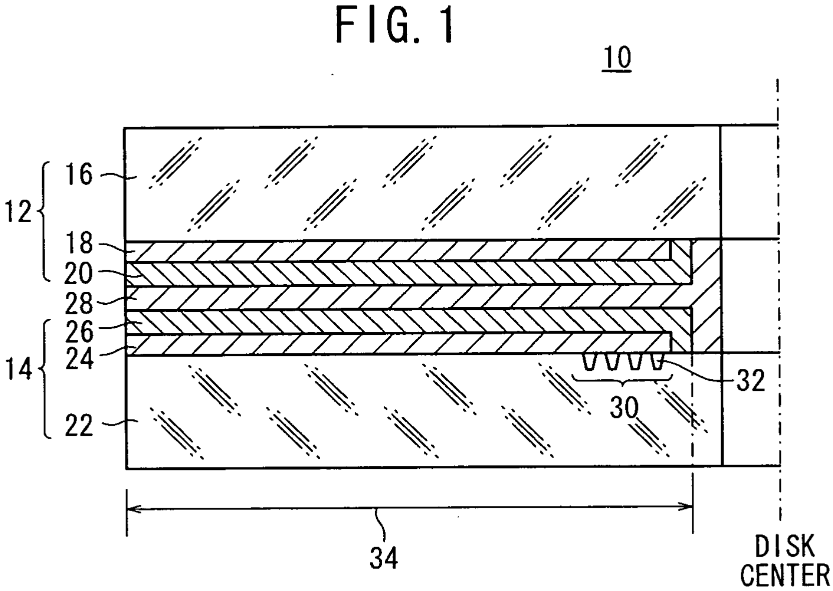


EP 1 956 596 A1

## Description

### TECHNICAL FIELD

The present invention relates to an optical information-recording medium having a visible information-recording layer capable of recording visible information, a method for producing (manufacturing) the optical information-recording medium, a visible information-recording method (method for visible information recording) for recording visible information on the optical information-recording medium, a method (use of mixture) for using a mixture that forms the visible information-recording layer, and the mixture.

### BACKGROUND ART

An optical information-recording medium (optical disk), on which information can be recorded only once using a laser beam, has hitherto been known. Such optical disks include a write-once type CD (so-called CD-R) and a write-once type digital versatile disk (so-called DVD-R).

Optical disks include those on which a label may be stuck to a surface, which is disposed on a side opposite to the recording surface for recording music data or the like thereon, wherein visible information (an image), including music titles of music data recorded on the recording surface and/or other titles to distinguish the recorded data, may be printed on the label. Such an optical disk is manufactured as follows. That is, a title or the like is previously printed on a circular label sheet by means of a printer or the like, and the label sheet is stuck to a surface disposed on the side opposite to the recording surface of the optical disk.

On the other hand, a system in which a label is formed by radiating a laser beam onto an optical disk has been investigated, which is distinct from the system in which a label sheet is stuck onto a surface of the optical disk, as described above (see, for example, Patent Document 1).

It has been suggested that a visible information-recording layer may be formed in an optical disk, wherein a dye is used as a material for the visible information-recording layer (see, for example, Patent Document 2, Patent Document 3 and Patent Document 4). Further, an optical information-recording medium has hitherto been suggested, which has a structure constructed by successively stacking a visible information-recording layer containing a phthalide-based leuco dye, and a colorable laser beam-transmissive layer, which has a hue that is in a relationship of complementary color with respect to a hue of a portion (drawing portion) recorded on the visible information-recording layer (see, for example, Patent Document 5). According to this technique, visible information can be recorded clearly using a laser beam on the side of the label surface, by radiating the laser beam at a low output without exerting, for example, any thermal influence on the electronic information recorded on the medium.

In the optical disk having the visible information-recording layer as described above, it is necessary that the color variation is favorably increased by applying coloring to a substrate on which the visible information-recording layer is formed.

On the other hand, from a technical standpoint, when a colored substrate is used, a problem arises in that an output control must be performed for the laser beam, as compared to the case when a transparent substrate is used.

In particular, in the case of an optical disk having a conventional visible information-recording layer, as described in Patent Document 5, a colorable laser beam-transmissive layer is formed, which has the hue that is in a complementary color relationship with respect to the hue of the portion (drawing portion) recorded on the visible information-recording layer. Therefore, there is a certain limit imposed on the colors that are capable of being used. Further, it is necessary to perform an output control for the laser beam by using a front monitor, so that writing can be performed with an appropriate power when the visible information is written.

The conventional optical disk, in which a visible information-recording layer based on the use of dyes is formed, also involves additional problems, such that light durability and/or heat durability becomes insufficient after the label has been formed.

Patent Document 1: Japanese Laid-Open Patent Publication No. 11-066617
Patent Document 2: Japanese Laid-Open Patent Publication No. 2000-113516
Patent Document 3: Japanese Laid-Open Patent Publication No. 2001-283464
Patent Document 4: Japanese Laid-Open Patent Publication No. 2000-173096
Patent Document 5: Japanese Laid-Open Patent Publication No. 2004-246981

### DISCLOSURE OF THE INVENTION

The present invention has been made taking the foregoing conventional problems into consideration. An object of the present invention is to provide an optical information-recording medium provided with a visible information-recording layer in which a label can be formed using a laser beam, wherein the visible information is excellent in light durability

and/or heat durability. An object of the present invention also is to provide a mixture for forming the visible-information recording layer, as well as a method for using the mixture.

Another object of the present invention is to provide an optical information-recording medium, as well as a method for producing the optical information-recording medium, in which output control of a laser beam can be suppressed to a minimum, even when a colored substrate is used for the optical information-recording medium on which an image can be drawn on a label surface.

Still another object of the present invention is to provide a method for recording visible information, in which necessary hardware resources for a recording unit can be minimized, so that a general user can easily record visible information using the recording unit.

According to a first aspect of the present invention, there is provided an optical information-recording medium capable of recording information by radiating a laser beam, the optical information-recording medium comprising a visible information-recording layer on which visible information is to be recorded, wherein the visible information-recording layer contains a dye and at least one metal atom selected from the group consisting of Na, Mg, K, and Ca.

In the optical information-recording medium, the visible information is excellent in light durability and heat durability owing to the fact that at least one metal atom, selected from the group consisting of Na, Mg, K, and Ca, is contained within the visible information-recording layer. The reasons as to why the effects described above are obtained are not fully known. However, the present inventors have made the following speculations.

Specifically, after recording has been performed on the visible information-recording layer, the dye density differs between the area in which visible information is recorded and the area in which visible information is not recorded. In particular, dye density is low in an area in which visible information is not recorded. When the optical information-recording medium is subjected to exposure over a long period of time, deterioration tends to arise at the interface between the area in which visible information is recorded and the area in which visible information is not recorded. However, it is considered that such deterioration is suppressed, owing to the inclusion of the metal atom in the first aspect of the present invention, such that durability against light and/or durability against heat are improved.

As described above, according to the first aspect of the present invention, a label can be formed using a laser beam. Therefore, it is possible to provide an optical information-recording medium provided with a visible information-recording layer, wherein the visible information is excellent in light durability and heat durability.

In the first aspect of the present invention, the dye may be at least one selected from the group consisting of oxonol dyes, cyanine dyes, azo dyes, phthalocyanine dyes, and pyrromethene dyes.

In the first aspect of the present invention, the metal atom is preferably contained at a ratio of 0.1 to 100 g, more preferably at a ratio of 1 to 50 g, and still more preferably at a ratio of 1 to 10 g, with respect to 1 kg of the dye. If the content exceeds the upper limit, it is difficult to record visible information satisfactorily, because crystallization occurs in the visible information-recording layer. If the content is less than the lower limit, durability to light and heat tends to be insufficient. Further, even more preferably, the lower limit value is 0.5 g, in which case, at this time, the upper limit value preferably is 50 g, and more preferably, 10 g.

Still further, when considered from the perspective of the content ratio of the metal atoms, it is preferable that the metal atoms be included at a range of 0.001 to 1 % by weight within the visible information-recording layer, and more preferably, that the lower limit thereof be 0.001 % by weight.

In the present specification, in the case of any of the foregoing standards, although upper and lower limit values have been noted, so long as the effects of the present invention are obtained, the content amount of metal atoms is not particularly limited.

In the first aspect of the present invention, the dye may also contain a trimethine cyanine dye and a phthalocyanine dye, having a central metal of Cu.

In this case, a metal atom preferably is contained at a ratio of 0.1 to 10 g, and more preferably at a ratio of 1 to 5 g, with respect to 50 g of the content of Cu as the central metal.

In the first aspect of the present invention, the optical information-recording medium includes a first substrate, a recording layer formed on the first substrate, a first reflective layer formed on the recording layer, an adhesive layer formed on the first reflective layer, a second reflective layer formed on the adhesive layer, the visible information-recording layer, which is formed on the second reflective layer, and a second substrate formed on the visible information-recording layer.

In the first aspect of the present invention, the dye may be an oxonol dye, having a structure represented by the following general formula (1-1).

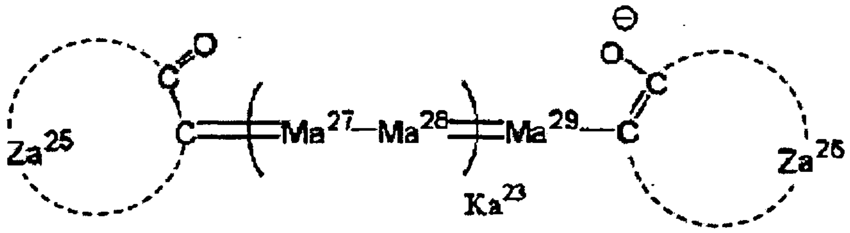

· Q ···(1-1)

In the general formula (1-1), $Za^{25}$, $Za^{26}$ are atomic groups that form acidic nuclei, independently and respectively, and $Ma^{27}$, $Ma^{28}$, $Ma^{29}$ are substituted or unsubstituted methine groups, independently and respectively. $Ka^{23}$ represents an integer ranging from 0 to 3. Q represents a monovalent cation to neutralize electric charge. When $Ka^{23}$ is plural, a plurality of $Ma^{27}$, $Ma^{28}$ may be identical with each other, or different from each other. It is also preferable to use a dye having a structure in which the dyes represented by the general formula (1-1) are connected by a connecting group or a linking group.

In the first aspect of the present invention, the dye may be an oxonol dye, having a structure represented by the following general formula (1-2).

... (1-2)

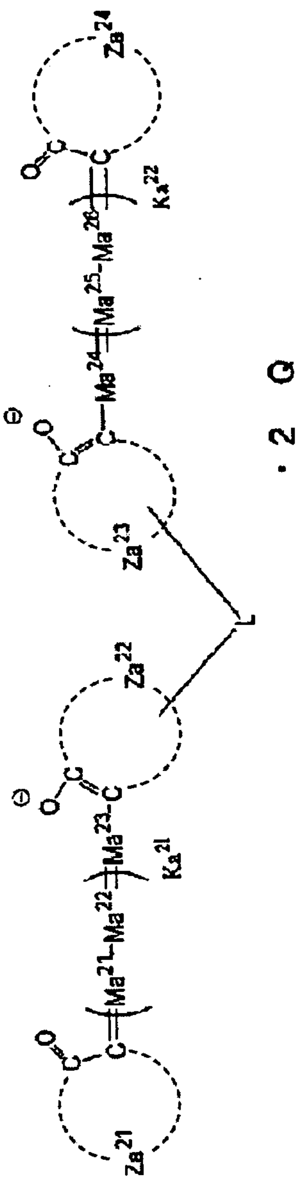

In the general formula (1-2), $Za^{21}$, $Za^{22}$, $Za^{23}$, $Za^{24}$ represent atomic groups, having acidic nuclei, independently and respectively, and $Ma^{21}$, $Ma^{22}$, $Ma^{23}$, $Ma^{24}$, $Ma^{25}$, $Ma^{26}$ represent substituted or unsubstituted methine groups, independently and respectively. L represents a divalent connecting group, which does not form a $\pi$ conjugated system together with two bonds. $Ka^{21}$, $Ka^{22}$ represent integers ranging from 0 to 3 independently and respectively. Q represents a monovalent cation to neutralize electric charge. Alternatively, 2Q represents a divalent cation. When $Ka^{21}$, $Ka^{22}$ are plural, a plurality of $Ma^{21}$, $Ma^{22}$, $Ma^{25}$, $Ma^{26}$ may be identical with each other, or different from each other.

In the first aspect of the present invention, the dye may be a cyanine dye represented by the general formula (2-1).

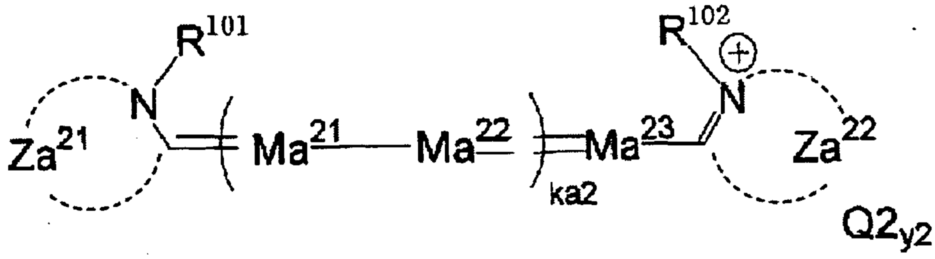

... (2-1)

In the general formula (2-1), $Za^{21}$, $Za^{22}$ represent atomic groups that form heterocycles or heterocyclic rings, independently and respectively. $Ma^{21}$, $Ma^{22}$, $Ma^{23}$ represent substituted or unsubstituted methine groups, independently and respectively. ka2 represents an integer ranging from 0 to 3. When ka2 is 2 or greater, a plurality of $Ma^{21}$, $Ma^{22}$ may be identical with each other, or different from each other. $R^{101}$, $R^{102}$ represent substituents, independently and respectively. Q2 represents an ion to neutralize electric charge. y2 represents a number that is required to neutralize electric charge.

In the first aspect of the present invention, the dye may be a cyanine dye represented by the following general formula (2-2).

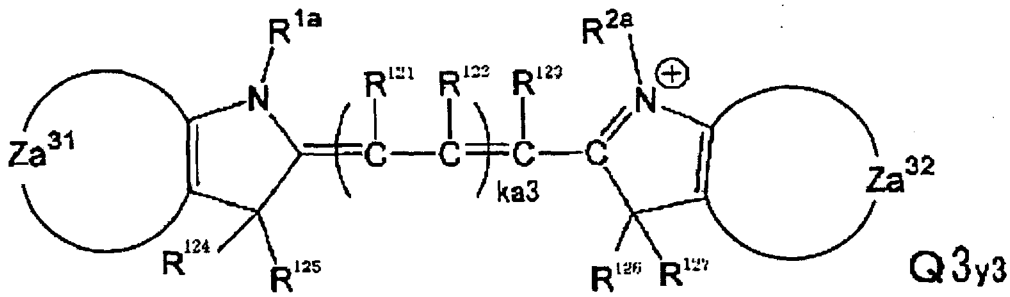

... (2-2)

In the general formula (2-2), $Za^{31}$, $Za^{32}$ represent atomic groups that form carbon rings or heterocyclic rings, independently and respectively. $R^{1a}$, $R^{2a}$ represent substituents, independently and respectively. $R^{121}$, $R^{122}$, $R^{123}$, $R^{124}$, $R^{125}$, $R^{126}$, $R^{127}$ represent hydrogen atoms or substituents, independently and respectively. ka3 represents an integer ranging from 0 to 3. When ka3 is 2 or greater, a plurality of $R^{121}$, $R^{122}$ may be identical with each other, or different from each other. Q3 represents an ion to neutralize electric charge. y3 represents a number required to neutralize electric charge.

In the first aspect of the present invention, the dye may be an azo dye represented by the following general formula (3-1).

$$A - N = N - B \qquad (3-1)$$

In the general formula (3-1), A represents a monovalent group derived from a coupler component, and B represents a monovalent group derived from a diazonium salt.

In the first aspect of the present invention, the dye may be an azo dye represented by the following general formula (3-2).

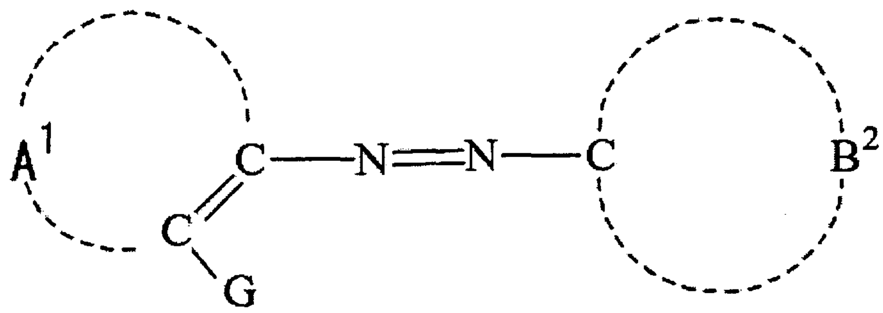

··· (3-2)

In the general formula (3-2), $A^1$, $B^1$ represent atomic groups that form substituted or unsubstituted aromatic hydrocarbon rings, or substituted or unsubstituted aromatic heterocyclic rings, independently and respectively. G represents a monovalent group with the ability to effect coordination with respect to metal ions.

In the first aspect of the present invention, the dye may be a phthalocyanine dye represented by the following general formula (4-1).

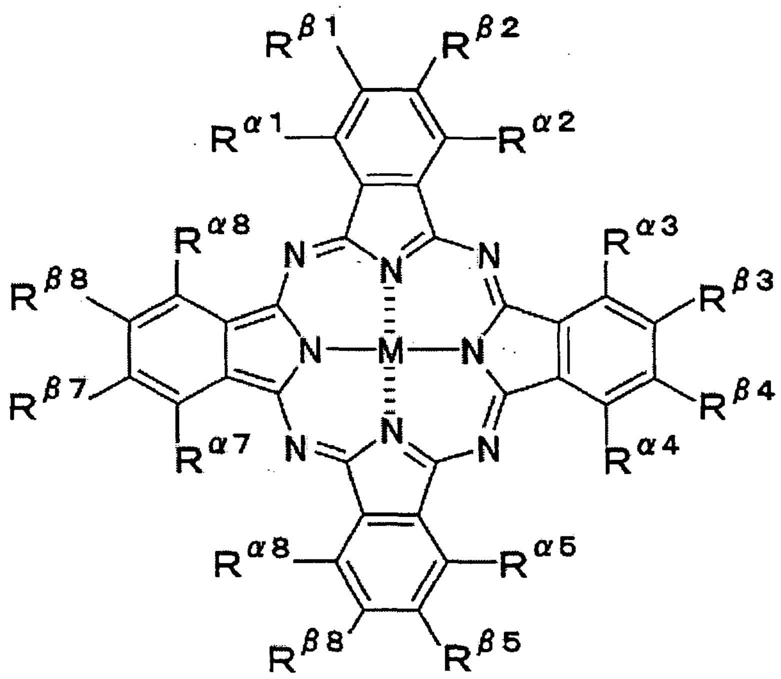

··· (4-1)

In the general formula (4-1), $R^{\alpha1}$ to $R^{\alpha8}$, $R^{\beta1}$ to $R^{\beta8}$ represent a hydrogen atom, a halogen atom, a cyano group, a nitro group, a formyl group, a carboxyl group, a sulfo group, an alkyl group having a number of carbon atoms of 1 to 20, an aryl group having a number of carbon atoms of 6 to 14, an aralkyl group having a number carbon atoms of 7 to 15, a heterocyclic group having a number of carbon atoms of 1 to 10, an alkoxy group having a number of carbon atoms of 1 to 20, an aryloxy group having a number of carbon atoms of 6 to 14, an acyl group having a number of carbon atoms of 2 to 21, an alkylsulfonyl group having a number of carbon atoms of 1 to 20, an arylsulfonyl group having a number of carbon atoms of 6 to 20, a carbamoyl group having a number of carbon atoms of 1 to 25, a sulfamoyl group having a number of carbon atoms of 0 to 32, an alkoxycarbonyl group having a number of carbon atoms of 2 to 21, an aryloxycarbonyl group having a number of carbon atoms of 7 to 15, an acylamino group having a number of carbon atoms of 2 to 21, a sulfonylamino group having a number of carbon atoms of 1 to 20, and an amino group having a number of carbon atoms of 0 to 36. M represents two hydrogen atoms, a metal, a metal oxide, or a metal having a ligand.

In the first aspect of the present invention, the dye may be a pyrromethene dye represented by the general formula (5-1).

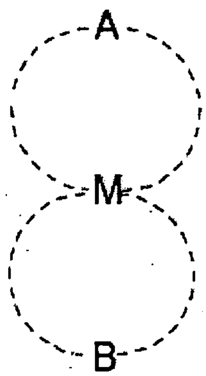

··· (5-1)

In the general formula (5-1), A represents a chelate ring formed by a metal M and a pyrromethene compound represented by the following general formula (5-2), and B represents a chelate ring formed together with M and having a nitrogen atom, an oxygen atom, and/or a sulfur atom. A and B may be identical with each other, or different from each other.

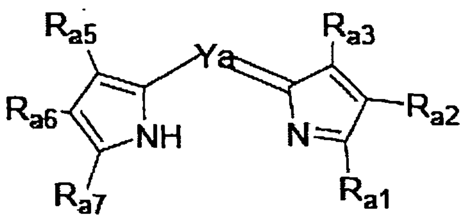

··· (5-2)

In the general formula (5-2), Ya represents N or $CR_{a3}$. $R_{a1}$, $R_{a2}$, $R_{a3}$, $R_{a4}$, $R_{a5}$, $R_{a6}$, $R_{a7}$ represent a hydrogen atom or a substituent. $R_{a1}$ and $R_{a2}$, $R_{a2}$ and $R_{a3}$, $R_{a5}$ and $R_{a6}$, and $R_{a6}$ and $R_{a7}$ may be bonded respectively to form an aromatic ring or a heterocyclic ring. The ring may have a substituent. Further, the aromatic ring or the heterocyclic ring may be condensed with the ring.

In the next place, as a result of a diligent investigation concerning the problems described above, the present inventors have consequently discovered an optical information-recording medium, and a method for producing the optical information-recording medium, on which an image can be drawn on a label surface thereof, and wherein output control of a laser beam can be suppressed to a minimum even when a colored substrate is used, by adjusting the content of a dye and/or a pigment in the substrate during a substrate-forming step, on the basis of the output of the laser beam when the drawing is performed.

That is, according to a second aspect of the present invention, there is provided an optical information-recording medium comprising a colored substrate, and a visible information-recording layer which is formed on the colored substrate and on which visible information is recorded by means of a laser beam, wherein the colored substrate is formed such that an added amount of a dye and/or a pigment contained in the substrate is adjusted on the basis of an output of the laser beam.

According to a third aspect of the present invention, there is provided an optical information-recording medium comprising a colored first substrate, a visible information-recording layer which is formed on the first substrate and on which visible information is recorded by means of a first laser beam, a second transparent substrate, and a data-recording layer which is formed on the second substrate and on which data is recorded by means of a second laser beam, wherein the first substrate is formed such that an added amount of a dye and/or a pigment contained in the first substrate is adjusted on the basis of an output of the first laser beam.

Further, according to a fourth aspect of the present invention, there is provided an optical information-recording

medium comprising a colored first substrate, a visible information-recording layer which is formed on the first substrate and on which visible information is recorded by means of a first laser beam, a second transparent substrate, and a data-recording layer which is formed on the second substrate and on which data is recorded by means of a second laser beam, wherein on the side of said first substrate, a first laser beam control area is disposed for controlling the first laser beam, the first laser beam control area including laser power control information for controlling laser power corresponding to color information of the colored first substrate.

In this case, prepits, pregrooves, or code patterns (a bar code or the like) including the laser power control information may be formed in the laser beam control area.

In the case that the first substrate is a colored substrate, there are situations in which the first laser beam is absorbed by the first substrate, and wherein a given laser power does not reach the visible information-recording layer. In that case, although it is necessary to set the laser power by means of a drive, making such settings by means of the drive is difficult. However, in the present invention, the first laser beam control area for controlling the first laser beam is provided on the first substrate. Because the first laser beam control area includes therein laser power control information for controlling laser power corresponding to color information of the colored first substrate, even when the first substrate is a colored substrate, as a result of the drive referring to such information and setting the laser power based thereon, the desired laser power reaches to the visible information-recording layer, so that visible information of a sufficient contrast is recorded.

According to a fifth aspect of the present invention, there is provided a method for producing an optical information-recording medium comprising a colored substrate and a visible information-recording layer formed on the substrate, and wherein visible information may be recorded on the visible information-recording layer by means of a laser beam radiated from a side of the substrate, the method comprising a substrate-forming step for forming the colored substrate by adjusting an added amount of a dye and/or a pigment contained in the substrate on the basis of an output of the laser beam, and a recording layer-forming step for forming the visible information-recording layer on the substrate.

According to a sixth aspect of the present invention, there is provided a method for producing an optical information-recording medium comprising a colored first substrate, a visible information-recording layer formed on the first substrate, a second transparent substrate, and a data-recording layer formed on the second substrate, wherein visible information may be recorded on the visible information-recording layer by means of a laser beam radiated from a side of the first substrate, and data is recorded on the data-recording layer by means of a laser beam radiated from a side of the second substrate, the method comprising a substrate-forming step of forming the first substrate by adjusting an added amount of a dye and/or a pigment contained in the first substrate on the basis of an output of the laser beam, a first recording layer-forming step of forming the visible information-recording layer on the first substrate, and a second recording layer-forming step of forming the data-recording layer on the second substrate.

In the second to sixth aspects of the present invention, even when a colored substrate is used for the optical information-recording medium, in which an image can be drawn on the label surface, the output control of the laser beam can be suppressed to a minimum. Further, it is possible to use various colors. Therefore, it is possible to respond adequately to needs in which increased color variation is desired.

In the third, fourth and sixth aspects of the present invention, when the data-recording layer is a recording layer which is formed by applying a dye, the dye used for the data-recording layer may also be used as the dye that is contained in the visible information-recording layer.

In the next place, according to a seventh aspect of the present invention, there is provided a method for recording visible information on a visible information-recording layer of an optical information-recording medium as defined by any of the first to third aspects of the present invention, wherein the method comprises using, as the laser beam for recording visible information on the visible information-recording layer, the same laser beam that is used for recording data on the data-recording layer.

Accordingly, necessary hardware resources for the recording unit can be minimized, and a general user can record visible information with ease using such a recording unit.

In the next place, according to a eighth aspect of the present invention, there is provided a method for using a mixture for forming an optical information-recording medium having a visible information-recording layer, on which information is capable of being recorded by radiating a laser beam, and wherein visible information is capable of being recorded on the visible information-recording layer, the method comprising using the mixture for the visible information-recording layer of the optical information-recording medium, wherein the mixture is composed of a dye and at least one metal atom selected from the group consisting of Na, Mg, K, and Ca.

Accordingly, it is possible to provide an optical information-recording medium having a visible information-recording layer, on which a label can be formed by using the laser beam, and wherein the visible information is excellent in light durability and heat durability.

In the next place, according to an ninth aspect of the present invention, there is provided a mixture, which is used for forming a visible information-recording layer of an optical information-recording medium, on which information is capable of being recorded by radiating a laser beam, and wherein visible information is capable of being recorded on

the visible information-recording layer, wherein the mixture is composed of a dye and at least one metal atom selected from the group consisting of Na, Mg, K, and Ca.

Accordingly, it is possible to provide an optical information-recording medium having a visible information-recording layer, on which a label can be formed by using the laser beam, and wherein the visible information is excellent in light durability and heat durability.

As explained above, in the optical information-recording medium, as well as the mixture and method for using the mixture in accordance with the present invention, visible information, which is excellent in durability against light and heat, can be recorded on the visible information-recording layer using a laser beam, wherein the visible information-recording layer is provided separately from the data recording layer. Further, it is possible to form visible information having high contrast. That is, it is possible to provide an optical information-recording medium, provided with the visible information-recording layer, in which a label can be formed by using the laser beam, and wherein the visible information is excellent in light durability and heat durability.

In the method for recording visible information in accordance with the present invention, necessary hardware resources for the recording unit can be minimized, and general users can easily record visible information using such a recording unit.

In the optical information-recording medium, as well as the method for producing the optical information-recording medium in accordance with the present invention, even when a colored substrate is used for the optical information-recording medium, in which an image can be drawn on the label surface, the output control of the laser beam can be suppressed to a minimum. Further, it is possible to use various colors. Therefore, it is possible to respond adequately to needs in which increased color variation is desired.

## BRIEF DESCRIPTION OF THE DRAWINGS

FIG. 1 is a sectional view illustrating, with partial omission in illustration, the structure of an optical information-recording medium according to an embodiment of the present invention;
FIG. 2 is a plan view of the optical information-recording medium according to a first modification;
FIG. 3 is a plan view of the optical information-recording medium according to a second modification;
FIG. 4 is a sectional view illustrating, with partial omission, the optical information-recording medium according to the second modification;
FIG. 5 is a sectional view illustrating, with partial omission, a structure of a first optical information-recording medium;
FIG. 6 is a sectional view illustrating, with partial omission, a structure of a second optical information-recording medium;
FIG. 7 is a sectional view illustrating, with partial omission, a first substrate of the second optical information-recording medium, together with a data-recording layer, a first reflective layer, and a first protective layer;
FIG. 8 is a sectional view illustrating, with partial omission, a colored substrate of the second optical information-recording medium, together with a visible information-recording layer, a second reflective layer, and a second protective layer;
FIG. 9 is a table illustrating coloration examples, which are used for the colored substrate of the second optical information-recording medium, in accordance with an L*a*b* color system;
FIG. 10 is a block diagram illustrating exemplary steps of a method for producing the second optical information-recording medium;
FIG. 11 is a table illustrating exemplary color combinations of the colored substrate and the color of the visible information-recording layer;
FIG. 12 is a descriptive view showing the trajectory of a laser beam, which is irradiated for forming an image;
FIG. 13 is an enlarged view showing the trajectory of the laser beam at portions where a bold line is drawn in FIG. 12;
FIG. 14 is a table illustrating an evaluation of contrast of the optical information-recording medium in accordance with Examples 1 to 4;
FIG. 15A is a table illustrating drive drawing conditions in the case of recording an evaluation image;
FIG. 15B is a table illustrating measurement conditions by a spectrophotometer;
FIG. 16 is a table illustrating a CIE standard spectral luminous efficiency; and
FIG. 17 is a table illustrating a contrast evaluation standard based on a formula that indicates a contrast evaluation index.

## BEST MODE FOR CARRYING OUT THE INVENTION

An explanation shall be made below with reference to FIGS. 1 to 17 concerning exemplary embodiments of

the optical information-recording medium, the method for producing the optical information-recording medium, the method for recording the visible information, the inventive mixture, and the method for using the mixture, according to the present invention.

As shown in FIG. 1, the basic structure of the optical information-recording medium according to an embodiment of the present invention includes a data recording medium section 12 and a visible information-recording medium section 14. The data recording medium section 12 includes a transparent first substrate 16, a data recording layer 18 which is formed on the first substrate 16, and a first reflective layer 20 formed on the data recording layer 18. The visible information-recording medium section 14 includes a transparent second substrate 22, a visible information-recording layer 24 formed on the second substrate 22, and a second reflective layer 26 formed on the visible information-recording layer 24. Additionally, the data recording medium section 12 and the visible information-recording medium section 14 are laminated together through an adhesive layer 28, so that the first reflective layer 20 and the second reflective layer 26 face toward one another.

The data recording layer 18 is capable of recording data (pit information) thereon by means of laser light, which is irradiated from the side of the first substrate 16, for example.

The visible information-recording layer 24 is capable of recording visible information (images and lettering) by means of laser light, which is irradiated from the side of the second substrate 22, for example.

Furthermore, on the optical information-recording medium 10, a prepit region 30 is allocated to a portion of the surface (a surface on the side where the visible information-recording layer 24 is formed) of the second substrate 22, wherein at least one prepit 32, and preferably a plurality of prepits 32, are formed within the prepit region 30.

As information that is indicated by the combination of the prepits 32, various types of information concerning the optical information-recording medium 10 may be considered, for example, identifying information indicating whether the optical information-recording medium 10 is an optical information-recording medium 10 that includes a visible information-recording layer 24, information concerning the laser beam output (e.g., laser power) at a time when the visible information is drawn on the visible information-recording layer 24, information relating to spot diameter, or information concerning the contrast of the visible information to be drawn, or the like. Accordingly, by detecting the prepits 32, it can easily be detected whether the optical information-recording medium 10 is an optical information-recording medium 10 that includes a visible information-recording layer 24. Further, when visible information is drawn on the visible information-recording layer 24, the visible information can be drawn at an optimal laser output (optimal laser power), and the visible information can be recorded with high rendering characteristics. In addition to the above-mentioned information, as other information which may be indicated by the combination of the prepits 32, manufacturer information or the like may also be given.

As to the position to which the prepit region 30 is allocated in the surface of the second substrate 22, no particular limitation is imposed thereon. For example, as shown in the optical information-recording medium 10a according to a first modified example of FIG. 2, the prepit region 30 may be formed more to the inner peripheral side than a drawing region 34, which is formed by the visible information-recording layer 24. By the presence of the prepit region 30 on the inner peripheral side, because the prepits 32 are not filled by dye compounds, an advantage occurs in that the return light from the prepits 32 is easily detected. However, in order not to form the visible information-recording layer 24 on the prepit region 30, a margin is required to a certain degree between the outermost periphery of the prepit region 30 and the innermost periphery of the drawing region 34.

Of course, from the standpoint of maintaining the drawing region 34 to be as wide as possible, as shown in FIG. 1, the prepit region 30 and the drawing region 34 may partially overlap one another. More specifically, at least a portion of the visible information-recording layer 24 may be formed over the prepits 32. In this case, since the formation position of the visible information-recording layer 24 can be set comparatively freely, the yield in the manufacturing process is improved.

As shown in FIG. 1 and FIG. 2, in the case that the prepit region 30 is disposed on the inner peripheral side of the second substrate 22, preferably, the prepit region 30 is disposed within a range of a radius of 21 to 24 mm from the center of the second substrate 22.

The second substrate 22 having the aforementioned prepits 32 can be manufactured using a stamper as indicated below. The stamper has indented patterns formed therein for the purpose of forming the prepits 32. Among such patterns, the average height of the projecting portions thereof is preferably 150 to 400 nm. By using the stamper, the aforementioned optical information-recording medium 10 can be manufactured with good efficiency.

As a process for manufacturing the stamper, a process can be adopted for manufacturing the stamper, which is substantially the same as processes normally used for manufacturing CD-ROMs. Specifically, the stamper can be manufactured by forming a photoresist film on an original glass plate, carrying out developing or the like thereon, then sputtering a metal such as nickel, etc., and carrying out an electroforming process.

In place of the prepit region 30, a pregroove region in which pregrooves are formed may also be used. Alternatively, in place of the prepit region 30, a burst cutting area (BCA) may be utilized, in which a bar code pattern formed by an indented patterning is recorded. In this case, in accordance with the pregrooves or the bar code pattern, identifying

information indicating whether the optical information-recording medium 10 is an optical information-recording medium 10 that includes a visible information-recording layer 24, information concerning the laser beam output (e.g., laser power) at a time when the visible information is drawn on the visible information-recording layer 24, information relating to spot diameter, and information concerning the contrast of the visible information to be drawn, or the like, can be provided.

As for the structure of the above-mentioned optical information-recording medium 10, it is not particularly limited so long as it comprises a structure equipped with the visible information-recording layer 24 capable of drawing thereon visible information by irradiation of a laser beam. Specifically, any of a read-only-type, a write-once-type, or a rewritable-type, or the like, can be used. Among these types, the write-once-type is preferred. Further, as for the recording format, a phase-change type, a magneto-optical type, a dye type, etc., may be used without particular limitation, although among such types, the dye type is preferred.

In particular, the optical information-recording medium 10 shown in FIG. 1 includes a data recording layer 18 on the first substrate 16, and a visible information-recording layer 24 on the second substrate 22. Owing to the fact that such layers are provided in a laminated structure, application of a DVD structure (including, apart from DVD, DVD-R, DVD-RW, and HD-DVD, etc.) is preferable.

As for the layering arrangement of the optical information-recording medium 10, apart from the layer arrangement shown in FIG. 1, for example, the following structures may also be provided.

(1) As described later (see FIG. 5), the first layer arrangement is constructed such that the data-recording layer 18, the first reflective layer 20, and an adhesive layer 28 are successively formed on the first substrate 16, and then, the second substrate 22 including the visible information-recording layer 24 is laminated onto the adhesive layer 28.
(2) Although not shown, the second layer arrangement is constructed such that the data-recording layer 18, the first reflective layer 20, a protective layer, and the adhesive layer 28 are successively formed on the first substrate 16, and then, the second substrate 22 including the visible information-recording layer 24 is laminated onto the adhesive layer 28.
(3) Although not shown, the third layer arrangement is constructed such that the data-recording layer 18, the first reflective layer 20, a first protective layer, the adhesive layer 28, and a second protective layer are successively formed on the first substrate 16, and then, the second substrate 22 including the visible information-recording layer 24 is formed on the second protective layer.
(4) Although not shown, the fourth layer arrangement is constructed such that the data-recording layer 18, the first reflective layer 20, the first protective layer, the adhesive layer 28, the second protective layer, and a third protective layer are successively formed on the first substrate 16, and then, the second substrate 22 including the visible information-recording layer 24 is formed on the third protective layer.
(5) The fifth layer arrangement is constructed such that the data-recording layer 18, the first reflective layer 20, the adhesive layer 28, and the second reflective layer 26 are successively formed on the first substrate 16, and then, the second substrate 22 including the visible information-recording layer 24 is formed on the second reflective layer 26. This layer arrangement is substantially the same as that shown in FIG. 1.
(6) As described later (see FIG. 6), the sixth layer arrangement is constructed such that the data-recording layer 18, the first reflective layer 20 and the first protective layer are successively formed on the first substrate 16, whereas on the other hand, the visible information-recording layer 24, the second reflective layer 26, and the second protective layer are successively formed on the second substrate 22, and then, the first protective layer and the second protective layer are laminated together through the adhesive layer 28.

The layer arrangement shown in FIG. 1 and the layer arrangements (1) to (6), as described above, are described merely by way of example. In the layer arrangements described above, it is also allowable to exchange not only the order, but also a given component or components thereof. No problem arises even when one or more parts thereof (with the exclusion of the visible information-recording layer 24) are omitted. Further, it is allowable for each of the layers to be constructed by either one layer or a plurality of layers.

Further, as a modified example of the optical information-recording medium 10, the configuration shown in FIGS. 3 and 4 may be given. Note that in FIG. 4, the data recording layer 18 (refer to FIG. 1) has been omitted.

The optical information-recording medium 10b shown in FIGS. 3 and 4 according to a second modified example has a structure that is substantially similar to that of the aforementioned optical information-recording medium 10. However, it differs in that a printing region 36 is formed on the inner peripheral side of the principal surface of the second substrate 22. Further, the prepit region 30 does not overlap with the drawing region 34, resulting in a configuration in which the drawing region 34, the prepit region 30 and the printing region 36 are arranged in order from the outer peripheral side to the inner peripheral side of the second substrate 22.

A coversheet, on which a barcode is printed or stamped, for example, may be pasted onto the printing region 36. A product name, maker name, the laser power, or the like, can be identified by means of the barcode, which is printed or stamped on the coversheet. By forming the printing region 36 at the innermost peripheral side of the second substrate

22, the innermost peripheral side of the optical information-recording medium 10b is occluded, such that the effect of visual perception on the user can be enhanced.

Next, two specific examples, which include the basic structure of the optical information-recording medium 10 according to the present embodiment, shall be explained with reference to FIGS. 5 through 11.

At first, as shown in FIG. 5, an optical information-recording medium according to a first embodiment (hereinafter referred to as "first optical information-recording medium 10A") is an optical information-recording medium, on which information can be recorded by radiating a laser beam 38, and which has a visible information-recording layer 24 on which visible information is capable of being recorded.

As shown in FIG. 6, an optical information-recording medium according to a second embodiment (hereinafter referred to as "second optical information-recording medium 10B") has a substrate (hereinafter simply referred to as "colored substrate 22a") formed by coloring a second substrate 22 and a visible information-recording layer 24, which is formed on the colored substrate 22a, wherein visible information is recorded on the visible information-recording layer 24 by means of a laser beam 38 radiated from the side of the colored substrate 22a.

As shown in FIGS. 5 and 6, both the first optical information-recording medium 10A and the second optical information-recording medium 10B have a structure wherein a data-recording medium section 12 and a visible information-recording medium section 14 are bonded to one another through the aid of an adhesive layer 28.

As shown in FIG. 5, the data-recording medium section 12 of the first optical information-recording medium 10A includes a first substrate 16 on which a pregroove 40 is formed on the surface thereof. A data-recording layer 18 is formed along concave/convex portions of the pregroove 40 on the surface of the first substrate 16. A first reflective layer 20 is formed on the data-recording layer 18.

As shown in FIG. 5, the visible information-recording medium section 14 of the first optical information-recording medium 10A includes a second substrate 22 having a flat surface. The visible information-recording layer 24 is formed on the surface of the second substrate 22. A second reflective layer 26 is formed on the visible information-recording layer 24.

When the data-recording medium section 12 and the visible information-recording medium section 14 are bonded to one another, the first reflective layer 20, which is formed on the first substrate 16, is opposed to the second reflective layer 26, which is formed on the second substrate 22, as shown in FIG. 5. Further, the data-recording medium section 12 and the visible information-recording medium section 14 are bonded to one another, while the adhesive layer 28 intervenes between the data-recording medium section 12 and the visible information-recording medium section 14. Accordingly, the first optical information-recording medium 10A is constructed in this manner.

Data (pit information) can be recorded on the data-recording layer 18 by means of the laser beam 38 that is radiated from the side of the first substate 16.

On the other hand, as shown in FIG. 7, the data-recording medium section 12 of the second optical information-recording medium 10B includes a first substrate 16 having a pregroove 40 formed on the surface thereof. The data-recording layer 18 is formed along concave/convex portions of the pregroove 40 on the surface of the first substrate 16. The first reflective layer 20 is formed on the data-recording layer 18, and a first protective layer 42 is formed on the first reflective layer 20.

As shown in FIG. 8, the visible information-recording medium section 14 of the second optical information-recording medium 10B includes the colored substrate 22a, which has a flat surface. The visible information-recording layer 24 is formed on the colored substrate 22a. The second reflective layer 26 is formed on the visible information-recording layer 24, and a second protective layer 44 is formed on the second reflective layer 26.

When the data-recording medium section 12 and the visible information-recording medium section 14 are bonded to one another, the first protective layer 42, which is formed on the first substrate 16, is opposed to the second protective layer 44, which is formed on the colored substrate 22a, as shown in FIG. 6. Further, the data-recording medium section 12 and the visible information-recording medium section 14 are bonded to one another, while the adhesive layer 28 intervenes between the data-recording medium section 12 and the visible information-recording medium section 14. Accordingly, the second optical information-recording medium 10B is constructed in this manner.

In particular, because the second optical information-recording medium 10B utilizes the colored substrate 22a, as information that is obtained by detection of the prepits 32 or the BCA, laser power control information, which corresponds to the color information of the colored substrate 22a, may be given, in order to enable a favorable contrast for the visible information that is recorded on the visible information-recording layer 24.

In the case that the colored substrate 22a is utilized, there are situations in which the laser beam 38 is absorbed by the colored substrate 22a, and wherein a desired laser power does not reach the visible information-recording layer 24. In that case, although it is necessary to set the laser power by means of a drive, making such setting by means of the drive is difficult. However, with the second optical information-recording medium 10B, the prepit region 30 (see FIG. 1) for controlling the laser beam 38 is provided on the side of the colored substrate 22a. Because the prepit region 30 includes therein laser power control information for controlling laser power corresponding to color information of the colored substrate 22a, even when a colored substrate 22a is utilized, as a result of the drive referring to such information

and setting the laser power based thereon, the desired laser power reaches to the visible information-recording layer 24, so that visible information having a sufficient contrast can be recorded.

The visible information-recording layer 24, which is included in each of the first optical information-recording medium 10A and the second optical information-recording medium 10B, contains a dye and at least one metal atom selected from the group consisting of Na, Mg, K, and Ca.

The dye may be at least one selected from the group consisting of oxonol dyes, cyanine dyes, azo dyes, phthalocyanine dyes, and pyrromethene dyes. It is preferable that the dye has an absorbance of not less than 0.05 with respect to the laser beam. The dye may be used singly, or alternatively, two or more of the dyes may be used in combination.

In the first optical information-recording medium 10A and the second optical information-recording medium 10B, the metal atom preferably is contained at a ratio of 0.1 to 100g, more preferably at a ratio of 1 to 50 g, and even more preferably at a ratio of 1 to 10 g, with respect to 1 kg of the dye. If the ratio exceeds the upper limit, crystallization occurs in the visible information-recording layer 14. Therefore, it is difficult to record visible information thereon satisfactorily. On the other hand, if the ratio is less than the lower limit, light durability and/or heat durability thereof become insufficient.

In the first optical information-recording medium 10A and the second optical information-recording medium 10B, it is also appropriate that a trimethine cyanine dye and a phthalocyanine dye, having a central metal of Cu, are contained in the dye. In this case, it is preferable that the metal atom is contained at a ratio of 0.1 to 10 g, and more preferably at a ratio of 1 to 5 g, with respect to 50 g of the content of Cu as the central metal.

Next, explanations shall be made below concerning the respective layers, the first substrate 16, the second substrate 22, and the colored substrate 22a.

[Visible Information-Recording Layer 24]

As described above, the first optical information-recording medium 10A has a visible information-recording layer 24, which contains the main component of the dye, wherein the visible information-recording layer 24 is provided distinctly from the data-recording layer 18 (preferably on the side of the opposite surface). The phrase "contain(s) the main component of the dye" herein refers to the fact that the dye content is not less than 50 % (preferably not less than 80 %) with respect to the total solid content contained within the visible information-recording layer 24.

The visible information-recording layer 24 of each of the first optical information-recording medium 10A and the second optical information-recording medium 10B contains the dye together with at least one metal atom selected from the group consisting of Na, Mg, K, and Ca.

The metal atom is contained at a ratio of 0.1 to 100 g, preferably at a ratio of 1 to 50 g, and more preferably at a ratio of 1 to 10 g, with respect to 1 kg of the dye, for the following reason. Specifically, if the ratio exceeds the upper limit, crystallization occurs in the visible information-recording layer 14. Therefore, it is difficult to record visible information satisfactorily. On the other hand, if the ratio is less than the lower limit, light durability and/or heat durability is insufficient.

When a dye, which contains a trimethine cyanine dye and a phthalocyanine dye having a central metal of Cu, is used for the dye, it is preferable that the metal atom is contained at a ratio of 0.1 to 10 g, and more preferably at a ratio of 1 to 5 g, with respect to 50 g of the content of Cu as the central metal.

Any visible information (images or lettering) desired by a user, which includes, for example, letters, graphics, and patterns, may be recorded on the visible information-recording layer 24. The visible information may include, for example, disk titles, content information, thumbnails of content, related patterns, patterns such as designs, copyright information, the recording date, the recording method, and the recording format.

It is sufficient for the visible information-recording layer 24 to be capable of recording information, such as letters, images and patterns, in such a manner that the information is visually recognizable. In the present embodiment, it is preferable to use a dye which has a maximum absorption within a light wavelength range of 400 to 850 nm, and which has an absorbance of not less than 0.05 (preferably not less than 0.1 and not more than 1.0) with respect to the laser beam that is used.

Specified examples of the dye include cyanine dyes, imidazoquinoxaline-based dyes, pyrylium-based and thiopyrylium-based dyes, azulenium-based dyes, squarylium-based dyes, azo dyes, metal complex-based dyes containing Ni, Cr or the like (phthalocyanine dyes, azo metal chelate dyes, pyrromethene metal chelate dyes), naphthoquinone-based dyes, anthraquinone-based dyes, indophenol-based dyes, indoaniline-based dyes, triphenylmethane-based dyes, merocyanine-based dyes, oxonol-based dyes, aminium-based dyes, and ultraviolet-absorbing agents. Particularly preferable dyes, which are usable in accordance with the present invention, are cyanine-based dyes, phthalocyanine-based dyes, azo dyes (including metal chelate dyes), merocyanine-based dyes, oxonol-based dyes, and ultraviolet-absorbing agents.

A dye, which is suitable for the wavelength of the recording laser beam 38 used in each case may be obtained, for example, by changing the length of the dye conjugation system. That is, when recording is performed with the laser

beam 38 having a wavelength of 750 to 850 nm, for example, a dye in which the methine chain length thereof is 5 to 7 is preferred in the case of using a cyanine dye and/or a merocyanine dye, and a dye in which the methine chain length thereof is 7 to 9 is preferred in the case of using an oxonol-based dye.

On the other hand, when recording is performed with a laser beam 38 having a wavelength of 600 to 700 nm, for example, a dye in which the methine chain length thereof is 3 to 5 is preferred in the case of using a cyanine dye and/or a merocyanine dye, and a dye in which the methine chain length thereof is 5 to 7 is preferred in the case of using an oxonol-based dye.

When recording is performed with the laser beam 38 having a wavelength of 350 to 450 nm, it is also possible to use an ultraviolet-absorbing agent and a near ultraviolet-absorbing agent. However, a dye as described above, which exhibits subsidiary absorption within the wavelength region of the laser beam 38, is preferred. It is also preferable to use a cyanine dye having a methine length of 1 and an oxonol dye having a methine length of 1.

Preferable combinations of the dyes include a combination of oxonol and cyanine dyes, a combination of oxonol and azo dyes, a combination of an oxonol dye and another oxonol dye, a combination of oxonol and phthalocyanine dyes, a combination of oxonol and pyrromethene dyes, a combination of a cyanine dye and another cyanine dye, a combination of cyanine and azo dyes, a combination of cyanine and phthalocyanine dyes, a combination of cyanine and pyrromethene dyes, a combination of azo and phthalocyanine dyes, a combination of azo and pyrromethene dyes, and a combination of phthalocyanine and pyrromethene dyes, respectively.

When the dyes are combined, the content ratio (mass ratio) between the dyes is preferably 99:1 to 1:99, more preferably, 95:5 to 30:70, and even more preferably, 90:10 to 40:60.

The oxonol dye shall now be explained. An oxonol dye is a compound represented by the following general formula (ch-1), wherein the oxonol dye is preferably a dye having a linear or chain acidic nucleus, or a cyclic acidic nucleus, in which the number of methines is preferably 5 to 7. In the general formula (ch-1), n is preferably an integer of 1 to 4. The R's may form a ring or rings. More preferably, the oxonol dye, which is represented by the general formula (1-1) described above, is used. More preferably, the dye represented by the general formula (1-2) is used. Even more preferably, the dye represented by the general formula (ch-8), as described later on, is used. The dyes, which are represented by the general formulas (ch-2), (ch-3), (ch-4), (ch-5), and (ch-6), as described later on, may also be used.

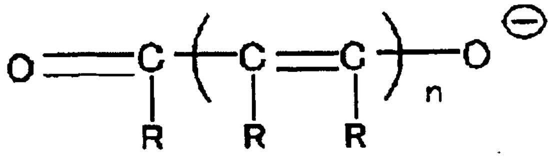 ··· (ch-1)

R: hydrogen or substituent, n: integer of not less than 0

The compound, which is represented by the following general formula (ch-2), may also include examples of compounds represented by the general formula (ch-8), as described later on.

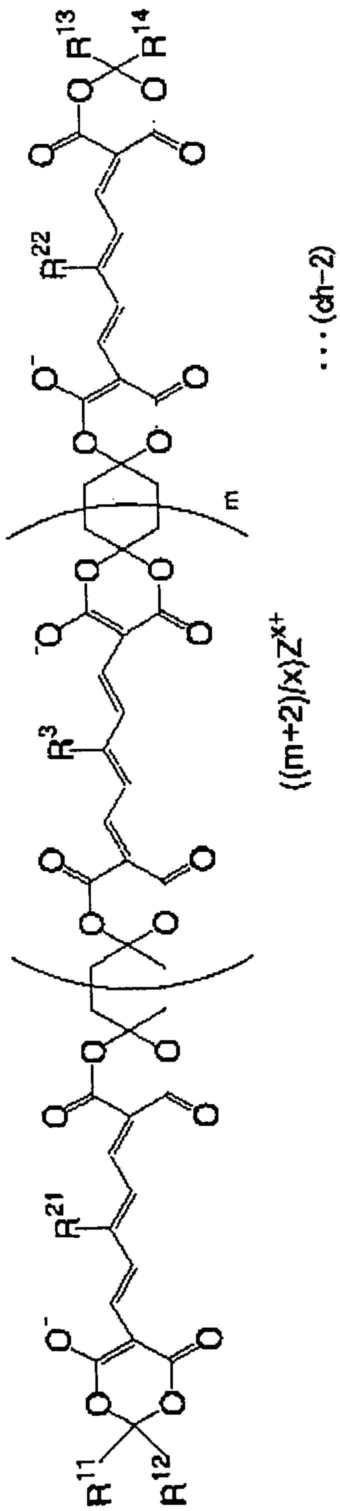

· · · (ch-2)

In the general formula (ch-2), $R^{11}$, $R^{12}$, $R^{13}$, $R^{14}$ represent any one of a hydrogen atom, a substituted or unsubstituted alkyl group, a substituted or unsubstituted aryl group, and a substituted or unsubstituted heterocyclic group, independently and respectively. $R^{21}$, $R^{22}$, $R^3$ represent any one of a hydrogen atom, a substituted or unsubstituted alkyl group, a substituted or unsubstituted alkoxy group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted

or unsubstituted carbamoyl group, an amino group, a substituted amino group, a sulfo group, a hydroxyl group, a nitro group, a substituted or unsubstituted alkylsulfonylamino group, a substituted or unsubstituted arylsulfonylamino group, a substituted or unsubstituted carbamoylamino group, a substituted or unsubstituted alkylsulfonyl group, a substituted or unsubstituted arylsulfonyl group, a substituted or unsubstituted alkylsulfinyl group, a substituted or unsubstituted arylsulfinyl group, and a substituted or unsubstituted sulfamoyl group. m represents an integer of not less than 0. When m is not less than 2, the plurality of $R^3$'s may be identical with each other, or different from each other. $Z^{x+}$ represents a cation, and x represents an integer of not less than 1.

In the general formula (ch-2), $R^{11}$, $R^{12}$, $R^{13}$, $R^{14}$ represent any one of a hydrogen atom, a substituted or unsubstituted alkyl group, a substituted or unsubstituted aryl group, and a substituted or unsubstituted heterocyclic group, independently and respectively. The substituted or unsubstituted alkyl group represented by $R^{11}$, $R^{12}$, $R^{13}$, $R^{14}$ may be exemplified by an alkyl group, having a number of carbon atoms of 1 to 20. When $R^{11}$, $R^{12}$, $R^{13}$, $R^{14}$ represent alkyl groups respectively, they may be bonded to one another, so as to form a carbon ring or a heterocyclic ring. The alkyl group represented by $R^{11}$, $R^{12}$, $R^{13}$, $R^{14}$ is preferably a linear or chain alkyl group, or a cyclic alkyl group having a number of carbon atoms of 1 to 8, and more preferably, is an alkyl group having a number of carbon atoms of 1 to 5, a cyclic alkyl group having a number carbon atoms of 1 to 8 in which $R^{11}$ and $R^{12}$ as well as $R^{13}$ and $R^{14}$ are bonded to one another to form rings respectively, or a substituted alkyl group having a number of carbon atoms of 1 to 20.

The substituted or unsubstituted aryl group represented by $R^{11}$, $R^{12}$, $R^{13}$, $R^{14}$ in the general formula (ch-2) may be exemplified by an aryl group, having a number of carbon atoms of 6 to 20. The aryl group represented by $R^{11}$, $R^{12}$, $R^{13}$, $R^{14}$ is preferably an aryl group having a number of carbon atoms of 6 to 10.

The substituted or unsubstituted heterocyclic group represented by $R^{11}$. $R^{12}$, $R^{13}$, $R^{14}$ in the general formula (ch-2) is a five-membered or six-membered saturated or unsaturated heterocyclic group, constituted by a carbon atom, a nitrogen atom, an oxygen atom, and/or a sulfur atom. It is also allowable to use substances obtained by benzo ring condensation thereof. The substituted or unsubstituted heterocyclic group represented by $R^{11}$, $R^{12}$, $R^{13}$, $R^{14}$ is preferably a substituted or unsubstituted heterocyclic group having a number of carbon atoms of 6 to 10.

The substituted or unsubstituted alkyl group, the substituted or unsubstituted aryl group, and the substituted or unsubstituted heterocyclic group represented by $R^{11}$, $R^{12}$, $R^{13}$, $R^{14}$ in the general formula (ch-2) are exemplified by the substituent group S as described below.

The substituent represented by S includes an alkyl group having a number of carbon atoms of 1 to 20, an aralkyl group having a number of carbon atoms of 7 to 20, an alkoxy group having a number of carbon atoms of 1 to 8, an aryl group having a number of carbon atoms of 6 to 20, an aryloxy group having a number of carbon atoms of 6 to 20, a heterocyclic group, a halogen atom, a carboxyl group, an alkoxycarbonyl group having a number of carbon atoms of 2 to 10, a cyano group, an acyl group having a number of carbon atoms of 2 to 10, a carbamoyl group having a number of carbon atoms of 1 to 10, an amino group, a substituted amino group having a number of carbon atoms of 1 to 20, a sulfo group, a hydroxyl group, a nitro group, an alkylsulfonylamino group having a number of carbon atoms of 1 to 10, a carbamoylamino group having a number of carbon atoms of 1 to 10, a sulfonyl group having a number of carbon atoms of 1 to 10, a sulfinyl group having a number of carbon atoms of 1 to 10, and a sulfamoyl group having a number of carbon atoms of 0 to 10. In the case of the carboxyl group and the sulfo group, such substances may be in the state of a salt.

$R^{21}$, $R^{22}$, $R^3$ in the general formula (ch-2) represent any one of a hydrogen atom, a substituted or unsubstituted alkyl group, a substituted or unsubstituted alkoxy group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted alkylsulfonylamino group, a substituted or unsubstituted carbamoylamino group, a substituted or unsubstituted alkylsulfonyl group, a substituted or unsubstituted arylsulfonyl group, a substituted or unsubstituted sulfinyl group, and a substituted or unsubstituted sulfamoyl group, independently and respectively. As for $R^{21}$, $R^{22}$, $R^3$, the substances to be used therefor are, preferably, a hydrogen atom, a substituted or unsubstituted alkyl group having a number of carbon atoms of 1 to 20, a substituted or unsubstituted heterocyclic group having a number of carbon atoms of 2 to 20, a substituted or unsubstituted alkoxy group having a number of carbon atoms of 1 to 20, a substituted or unsubstituted aryl group having a number of carbon atoms of 6 to 20, and a halogen atom. More preferably, the substances to be used therefor are a hydrogen atom, a substituted or unsubstituted alkyl group having a number of carbon atoms of 1 to 10, a substituted or unsubstituted alkoxy group having a number of carbon atom of 1 to 10, a substituted or unsubstituted heterocyclic group having a number of carbon atoms of 2 to 10, and a halogen atom. Even more preferably, the substances to be used therefor are any one of a hydrogen atom, a substituted or unsubstituted alkyl group having a number of carbon atoms of 1 to 5, a unsubstituted alkoxy group having a number of carbon atoms of 1 to 5, a substituted or unsubstituted heterocyclic group having a number of carbon atoms of 2 to 6, and a halogen atom. $R^{21}$, $R^{22}$, $R^3$ may further have substituents. Such a substituent is exemplified by the substituent group S described above.

It is preferable that m is 0, and that both of $R^{21}$ and $R^{22}$ are hydrogen atoms. It is further preferable that m is

1, and all of $R^{21}$, $R^{22}$ , $R^3$ are hydrogen atoms.

In the general formula (ch-2), m represents an integer of not less than 0, preferably an integer of 0 to 5 (not less than 0 and not more than 5), more preferably an integer of 0 to 3, and even more preferably, an integer of 0 to 2.

In the general formula (ch-2), when m is not less than 2, the plurality of $R^3$'s may be identical with each other, or different from each other, wherein the plurality of $R^3$'s represent hydrogen atoms or substituents thereof, as described above, independently and respectively.

In the general formula (ch-2), $Z^{x+}$ represents a cation, and x represents an integer of not less than 1.

The cation represented by $Z^{x+}$ is preferably a quaternary ammonium ion, and more preferably, a 4,4'-bipyridinium cation represented by a general formula (I-4), as described in Japanese Laid-Open Patent Publication No. 2000-52658, and the 4,4'-bipyridinium cation disclosed in Japanese Laid-Open Patent Publication No. 2002-59652. In the general formula (ch-2), x is preferably 1 or 2.

In the case of the oxonol dye, it is preferable to use a compound represented by the general formula (1-1), as described above.

Next, the general formula (1-1) described above shall be explained in further detail below. In the general formula (1-1), $Za^{25}$, $Za^{26}$ are atomic groups to form acidic nuclei, independently and respectively. The acidic nucleus is synonymous with those formed by $Za^{21}$, $Za^{22}$, $Za^{23}$, $Za^{24}$ in the general formula (1-2) described above. Specified examples thereof are the same or equivalent as well. The acidic nucleus formed by $Za^{25}$, $Za^{26}$ is preferably indandione, pyrazolone, pyrazolinedione, and benzothiopheneone dioxide. In particular, pyrazolone is most preferred.

$Ma^{27}$, $Ma^{28}$, $Ma^{29}$ are substituted or unsubstituted methine groups, independently and respectively, which are synonymous with $Ma^{21}$, $Ma^{22}$, $Ma^{23}$, $Ma^{24}$ $Ma^{25}$, $Ma^{26}$ represented by the general formula (1-2). Specified examples and preferred examples are the same or equivalent as well. $Ma^{27}$, $Ma^{28}$, $Ma^{29}$ are preferably unsubstituted methine groups.

$Ka^{23}$ represents an integer ranging from 0 to 3. $Ka^{23}$ is synonymous with $Ka^{21}$, $Ka^{22}$ in the general formula (1-2). In any case, $Ka^{23}$ preferably is 2. Q represents a monovalent cation to neutralize electric charge.

When $Ka^{23}$ is plural, a plurality of $Ma^{27}$, $Ma^{28}$, $Ma^{29}$ may be identical with each other, or different from each other.

The dye, which has a structure represented by the general formula (1-1) described above, preferably is represented by the general formulas (ch-3), (ch-4), (ch-5), and (ch-6).

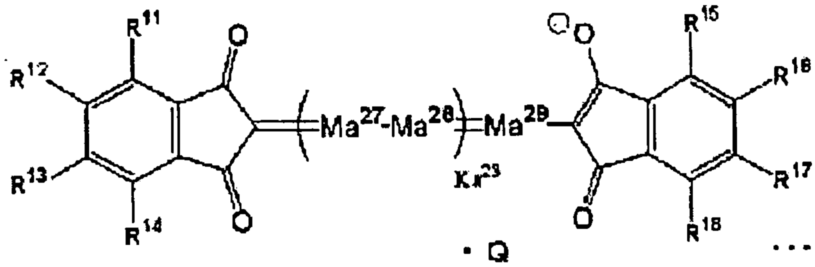

··· (ch-3)

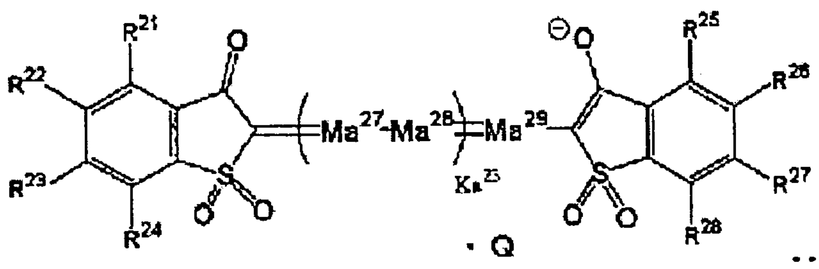

··· (ch-4)

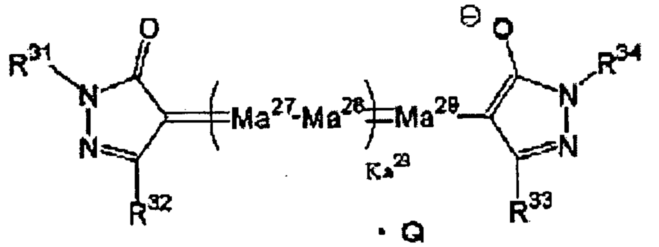

··· (ch-5)

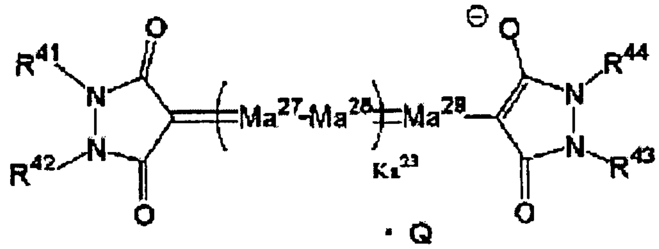

··· (ch-6)

In the general formulas (ch-3), (ch-4), (ch-5), and (ch-6), $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{31}$, $R^{32}$, $R^{33}$, $R^{34}$, $R^{41}$, $R^{42}$, $R^{43}$, $R^{44}$ are hydrogen atoms or substituents, independently and respectively. $Ma^{27}$. $Ma^{28}$, $Ma^{29}$ are substituted or unsubstituted methine groups, independently and respectively. $Ka^{23}$ represents an integer ranging from 0 to 3. Q represents a monovalent cation to neutralize electric charge. When $Ka^{21}$, $Ka^{22}$ are plural, a plurality of $Ma^{27}$, $Ma^{28}$ may be identical with each other, or different from each other.

In the general formulas (ch-3), (ch-4), (ch-5), and (ch-6), $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{32}$, $R^{33}$ (these are referred to as "R" in some cases) represent hydrogen atoms or substituents, independently and respectively. Examples of the substituent may include a halogen atom, a substituted or unsubstituted alkyl group, a substituted or unsubstituted alkenyl group, a substituted or unsubstituted alkynyl group, a substituted or unsubstituted aryl group, a substituted or unsubstituted heterocyclic group, a cyano group, a hydroxyl group, a nitro group, a carboxyl group, a substituted or unsubstituted alkoxy group, a substituted or unsubstituted aryloxy group, a substituted or unsubstituted silyloxy group, a substituted or unsubstituted heterocyclicoxy group, a substituted or unsubstituted acyloxy group, a substituted or unsubstituted carbamoyloxy group, a substituted or unsubstituted alkoxycarbonyloxy group, a substituted or unsubstituted aryloxycarbonyloxy group, a substituted or unsubstituted amino group, a substituted or unsubstituted acylamino group, a substituted or unsubstituted aminocarbonylamino group, a substituted or unsubstituted alkoxycarbonylamino group, a substituted or unsubstituted aryloxycarbonylamino group, a substituted or unsubstituted sulfamoylamino group, a substituted or unsubstituted alkyl and arylsulfonylamino group, a substituted or unsubstituted mercapto group, a substituted or unsubstituted alkylthio group, a substituted or unsubstituted arylthio group, a substituted or unsubstituted heterocyclicthio group, a substituted or unsubstituted sulfamoyl group, a sulfo group, a substituted or unsubstituted alkyl and arylsulfinyl group, a substituted or unsubstituted alkyl and arylsulfonyl group, a substituted or unsubstituted acyl group, a substituted or unsubstituted aryloxycarbonyl group, a substituted or unsubstituted alkoxycarbonyl group, a substituted or unsubstituted carbamoyl group, a substituted or unsubstituted aryl and heterocyclicazo group, a substituted or unsubstituted imide group, a substituted or unsubstituted phosphino group, a substituted or unsubstituted phosphinyl group, a substituted or unsubstituted phosphinyloxy group, a substituted or unsubstituted phosphinylamino group, and a substituted or unsubstituted silyl group.

Most preferably, $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$ are hydrogen atoms.

As for $R^{31}$, $R^{34}$, $R^{41}$, $R^{42}$, $R^{43}$, $R^{44}$, the same substituents as those of R are exemplified. However, it is preferable to select a hydrogen atom, a substituted or unsubstituted alkyl group, or a substituted or unsubstituted aryl group. In particular, more preferably, a substituted or unsubstituted aryl group should be selected.

$Ma^{27}$, $Ma^{28}$, $Ma^{29}$ are substituted or unsubstituted methine groups, independently and respectively, which are synonymous with $Ma^{27}$, $Ma^{28}$, $Ma^{29}$ of the general formula (1-1) described above. Specified examples and preferred examples thereof are the same or equivalent as well. $Ka^{23}$ represents an integer ranging from 0 to 3, independently and respectively. $Ka^{23}$ is preferably 2. Q represents a monovalent cation to neutralize electric charge. When $Ka^{23}$ is plural, a plurality of $Ma^{27}$, $Ma^{28}$ may be identical with each other, or different from each other.

The dye, which has a structure represented by the general formula (1-1), is preferably a dye having a structure represented by the following general formula (ch-7).

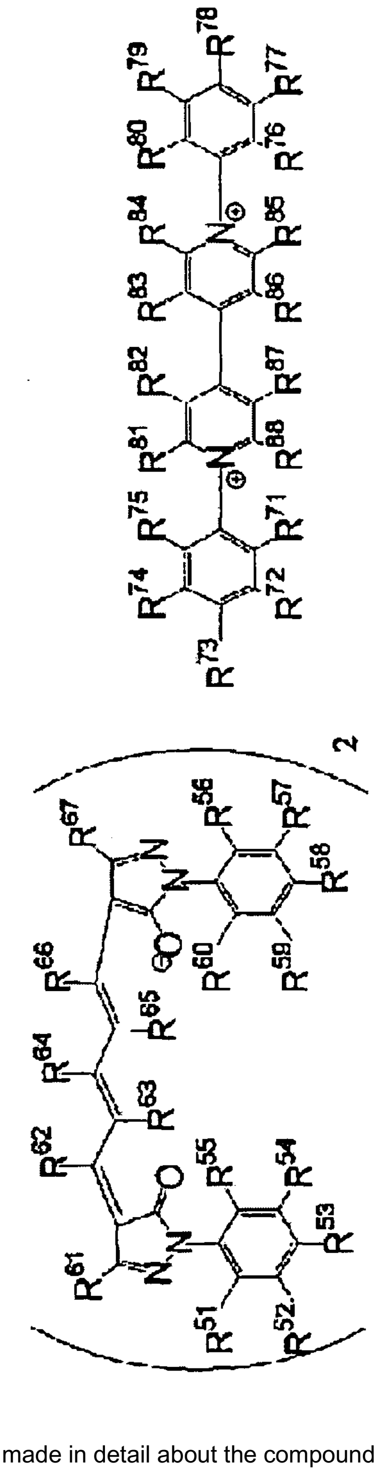

... (ch-7)

An explanation will now be made in detail about the compound having a structure represented by the general formula (ch-7).

In the general formula (ch-7), $R^{51}$, $R^{52}$, $R^{53}$, $R^{54}$, $R^{55}$, $R^{56}$, $R^{57}$, $R^{58}$, $R^{59}$, $R^{60}$ represent hydrogen atoms or substituents, independently and respectively. In the case of substituents, it is preferable to select a substituted or unsubstituted alkyl group, a substituted or unsubstituted alkoxy group, a halogen atom, a substituted or unsubstituted carbamoyl group, or a substituted or unsubstituted acylamino group. In particular, it is preferable to select compounds in which all substituents thereof are hydrogen atoms, and compounds in which $R^{51}$, $R^{53}$, $R^{55}$, $R^{56}$, $R^{58}$, $R^{60}$ are substituted with halogen atoms, and $R^{52}$, $R^{54}$, $R^{57}$, $R^{59}$ are hydrogen atoms. $R^{61}$, $R^{67}$ represent a hydrogen atom, a substituted or

unsubstituted alkyl group, a substituted or unsubstituted aryl group, a cyano group, a substituted or unsubstituted carbamoyl group, a substituted or unsubstituted alkoxy group, a substituted or unsubstituted alkoxycarbonyl group, a substituted or unsubstituted aryloxycarbonyl group, or a substituted or unsubstituted acylamino group. In particular, a substituted or unsubstituted alkoxycarbonyl group is preferred, and an unsubstituted alkoxycarbonyl group is even more preferred.

$R^{62}$, $R^{63}$, $R^{64}$, $R^{65}$, $R^{66}$ represent a hydrogen atom, a substituted or unsubstituted alkyl group, a substituted or unsubstituted aryl group, a substituted or unsubstituted acylamino group, or a substituted or unsubstituted heterocyclic group, independently and respectively. It is preferable that all of $R^{62}$, $R^{63}$, $R^{65}$, $R^{66}$ are hydrogen atoms. It is preferable that $R^{64}$ is a hydrogen atom or a substituted or unsubstituted aryl group.

$R^{71}$, $R^{72}$, $R^{73}$, $R^{74}$, $R^{75}$, $R^{76}$, $R^{77}$, $R^{78}$, $R^{79}$, $R^{80}$, $R^{81}$, $R^{82}$, $R^{83}$, $R^{84}$, $R^{85}$, $R^{86}$, $R^{87}$, $R^{88}$ represent a hydrogen atom or a substituent, independently and respectively. In the case of a substituent, it is preferable to select a substituted or unsubstituted alkyl group, a substituted or unsubstituted aryl group, a hydroxyl group, or a substituted or unsubstituted acylamino group. It is preferable that all of $R^{71}$, $R^{72}$, $R^{75}$, $R^{76}$, $R^{77}$, $R^{80}$ are hydrogen atoms. It is preferable that $R^{73}$, $R^{78}$ are hydroxyl groups, respectively. It is preferable that $R^{74}$, $R^{79}$ are phenyl groups, respectively.

It is preferable that all of $R^{81}$, $R^{82}$, $R^{83}$, $R^{84}$, $R^{85}$, $R^{86}$, $R^{87}$, $R^{88}$ are hydrogen atoms.

Next, an explanation shall be made in detail below concerning a dye, having the structure represented by the general formula (1-2) described above.

In the general formula (1-2), $Za^{21}$, $Za^{22}$, $Za^{23}$, $Za^{24}$ represent atomic groups forming acidic nuclei, independently and respectively. Examples thereof are described in "The Theory of the Photographic Process", 4th edition, edited by James, Macmillan, 1977, p. 198. Specifically, there are respectively exemplified nuclei of, for example, pyrazole-5-one which may be substituted, pyrazolidine-3,5-dione, imidazoline-5-one, hydantoin, 2- or 4-thiohydantoin, 2-iminooxazolidine-4-one, 2-oxazoline-5-one, 2-thiooxazoline-2,4-dione, isorhodanine, rhodanine, thiophene-3-one, thiophene-3-one-1,1-dioxide, 3,3-dioxo[1,3]oxathiolane-5-one, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione (for example, Meldrum's acid), barbituric acid, 2-thiobarbituric acid, coumarin-2,4-dione, indazoline-2-one, pyrido[1,2-a]pyrimidine-1,3-dione, pyrazolo[1,5-b]quinazolone, pyrazolopyridone, and five-membered or six-membered carbon ring (for example, hexane-1,3-dione, pentane-1,3-dione, indane-1,3-dione). Preferred among these are pyrazole-5-one, pyrazolidine-3,5-dione, barbituric acid, 2-thiobarbituric acid, 1,3-dioxane-4,6-dione, and 3,3-dioxo[1,3]oxathiolane-5-one.

$Za^{21}$, $Za^{22}$, $Za^{23}$, $Za^{24}$ may be substituted respectively. In this case, 1,3-dioxane-4,6-dione is most preferred.

Examples of substituents to substitute the acidic nucleus include a halogen atom, an alkyl group (including a cycloalkyl group and a bicycloalkyl group), an alkenyl group (including a cycloalkenyl group and a bicycloalkenyl group), an alkynyl group, an aryl group, a heterocyclic group, a cyano group, a hydroxyl group, a nitro group, a carboxyl group, an alkoxy group, an aryloxy group, a silyloxy group, a heterocyclicoxy group, an acyloxy group, a carbamoyloxy group, an alkoxycarbonyloxy group, a aryloxycarbonyloxy group, an amino group (including an anilino group), an acylamino group, an aminocarbonylamino group, an alkoxycarbonylamino group, an aryloxycarbonylamino group, a sulfamoylamino group, an alkyl and arylsulfonylamino group, a mercapto group, an alkylthio group, an arylthio group, a heterocyclicthio group, a sulfamoyl group, a sulfo group, an alkyl and arylsulfinyl group, an alkyl and arylsulfonyl group, an acyl group, an aryloxycarbonyl group, an alkoxycarbonyl group, a carbamoyl group, an aryl and heterocyclicazo group, an imide group, a phosphino group, a phosphinyl group, a phosphinyloxy group, a phosphinylamino group, and a silyl group. In particular, it is preferable to select a substituted or unsubstituted alkyl group having a number of carbon atoms of 1 to 20, or a substituted or unsubstituted aryl group having a number of carbon atoms of 6 to 20.

As for the acidic nucleus, it is preferable to select those unsubstituted, those substituted with a substituted or unsubstituted alkyl group having a number of carbon atoms of 1 to 20, and those substituted with a substituted or unsubstituted aryl group having a number of carbon atoms of 6 to 20.

The acidic nuclei formed by $Za^{21}$, $Za^{22}$, $Za^{23}$, $Za^{24}$ are preferably indanedione, pyrazolone, pyrazolinedione, and benzothiophene dioxide. In particular, pyrazolone is most preferred.

$Ma^{21}$, $Ma^{22}$, $Ma^{23}$, $Ma^{24}$, $Ma^{25}$, $Ma^{26}$ are substituted or unsubstituted methine groups, independently and respectively. The substituents preferably include, for example, an alkyl group having a number of carbon atoms of 1 to 20 (for example, methyl, ethyl, and isopropyl), a halogen atom (for example, chlorine, bromine, iodine, and fluorine), an alkoxy group having a number of carbon atoms of 1 to 20 (for example, methoxy, ethoxy, and isopropoxy), an aryl group having a number of carbon atoms of 6 to 26 (for example, phenyl and 2-naphthyl), a heterocyclic group having a number of carbon atoms of 0 to 20 (for example, 2-pyridyl and 3-pyridyl), an aryloxy group having a number of carbon atoms of 6 to 20 (for example, phenoxy, 1-naphthoxy, and 2-naphthoxy), an acylamino group having a number of carbon atoms of 1 to 20 (for example, acetylamino and benzoylamino), a carbamoyl group having a number of carbon atoms of 1 to 20 (for example, N,N-dimethylcarbamonyl), a sulfo group, a hydroxyl group, a carboxyl group, an alkylthio group having a number of carbon atoms of 1 to 20 (for example, methylthio), and a cyano group. The group may be bonded to another methine group to form a ring structure. The group may be bonded to any atomic group represented by $Za^{21}$, $Za^{22}$, $Za^{23}$, $Za^{24}$ to form a ring structure.

$Ma^{21}$, $Ma^{22}$, $Ma^{23}$, $Ma^{24}$, $Ma^{25}$, $Ma^{26}$ are preferably any one of unsubstituted methine groups and methine groups substituted with an ethyl group, a methyl group, and/or a phenyl group, independently and respectively. Most preferably, $Ma^{21}$, $Ma^{22}$, $Ma^{23}$, $Ma^{24}$, $Ma^{25}$, $Ma^{26}$ are unsubstituted methine groups.

L represents a divalent connecting group, which does not form a $\pi$ conjugated system together with two bonds. The divalent connecting group is not especially limited, except for the fact that a $\pi$ conjugated system is not formed between the chromophores in which they are bonded. However, L preferably represents a connecting group having a number of carbon atoms of not less than 0 and not more than 100, and preferably not less than 1 and not more than 20, constructed by combining one or more of an alkylene group (having a number of carbon atoms of 1 to 20, for example, methylene, ethylene, propylene, butylene, and pentylene), an arylene group (having a number of carbon atoms of 6 to 26, for example, phenylene and naphthylene), an alkenylene group (having a number of carbon atoms of 2 to 20, for example, ethenylene and propenylene), an alkynylene group (having a number of carbon atoms of 2 to 20, for example, ethynylene and propynylene), $-CO-N(R^{101})-$, -CO-O-, $-SO_2-N(R^{102})-$, $-SO_2-ON(R^{103})-CO-N(R^{104})-$, $-SO_2-$, -SO-, -S-, -O-, -CO-, $-N(R^{105})-$, and/or a heterylene group (having a number of carbon atoms of 1 to 26, for example, a 6-chloro-1,3,5-triazyl-2,4-diyl group and a pyrimidine-2,4-diyl group). $R^{101}$, $R^{102}$, $R^{103}$, $R^{104}$, $R^{105}$ described above represent any one of a hydrogen atom, a substituted or unsubstituted alkyl group, and a substituted or unsubstituted aryl group, independently and respectively. One or more or a plurality of connecting groups represented by L may be present between the two chromophores that are connected thereby. A plurality of (preferably two) connecting groups may be bonded to form a ring.

Preferably, as for L, two alkylene groups (preferably ethylene groups) are bonded to form a ring respectively. In particular, it is more preferable to form a five-membered or a six-membered ring (preferably a cyclohexyl ring).

In the general formula (1-2), $Ka^{21}$ and $Ka^{22}$ represent integers ranging from 0 to 3, independently and respectively.

When $Ka^{21}$, $Ka^{22}$ are plural, a plurality of $Ma^{21}$, $Ma^{22}$, $Ma^{25}$, $Ma^{26}$ may be identical with each other, or different from each other.

It is preferable for both of $Ka^{21}$ and $Ka^{22}$ to be 2.

Q represents a monovalent cation to neutralize electric charge. Therefore, 2Q represents a divalent cation. The ion, which is represented by Q, is not especially limited. The ion may be composed of an inorganic compound, or the ion may be composed of an organic compound. The cation represented by Q includes, for example, metal ions such as sodium ions and potassium ions, and onium ions such as quaternary ammonium ions, oxonium ions, sulfonium ions, phosphonium ions, selenonium ions, and iodonium ions.

The cation represented by Q is preferably an onium ion, and more preferably a quaternary ammonium ion. An especially preferred quaternary ammonium ion is the 4,4'-bipyridinium cation represented by the general formula (I-4), as described in Japanese Laid-Open Patent Publication No. 2000-52658, and the 4,4'-bipyridinium cation disclosed in Japanese Laid-Open Patent Publication No. 2002-59652. In the case of a dication compound, such as the 4,4'-bipyridinium cation, Q amounts to 1/2 (dication compound).

Preferably, in the general formula (1-2) described above, the acidic nuclei formed by $Za^{21}$, $Za^{22}$, $Za^{23}$, $Za^{24}$ are pyrazole-5-one, pyrazolidine-3,5-dione, barbituric acid, 2-thiobarbituric acid, 1,3-dioxane-4,6-dione, and 3,3-dioxo [1,3]oxathiolane-5-one, which are unsubstituted, which are substituted with a substituted or unsubstituted alkyl group having a number of carbon atoms of 1 to 20, or which are substituted with a substituted or unsubstituted aryl group having a number of carbon atoms of 6 to 20, independently and respectively. $Ma^{21}$, $Ma^{22}$, $Ma^{23}$, $Ma^{24}$, $Ma^{25}$, $Ma^{26}$ are any one of methine groups, which are unsubstituted, or which are substituted with an ethyl group, a methyl group, or a phenyl group, independently and respectively. L forms a five-membered or a six-membered ring formed by bonding two alkylene groups (preferably ethylene groups). Both of $Ka^{21}$, $Ka^{22}$ are 2. Further, the cation represented by 2Q is the 4,4'-bipyridinium cation represented by the general formula (I-4), as described in Japanese Laid-Open Patent Publication No. 2000-52658, and the 4,4'-bipyridinium cation disclosed in Japanese Laid-Open Patent Publication No. 2002-59652. Of the dyes represented by the general formula (1-2), it is preferable to select a dye represented by the following general formula (ch-8).

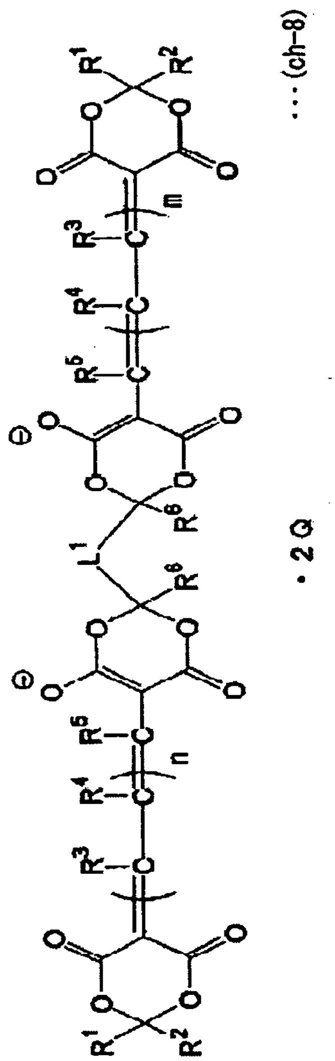

... (ch-8)

In the general formula (ch-8), $R^1$, $R^2$ represent a hydrogen atom, a substituted or unsubstituted alkyl group, or a substituted or unsubstituted aryl group, independently and respectively. $R^3$, $R^4$, $R^5$ are hydrogen atoms or substituents thereof, independently and respectively. $R^1$, $R^2$ may be bonded to one another to form a ring. The $R^6$'s represent a hydrogen atom, a substituted or unsubstituted alkyl group, or a substituted or unsubstituted aryl group, independently and respectively. $L^1$ is a divalent connecting group. Two $R^6$'s may be bonded to form a divalent connecting group. n, m represent integers ranging from 0 to 2, independently and respectively. Q represents a monovalent cation to neutralize electric charge. When n, m are plural values, a plurality of $R^3$, $R^4$ may be identical with each other, or different from each other.

The general formula (ch-8) shall be explained in detail below. $R^1$, $R^2$ represent a hydrogen atom, a substituted or unsubstituted alkyl group, or a substituted or unsubstituted aryl group, independently and respectively. $R^1$, $R^2$ may be bonded to one another to form a ring structure. Preferably, $R^1$, $R^2$ are a substituted or unsubstituted alkyl group, independently and respectively. More preferably, $R^1$, $R^2$ are unsubstituted alkyl groups, each of which has a number of carbon atoms from 1 to 6, and which are different from each other. $R^3$, $R^4$, $R^5$ represent a hydrogen atom or a substituted group, independently and respectively. Preferably, $R^3$, $R^4$, $R^5$ are a hydrogen atom, a substituted or unsubstituted alkyl group, a substituted or unsubstituted aryl group, or a substituted or unsubstituted heterocyclic group. More preferably, $R^3$, $R^4$, $R^5$ are a hydrogen atom, an ethyl group, a methyl group, or a phenyl group. Most preferably, all of $R^3$, $R^4$, $R^5$ are hydrogen atoms. $R^6$ is a hydrogen atom, a substituted or unsubstituted alkyl group, or a substituted or unsubstituted aryl group. In particular, it is preferable that two $R^6$'s are bonded to one another to form a divalent connecting group. $L^1$ is a divalent connecting group. Preferably, $L^1$ is a substituted or unsubstituted alkylene group. As for $L^1$ and $R^6$, it is most preferable that a ring structure be formed with $L^1$ and two $R^6$'s. In this case, the ring structure is preferably a five-membered or a six-membered ring (more preferably a six-membered ring). n, m represent integers ranging from 0 to 2, independently and respectively. It is preferable for both n and m to be 2. Q represents a monovalent cation to neutralize electric charge. Therefore, 2Q represents a divalent cation. When n, m are plural, a plurality of $R^3$, $R^4$ may be identical with each other, or different from each other.

The general oxonol dye can be synthesized by means of a condensation reaction between the corresponding methylene compound and a methine source (i.e., the compound used for introducing the methine group into the methine dye). For details of such compounds, reference may be made, respectively, to the specifications of Japanese Patent Publication Nos. 39-22069, 43-3504, 52-38056, 54-38129, 55-10059, and 58-35544, Japanese Laid-Open Patent Publication Nos. 49-99620, 52-92716, 59-16834, 63-316853, and 64-40827, British Patent No. 1133986, and United States Patent Nos. 3,247,127, 4,042,397, 4,181,225, 5,213,956, and 5,260,179. Such compounds are also described in Japanese Laid-Open Patent Publication Nos. 63-209995, 10-309871, and 2002-249674, respectively.

Further, a method for synthesizing a bis type oxonol dye is disclosed in European Patent No. EP 1424691 A2.

In the next place, a cyanine dye, as represented by the general formula (2-1) described above, is also available for the dye.

In the general formula (2-1), $Ma^{21}$, $Ma^{22}$, $Ma^{23}$ represent a substituted or unsubstituted methine group, independently and respectively. $R^1$, $R^2$ represent substituents, independently and respectively. However, it is preferable to select a substituted or unsubstituted alkyl group, a substituted or unsubstituted aryl group, a substituted or unsubstituted alkenyl group, a substituted or unsubstituted alkynyl group, or a substituted or unsubstituted heterocyclic group. The groups described above may be further substituted. $R^{101}$, $R^{102}$ are preferably a substituted or unsubstituted alkyl group, more preferably, a substituted or unsubstituted alkyl group having a number of carbon atoms of 1 to 8, and even more preferably, a unsubstituted alkyl group having a number of carbon atoms of 1 to 8. $R^{101}$, $R^{102}$ may be different from each other, or identical with each other. However, it is preferable for $R^{101}$ and $R^{102}$ to be identical with each other. ka2 represents an integer ranging from 0 to 3. When ka2 is not less than 2, the plurality of $Ma^{21}$ and $Ma^{22}$ may be identical with each other, or different from each other.

Q2 represents an ion to neutralize electric charge, and y2 represents a number required to neutralize electric charge. The ion represented by Q2 represents an anion, depending on the electric charge of the corresponding dye molecule. The ion represented by Q2 is not limited, and may be either an ion composed of an inorganic compound or an ion composed of an organic compound. The electric charge of the ion represented by Q2 may be either monovalent or polyvalent.

y2 represents a number required to neutralize electric charge. When Q2 is a divalent anion, and if y2 is 1/2, then it is considered that Q2y2 in its entirety is a monovalent anion.

In the next place, a dye, as represented by the general formula (2-2) described above, may also be used for the dye.

In the general formula (2-2), $R^{121}$, $R^{122}$, $R^{123}$ are hydrogen atoms or substituents. $R^{124}$, $R^{125}$, $R^{126}$, $R^{127}$ are also hydrogen atoms or substituents. The substituent is synonymous with $R^{1a}$, $R^{2a}$, and preferred examples thereof are also equivalent. $R^{1a}$, $R^{2a}$ are synonymous with $R^{101}$, $R^{102}$ in the general formula (2-1) described above, and preferred examples thereof are also equivalent. ka3 is synonymous with ka2 in the general formula (2-1), and preferred examples thereof are also equivalent.

Q3 represents an ion to neutralize electric charge, and y3 represents a number required to neutralize electric charge. The ion represented by Q3 represents an anion, depending on the electric charge of the corresponding dye molecule. The ion represented by Q3 is not especially limited, and may be either an ion composed of an inorganic compound or an ion composed of an organic compound. The electric charge of the ion represented by Q3 may be either monovalent or polyvalent. The ion represented by Q3 includes, for example, halogen anions such as chloride ions, bromide ions, and fluoride ions, heteropolyacid ions such as sulfuric acid ions, phosphoric acid ions, and hydrogenphosphate ions, organic polyvalent anions such as succinic acid ions, maleic acid ions, fumaric acid ions, and aromatic disulfonic acid ions, tetrafluoroboric acid ions, and hexafluorophosphoric acid ions.

y3 represents a number required to neutralize electric charge. y3 is synonymous with y2 in the general formula (2-1). When Q3 is a divalent anion, and if y3 is 1/2, then it is considered that Q3y3 in its entirety is a monovalent anion.

As for the cyanine dye represented by the general formula (2-1) or (2-2) used in this embodiment, $Ma^{21}$, $Ma^{22}$, $Ma^{23}$ are preferably an unsubstituted methine group, $R^{101}$, $R^{102}$ are preferably an unsubstituted alkyl group having a number of carbon atoms of 1 to 8, independently and respectively, $R^{124}$, $R^{125}$, $R^{126}$, $R^{127}$ are preferably a substituted or unsubstituted alkyl group, independently and respectively, Ka3 is preferably 1 or 2, Q3 is preferably an inorganic or organic anion, and y3 is preferably 1. A dye that satisfies all of the preferred features, as described above, is most preferred.

Specified examples shall be referred to concerning the cyanine compound having the structure represented by the general formula (2-1), which is used for the first optical information-recording medium 10A and the second optical information-recording medium 10B. It is understood that the present invention is not limited to the specified examples.

The general cyanine dye is described in "Cyanine Dyes and Related Compounds", John Wiley & Sons, New York, London, issued in 1964 in the series, "The Chemistry of Heterocyclic Compounds".

In the embodiment of the present invention, the cyanine dye (preferably a dye compound represented by the general formula (2-1) described above) has the following features, in view of the optical characteristic of the amorphous film. Specifically, the coefficients n (real part: refractive index), k (imaginary part: extinction coefficient) of the complex refractive index at the recording laser wavelength preferably satisfy the expressions 1.50 ≤ n s 3.0 and 0.9 ≤ k s 3.00. More preferably, the coefficients satisfy the expressions 1.50 ≤ n s 2.00 and 0.90 s k s 2.00. Even more preferably, the coefficients satisfy the expressions 1.60 ≤ n s 1.90 and 1.20 s k s 1.50.

It is preferable for the thermal decomposition temperature to be within a range of 100 °C to 350 °C. More preferably, the thermal decomposition temperature should be within a range of 150 °C to 300 °C. Even more preferably, the thermal decomposition temperature should be within a range of 200 °C to 300 °C.

In the next place, an azo dye may also be used as the dye. The azo dye is synthesized by reacting an aryl or a heteroaryldiazonium salt (diazo component) and a compound (coupler compound) having an acidic hydrogen atom, in order to produce a dye by effecting an azo coupling reaction with the diazonium salt. The azo dye, which may be used in this embodiment, preferably has the structure represented by the general formula (3-1) described above.

In the formula, A represents the residue of the compound (coupler compound), which includes the acidic hydrogen atom to produce the dye by effecting the azo coupling reaction with the diazonium salt, i.e., a monovalent group derived from the coupler component. A is preferably a substituted or unsubstituted aryl group, or a five-membered heterocyclic group having a number of carbon atoms of 1 to 20 and containing nitrogen atoms, or a six-membered heterocyclic group having a number of carbon atoms of 2 to 20 and containing nitrogen atoms.

The dye having the structure represented by the general formula (3-1) described above is preferably a dye represented by the general formula (3-2).

In the dye having the structure represented by the general formula (3-2), $A^1$ represents an atomic group to form an aromatic hydrocarbon ring or an aromatic heterocyclic ring together with the bonded carbon atom. The ring formed by $A^1$ is preferably an aromatic hydrocarbon ring having a substituent (preferably a benzene ring having substitution), a five-membered heterocyclic ring having a number of carbon atoms of 1 to 20 and containing nitrogen atoms, or a six-membered heterocyclic ring having a number of carbon atoms of 2 to 20 and containing nitrogen atoms, and more preferably, an aromatic hydrocarbon ring having a substituent (preferably a benzene ring having substitution).

Examples of the structure formed by the substituents A or $A^1$ are shown below.

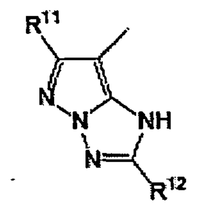
···( ch-9 )

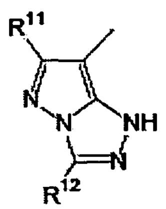
···( ch-10 )

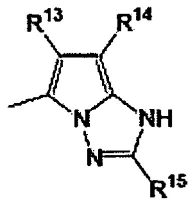
···( ch-11 )

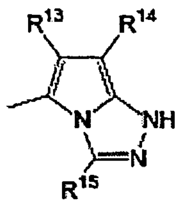
···( ch-12 )

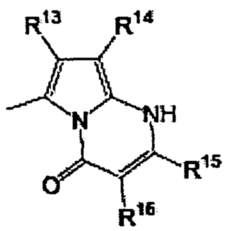
···( ch-13 )

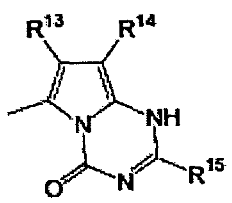
···( ch-14 )

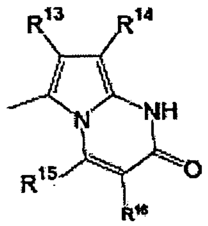
···( ch-15 )

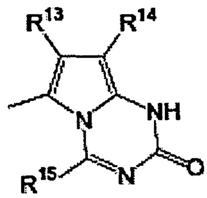
···( ch-16 )

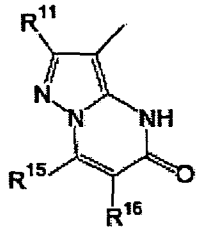
···( ch-17 )

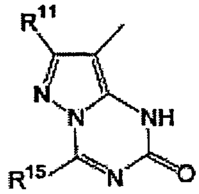
···( ch-18 )

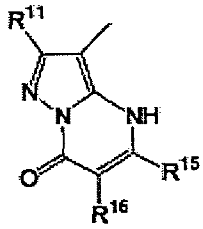
···( ch-19 )

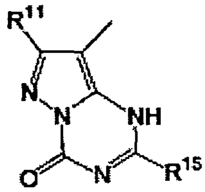
···( ch-20 )

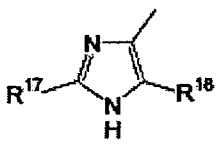
···( ch-21 )

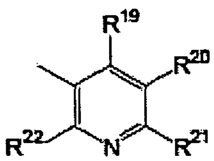
···( ch-22 )

$R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{22}$ represent a hydrogen atom or a substituent thereof, independently and respectively.

Of the ring structures described above, those represented by formulas (ch-9), (ch-10) and (ch-11) are preferred.

In the general formulas described above, $R^{11}$, $R^{13}$ are preferably a substituted or unsubstituted alkyl group having a number of carbon atoms of 1 to 20, a substituted or unsubstituted aryl group having a number of carbon atoms of 6 to 20, a cyano group, a substituted or unsubstituted alkoxycarbonyl group having a number of carbon atoms of 1 to 20, or a substituted or unsubstituted aminocarbonyl group having a number of carbon atoms of 2 to 20. $R^{14}$ is preferably a cyano group, a substituted or unsubstituted alkoxycarbonyl group having a number of carbon atoms of 1 to 20, a substituted or unsubstituted aryloxy group having a number of carbon atoms of 6 to 20, or a substituted or unsubstituted aminocarbonyl group having a number of carbon atoms of 2 to 20. $R^{15}$ is a substituted or unsubstituted alkyl group having a number of carbon atoms of 1 to 20, an aryl group having a number of carbon atoms of 6 to 20, or a substituted or unsubstituted aminocarbonylamino group having a number of carbon atoms of 1 to 20.

Preferably, $R^{13}$ is a cyano group, $R^{14}$ is an alkoxycarbonyl group having a number of carbon atoms of 1 to 20, and $R^{15}$ is a substituted or unsubstituted alkyl group having a number of carbon atoms of 1 to 20, or a substituted or unsubstituted aryl group having a number of carbon atoms of 6 to 20.

B represents a monovalent group derived from a diazonium salt, and which is preferably a substituted or unsubstituted aryl group, or a substituted or unsubstituted heterocyclic group. In other words, B is a diazo component. The diazo component is a partial structure that is capable of being introduced by converting a heterocyclic compound or a benzene derivative having an amino group as a substituent into the diazo compound (diazonium salt), while performing a diazo coupling reaction with the coupler. This concept is frequently used in the field of azo dyes. In other words, the diazo component is an amino-substituted heterocyclic compound, which is capable of performing a diazo reaction, or a substituent, which is obtained by removing the amino group of the benzene derivative in order to provide a monovalent group. B is preferably a ring formed by $B^2$. $B^2$ represents an atomic group to form a substituted or unsubstituted aromatic hydrocarbon ring, or a substituted or unsubstituted aromatic heterocyclic ring. The ring represented by $B^2$ is preferably an aromatic hydrocarbon ring having a substituent (preferably a benzene ring having substitution), a five-membered heterocyclic ring having a number of carbon atoms of 1 to 20 and containing nitrogen atoms, or a six-membered heterocyclic ring having a number of carbon atoms of 2 to 20 and containing nitrogen atoms. More preferably, The ring represented by $B^2$ is a five-membered heterocyclic ring having a number of carbon atoms of 1 to 20 and containing nitrogen atoms, or six-membered heterocyclic ring having a number of carbon atoms of 2 to 20 and containing nitrogen atoms, and even more preferably, is a five-membered heterocyclic ring having a number of carbon atoms of 1 to 20 and containing nitrogen atoms.

Examples of the monovalent heterocyclic rings A and B may be exemplified by any of the following (ch-23) to (ch-47).

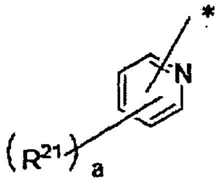

···( ch-23 )

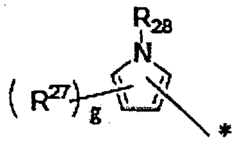

···( ch-29 )

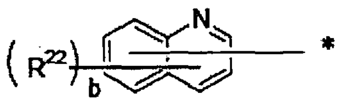

···( ch-24 )

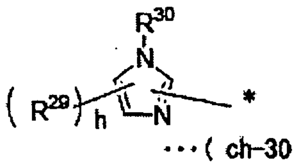

···( ch-30 )

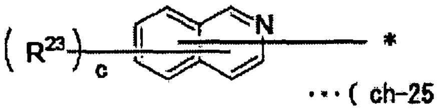

···( ch-25 )

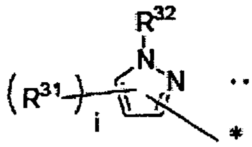

···( ch-31 )

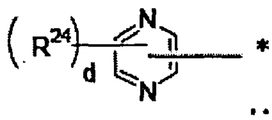

···( ch-26 )

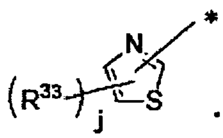

···( ch-32 )

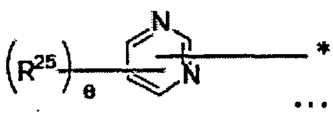

···( ch-27 )

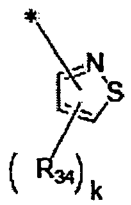

···( ch-33 )

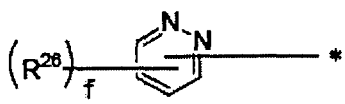

···( ch-28 )

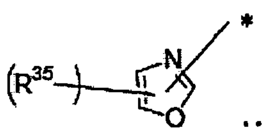

···( ch-34 )

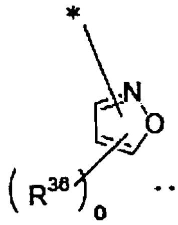

···( ch-35 )

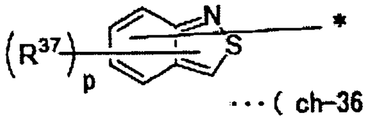

···( ch-36 )

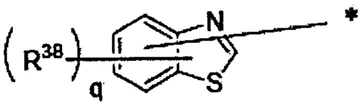

···( ch-37 )

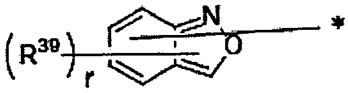

···( ch-38 )

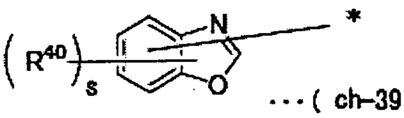

···( ch-39 )

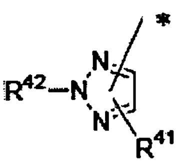

···( ch-40 )

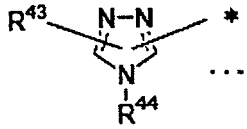

···( ch-41 )

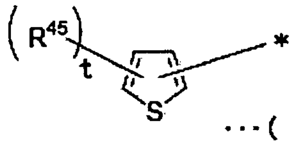

···( ch-42 )

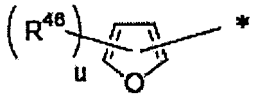

···( ch-43 )

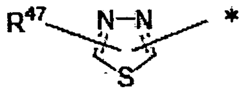

···( ch-44 )

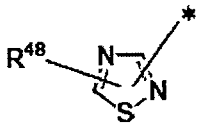

···( ch-45 )

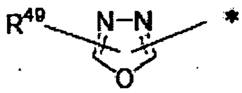

···( ch-46 )

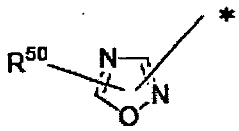

···( ch-47 )

In the above general formulas, $R^{21}$ to $R^{50}$ represent a hydrogen atom or a substituent thereof, independently and respectively.

b, c are integers ranging from 0 to 6.

a, p, q, r are integers ranging from 0 to 4.

d, e, f, g, t, u are integers ranging from 0 to 3.

h, i, j, k, l, o are integers ranging from 0 to 2.

When a to u are not less than 2, two or more of the substituents represented by $R^{21}$ to $R^{50}$ may be identical with each other, or different from each other.

In relation to the structure B, the following structures (ch-48) to (ch-60) are preferred.

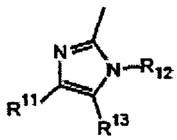
···( ch-48 )

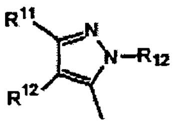
···( ch-49 )

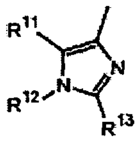
···( ch-50 )

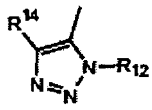
···( ch-51 )

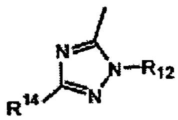
···( ch-52 )

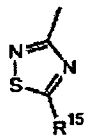
···( ch-53 )

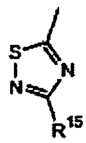
···( ch-54 )

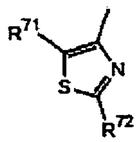
···( ch-55 )

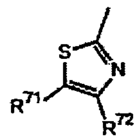
···( ch-56 )

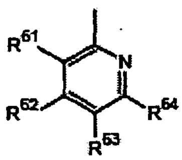
···( ch-57 )

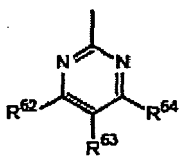
···( ch-58 )

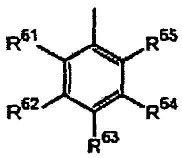
···( ch-59 )

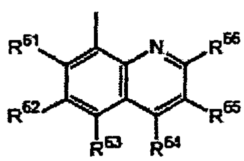
···( ch-60 )

In the general formulas described above, $R^{11}$, $R^{12}$, $R^{13}$, $R^{14}$, $R^{15}$, $R^{61}$ to $R^{66}$, $R^{71}$, $R^{72}$ represent a hydrogen atom or a substituent thereof, independently and respectively. Examples of the substituent are the same as those described in relation to the explanation concerning R.

G of the general formula (3-2) represents a monovalent group having the ability to coordinate with metal ions. Examples of G include a hydroxyl group, a carboxyl group, an amino group (including an alkylamino group), an acylamino group, an aminocarbonylamino group, an alkoxycarbonylamino group, an aryloxycarbonylamino group, a sulfamoylamino group, an alkyl or arylsulfonylamino group, a mercapto group, a sulfamoyl group, a sulfo group, an alkyl and arylsulfinyl group, a carbamoyl group, an aryl and heterocyclicazo group, a phosphino group, and a phosphinyl group. Preferably, G is an alkylsulfonylamino group.

The azo dye compound according to this embodiment is also preferably selected from compounds having the ability to coordinate with metal ions to form an azo metal chelate dye. In particular, the chelate dye is excellent in light durability, which is preferred. The metal ion, which is used for the metal chelate dye, is preferably selected from Ni, Cu, Zn, Al, Ti, Fe, B, Cr, and Co. In particular, Ni, Co, and Al are preferred.

When a chelate structure is formed, if the ligand is insufficient with respect to the central metal, such that it is unsuccessful in forming a stable complex, then it is also preferable for a molecule other than the dye of the general formula (3-1) described above to be added as the ligand, in order to provide a stable chelate dye. The ligand, which is separately added, is preferably a compound containing a nitrogen, an oxygen, and/or a sulfur atom. In particular, it is

preferable to use an amine compound (including aniline) and a heterocyclic compound containing at least one nitrogen atom. It is most preferable to use a five-membered or a six-membered amine compound having a number of carbon atoms of 3 to 20.

Methods for synthesizing azo dyes are described in Japanese Laid-Open Patent Publication Nos. 3-268994, 3-61088, 7-161069, 7-251567, 10-204070, 11-12483, 11-166125, 2001-199169, 2001-152040, and 2002-114922, respectively.

In the embodiment of the present invention, the dye compound has the following features, in view of optical characteristics of the amorphous film. Specifically, the coefficients n (real part: refractive index) and k (imaginary part: extinction coefficient) of the complex refractive index at the recording laser wavelength preferably satisfy the expressions $2.0 \leq n s 3.0$ and $0.00 \leq k \leq 0.20$. More preferably, the coefficients satisfy the expressions $2.1 \leq n s 2.7$ and $0.00 \leq k \leq 0.10$. Even more preferably, the coefficients satisfy the expressions $2.15 \leq n s 2.50$ and $0.00 \leq k \leq 0.05$.

It is preferable, in the azo dye compound according to the embodiment of the present invention, for the thermal decomposition temperature to be within a range of 100 °C to 350 °C. More preferably, the thermal decomposition temperature is within a range of 150 °C to 300 °C. Even more preferably, the thermal decomposition temperature is within a range of 200 °C to 300 °C.

In the next place, a phthalocyanine dye may be used as the dye. Such a phthalocyanine dye is preferably represented by the general formula (4-1) described above.

In the general formula (4-1), $R^{\alpha 1}$ to $R^{\alpha 8}$ and $R^{\beta 1}$ to $R^{\beta 8}$ represent a hydrogen atom, a halogen atom, a cyano group, a nitro group, a formyl group, a carboxyl group, a sulfo group, an alkyl group having a number of carbon atoms of 1 to 20, an aryl group having a number of carbon atoms of 6 to 14, an aralkyl group having a number carbon atoms of 7 to 15, a heterocyclic group having a number of carbon atoms of 1 to 10, an alkoxy group having a number of carbon atoms of 1 to 20, an aryloxy group having a number of carbon atoms of 6 to 14, an acyl group having a number of carbon atoms of 2 to 21, an alkylsulfonyl group having a number of carbon atoms of 1 to 20, an arylsulfonyl group having a number of carbon atoms of 6 to 20, a carbamoyl group having a number of carbon atoms of 1 to 25, a sulfamoyl group having a number of carbon atoms of 0 to 32, an alkoxycarbonyl group having a number of carbon atoms of 2 to 21, an aryloxycarbonyl group having a number of carbon atoms of 7 to 15, an acylamino group having a number of carbon atoms of 2 to 21, a sulfonylamino group having a number of carbon atoms of 1 to 20, and an amino group having a number of carbon atoms of 0 to 36, independently and respectively. M represents two hydrogen atoms, a metal, a metal oxide, or a metal having a ligand.

In the general formula (4-1), it is preferable for all of $R^{\alpha 1}$ to $R^{\alpha 8}$ not to be simultaneously hydrogen atoms. Further, it is preferable that any one of $R^{\alpha 1}$ and $R^{\alpha 2}$, any one of $R^{\alpha 3}$ and $R^{\alpha 4}$, any one of $R^{\alpha 5}$ and $R^{\alpha 6}$, and any one of $R^{\alpha 7}$ and $R^{\alpha 8}$, i.e., four substituents in total, are not simultaneously hydrogen atoms. In particular, in this case, it is preferable for all of $R^{\beta 1}$ to $R^{\beta 8}$ to be simultaneously hydrogen atoms.

In the general formula (4-1), preferred examples of $R^{\alpha 1}$ to $R^{\alpha 8}$ and $R^{\beta 1}$ to $R^{\beta 8}$ may include a hydrogen atom, a halogen atom, a carboxyl group, a sulfo group, an alkyl group having a number of carbon atoms of 1 to 16, an aryl group having a number of carbon atoms of 6 to 10, an alkoxy group having a number of carbon atoms of 1 to 16, an aryloxy group having a number of carbon atoms of 6 to 10, a sulfonyl group having a number of carbon atoms of 1 to 16, a sulfamoyl group having a number of carbon atoms of 2 to 20, an alkoxycarbonyl group having a number of carbon atoms of 2 to 17, an aryloxycarbonyl group having a number of carbon atoms of 7 to 11, an acylamino group having a number of carbon atoms of 2 to 18, and a sulfonylamino group having a number of carbon atoms of 1 to 18. More preferably, the examples include a hydrogen atom, a halogen atom, a carboxyl group, a sulfo group, an alkoxy group having a number of carbon atoms of 1 to 16, an aryloxy group having a number of carbon atoms of 6 to 10, an alkylsulfonyl group having a number of carbon atoms of 1 to 14, an arylsulfonyl group having a number of carbon atoms of 6 to 14, a sulfamoyl group having a number of carbon atoms of 2 to 16, an alkoxycarbonyl group having a number of carbon atoms of 2 to 13, an acylamino group having a number of carbon atoms of 2 to 14, and a sulfonylamino group having a number of carbon atoms of 1 to 14. Even more preferably, examples of $R^{\alpha 1}$ to $R^{\alpha 8}$ are a hydrogen atom, a halogen atom, a sulfo group, an alkoxy group having a number of carbon atoms of 8 to 16, a sulfonyl group having a number of carbon atoms of 1 to 12, a sulfamoyl group having a number of carbon atoms of 1 to 12, an acylamino group having a number of carbon atoms of 2 to 12, and a sulfonylamino group having a number of carbon atoms of 1 to 12, whereas examples of $R^{\beta 1}$ to $R^{\beta 8}$ are a hydrogen atom or a halogen atom. Even more preferably, at least one of $R^{\alpha 1}$ to $R^{\alpha 8}$ is a sulfo group, a sulfonyl group having a number of carbon atoms of 1 to 10, or a sulfamoyl group having a number of carbon atoms of 1 to 10, whereas each of $R^{\beta 1}$ to $R^{\beta 8}$ are hydrogen atoms.

In the general formula (4-1), $R^{\alpha 1}$ to $R^{\alpha 8}$ and $R^{\beta 1}$ to $R^{\beta 8}$ may further include substituents. Examples of such substituents may be as follows. In particular, examples are a linear or cyclic alkyl group having a number of carbon atoms of 1 to 20 (for example, a methyl group, an ethyl group, an isopropyl group, and a cyclohexyl group), an aryl group having a number of carbon atoms of 6 to 18 (for example, a phenyl group, a chlorophenyl group, a 2,4-di-t-aminophenyl group, and a 1-naphtyl group), an aralkyl group having a number of carbon atoms of 7 to 18 (for example, a benzyl group and an anisyl group), an alkenyl group having a number of carbon atoms of 2 to 20 (for example, a vinyl group and a 2-methylvinyl group), an alkynyl group having a number of carbon atoms of 2 to 20 (for example, an ethynyl group, a 2-methylethynyl group, and a 2-phenylethynyl group), a halogen atom (for example, F, Cl, Br, and I), a cyano group, a hydroxyl group, a carboxyl group, an acyl group having a number of carbon atoms of 2 to 20 (for example, an acetyl group, a benzoyl group, a salicyloyl group, and a pivaloyl group), an alkoxy group having a number of carbon atoms of 1 to 20 (for example, a methoxy group, a butoxy group, and a cyclohexyloxy group), an aryloxy group having a number of carbon atoms of 6 to 20 (for example, a phenoxy group, a 1-naphthoxy group, and a toluoyl group), an alkylthio group having a number of carbon atoms of 1 to 20 (for example, a methylthio group, a butylthio group, a benzylthio group, and a 3-methoxypropylthio group), an arylthio group having a number of carbon atoms of 6 to 20 (for example, a phenylthio group and a 4-chlorophenylthio group), an alkylsulfonyl group having a number of carbon atoms of 1 to 20 (for example, a methanesulfonyl group and a butanesulfonyl group), an arylsulfonyl group having a number of carbon atoms of 6 to 20 (for example, a benzenesulfonyl group and a para-toluenesulfonyl group), a carbamoyl group having a number of carbon atoms of 1 to 17 (for example, an unsubstituted carbamoyl group, a methylcarbamoyl group, an ethylcarbamoyl group, a n-butylcarbamoyl group, and a dimethylcarbamoyl group), an amide group having a number of carbon atoms of 1 to 16 (for example, an acetoamide group and a benzamide group), an acyloxy group having a number of carbon atoms of 2 to 10 (for example, an acetoxy group and a benzoyloxy group), an alkoxycarbonyl group having a number of carbon atoms of 2 to 10 (for example, a methoxycarbonyl group and an ethoxycarbonyl group), and a five-membered or a six-membered heterocyclic group (for example, an aromatic heterocyclic group, such as a pyridyl group, a thienyl group, a furyl group, a thiazoyl group, an imidazolyl group, and a pyrazolyl group, as well as heterocyclic groups such as a pyrrolidine ring group, a piperidine ring group, a morpholine ring group, a pyran ring group, a thiopyran ring group, a dioxane ring group, and a dithiolane ring group).

In the general formula (4-1), substituents usable for $R^{\alpha 1}$ to $R^{\alpha 8}$ and $R^{\beta 1}$ to $R^{\beta 8}$ are, preferably, a linear or a cyclic alkyl group having a number of carbon atoms of 1 to 16, an aryl group having a number of carbon atoms of 6 to 14, an aralkyl group having a number of carbon atoms of 7 to 15, an alkoxy group having a number of carbon atoms of 1 to 16, an aryloxy group having a number of carbon atoms of 6 to 14, a halogen atom, an alkoxycarbonyl group having a number of carbon atoms of 2 to 17, a carbamoyl group having a number of carbon atoms of 1 to 10, and an amide group having a number of carbon atoms of 1 to 10. In particular, more preferably, usable substituents are a linear or cyclic alkyl group having a number of carbon atoms of 1 to 10, an aralkyl group having a number of carbon atoms of 7 to 13, an aryl group having a number of carbon atoms of 6 to 10, an alkoxy group having a number of carbon atoms of 1 to 10, an aryloxy group having a number of carbon atoms of 6 to 10, a chlorine atom, an alkoxycarbonyl group having a number of carbon atoms of 2 to 11, a carbamoyl group having a number of carbon atoms of 1 to 7, and an amide group having a number of carbon atoms of 1 to 8. Even more preferably usable as substituents are a linear branched or a cyclic alkyl group having a number of carbon atoms of 1 to 8, an aralkyl group having a number of carbon atoms of 7 to 11, an alkoxy group having a number of carbon atoms of 1 to 8, an alkoxycarbonyl group having a number of carbon atoms of 3 to 9, a phenyl group, and a chlorine atom. Even more preferably usable as a substituent is an alkoxy group having a number of carbon atoms of 1 to 6.

In the general formula (4-1), M is preferably a metal. In particular, more preferably, M may be zinc, magnesium, copper, nickel, or palladium. Even more preferably, M should be copper or nickel, and most preferably, copper.

The phthalocyanine derivative that may be used in the embodiment of the present invention can be synthesized in accordance with any of the methods described or referred to, for example, in "Phthalocyanine - Chemistry and Function" (pp. 1 to 62), issued by IPC and written by Shirai and Kobayashi, and "Phthalocyanine - Properties and Applications" (pp. 1 to 54), issued by VCH and written by C. C. Leznoff and A. B. P. Lever, or any of other similar methods.

In the next place, a pyrromethene dye may be used as the dye. The pyrromethene dye is preferably a pyrromethene metal chelate compound, represented by the following general formula (ch-61).

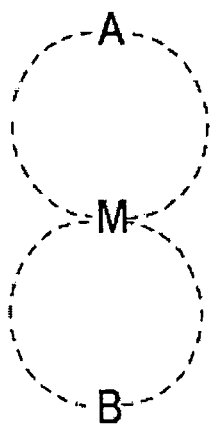

··· (ch-61)

In the general formula (ch-61), A represents a chelate ring formed by a metal M and a pyrromethene compound represented by the following general formula (ch-62), and B represents a chelate ring formed together with M and having a nitrogen atom, an oxygen atom, and/or a sulfur atom. A and B may be identical with each other, or different from each other.

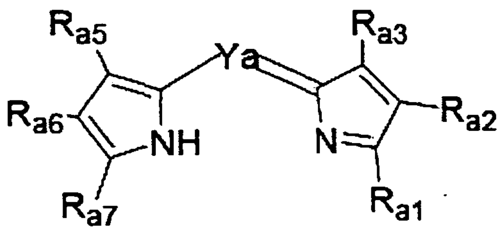

··· (ch-62)

In the general formula (ch-62), Ya represents N or $CR_{a3}$. $R_{a1}$, $R_{a2}$, $R_{a3}$, $R_{a4}$, $R_{a5}$, $R_{a6}$ and $R_{a7}$ represent hydrogen atoms or substituents thereof. $R_{a1}$ and $R_{a2}$ , $R_{a2}$ and $R_{a3}$, $R_{a5}$ and $R_{a6}$, and $R_{a6}$ and $R_{a7}$ may be bonded respectively to form an aromatic ring or a heterocyclic ring. The ring may have a substituent. Further, an aromatic ring or a heterocyclic ring may be condensed with the ring.

In the general formula (ch-62), $R_{a1}$, $R_{a2}$, $R_{a3}$, $R_{a4}$, $R_{a5}$, $R_{a6}$, and $R_{a7}$ represent a hydrogen atom or a substituent, and preferably, a halogen atom, a nitro group, a cyano group, a hydroxyl group, a carboxyl group, a sulfonic acid group, an alkyl group having a number of carbon atoms of 1 to 20, an aryl group, a heteroaryl group, an alkenyl group having a number of carbon atoms of 2 to 20, an aralkyl group, an alkoxy group, a hydroxylalkoxy group, an alkoxyalkoxy group, an alkylthioalkoxy group, an aryloxy group, a heteroaryloxy group, an alkylaminoalkoxy group, a dialkylaminoalkoxy group, an alkenyloxy group having a number of carbon atoms of 2 to 20, an alkylthio group, an alkylthioalkyl group, an arylthio group, a heteroarylthio group, an alkylsulfonyl group, an arylsulfonyl group, a heteroarylsulfonyl group, an alkylsulfonylalkyl group, an amino group, an alkylamino group, a dialkylamino group, a hydroxyalkylamino group, a di(hydroxyalkyl)amino group, an alkoxyalkylamino group, a di(alkoxyalkyl)amino group, an arylamino group, a diarylamino group, a heteroarylamino group, a diheteroarylamino group, an alkylcarbonylamino group, an arylcarbonylamino group, a halogenoalkyl group, an aminoalkyl group, an alkylaminoalkyl group, a dialkylaminoalkyl group, a hydroxyalkylaminoalkyl group, a di(hydroxyalkyl)aminoalkyl group, an alkoxyalkylaminoalkyl group, a di(alkoxyalkyl)aminoalkyl group, a hydroxyalkyl group, an alkoxyalkyl group, an alkylcarbonylalkyl group, an arylcarbonylalkyl group, an aminocarbonyl group, an alkylaminocarbonyl group, a dialkylaminocarbonyl group, a hydroxyalkylaminocarbonyl group, a di(hydroxyalkyl)aminocarbonyl group, an alkoxyalkylaminocarbonyl group, a di(alkoxyalkyl)aminocarbonyl group, an arylaminocarbonyl group, an acyl group, an alkoxycarbonyl group, an aryloxycarbonyl group, an alkenyloxycarbonyl group having a number of carbon atoms of 2 to 20, an alkoxycarbonylalkoxycarbonyl group, an alkylcarbonylalkoxycarbonyl group, or an aralkyloxycarbonyl group, independently and respectively. $R_{a1}$ and $R_{a2}$, $R_{a2}$ and $R_{a3}$, $R_{a5}$ and $R_{a6}$, and $R_{a6}$ and

$R_{a7}$ may be bonded to form an aromatic ring or a heterocyclic ring, which may include a substituent.

As for the pyrromethene dye, those usable include the pyrromethene dyes described, for example, in Japanese Laid-Open Patent Publication Nos. 10-226172, 10-162430, 10-287819, 11-43491, 11-92479, 11-92682, 11-165465, 11-227332, 11-227333, 11-255774, 11-256056, 11-256057, 11-302551, 11-302253, 2000-48406, 2000-260064, 2002-212456, 2002-154271, 2002-155076, 2002-211136, 2002-363437, 2003-64274, 2003-73574, 2003-140300, 2003-182219, 2003-286415, 2003-266947, 2004-66459, 2004-114394, and 2004-122585, and International Publication (WO) 03/082593 A1, respectively. Those described in the patent documents described above are also applicable for the specified examples and the method for synthesizing the dye.

The first optical information-recording medium 10A is not specifically limited, provided that the dye is provided within the visible information-recording layer 24 (and preferably in the data-recording layer 18 as well). However, when the first optical information-recording medium 10A is applied to a CD-R, the following arrangement is preferred. Specifically, the data-recording layer 18 containing the dye as described above, the first reflective layer 20, the adhesive layer 28, the second reflective layer 26, the visible information-recording layer 24 containing the dye as described above, and the second substrate 22 are provided, in this order, on a transparent disk-shaped first substrate 16, having a thickness of 1.2 $\pm$ 0.2 mm formed with a pregroove 40 (see FIG. 1) therein having a track pitch of 1.4 to 1.8 $\mu$m. When the first optical information-recording medium 10A is applied to a DVD-R, it is preferable to adopt the following two modes.

(1) The optical information-recording medium comprises two stacks, each of which has a data-recording layer 18 containing the dye as described above and a light reflective layer, provided on the transparent disk-shaped first substrate 16 having a thickness of 0.6 $\pm$ 0.1 mm and formed with a pregroove 40 therein having a track pitch of 0.6 to 0.9 $\mu$m. The two stacks are joined to one another such that the data-recording layers 18 are disposed on inner sides respectively, wherein the thickness is 1.2 $\pm$ 0.2 mm, and the visible information-recording layer 24 is provided on at least one of the first substrates 16.

(2) The optical information-recording medium comprises a stack, which has the data-recording layer 18 containing the dye as described above and the light reflective layer, provided on the transparent disk-shaped first substrate 16 having a thickness of 0.6 $\pm$ 0.1 mm formed with a pregroove 40 therein having a track pitch of 0.6 to 0.9 $\mu$m, and a transparent disk-shaped protective substrate, which has the same shape as that of the disk-shaped first substrate 16 of the stack. The stack and the protective substrate are joined to one another such that the data-recording layer 18 is disposed on an inner side, wherein the thickness is 1.2 $\pm$ 0.2 mm, and the visible information-recording layer 24 is provided on at least one of the substrates. The DVD-R type optical information-recording medium may also have an arrangement in which a protective layer is further provided on the light reflective layer.

Similarly, the second optical information-recording medium 10B is not specifically limited, provided that the dye is provided in the visible information-recording layer 24 (preferably the data-recording layer 18 as well). However, when the second optical information-recording medium 10B is applied to a CD-R, the following arrangement is preferred. Specifically, the data-recording layer 18, including the dye as described above, the first reflective layer 20, the first protective layer 42, the adhesive layer 28, the second protective layer 44, the second reflective layer 26, the visible information-recording layer 24 containing the dye as described above, and the colored substrate 22a, are provided in this order on a first substrate 16 having a thickness of 1.2 $\pm$ 0.2 mm formed with a pregroove 40 therein (see FIG. 2) and having a track pitch of 1.4 to 1.8 $\mu$m. When the second optical information-recording medium 10B is applied to a DVD-R, it is preferable to adopt the following two modes.

(1) The optical information-recording medium comprises two stacks, each of which has a data-recording layer 18 containing the dye as described above and a light reflective layer, provided on the disk-shaped first substrate 16 having a thickness of 0.6 $\pm$ 0.1 mm and formed with a pregroove 40 therein having a track pitch of 0.6 to 0.9 $\mu$m. The two stacks are joined to one another such that the data-recording layers 18 are disposed on inner sides respectively, wherein the thickness is 1.2 $\pm$ 0.2 mm, and the visible information-recording layer 24 is provided on at least one of the first substrates 16.

(2) The optical information-recording medium comprises a stack, which has the data-recording layer 18 containing the dye as described above and the light reflective layer, provided on the first substrates 16 having a thickness of 0.6 $\pm$ 0.1 mm formed with a pregroove 40 therein having a track pitch of 0.6 to 0.9 $\mu$m, and a transparent disk-shaped protective substrate, which has the same shape as that of the disk-shaped first substrate 16 of the stack. The stack and the protective substrate are joined to one another such that the data-recording layer 18 is disposed on an inner side, wherein the thickness is 1.2 $\pm$ 0.2 mm, and the visible information-recording layer 24 is provided on at least one of the substrates. The DVD-R type optical information-recording medium may also have an arrangement in which a protective layer is further provided on the light reflective layer.

The visible information that is recorded on the visible information-recording layer 24 implies any image capable

of being recognized visually, which includes visually recognizable information such as letters (arrays), patterns, and graphics. Letter information includes, for example, information to designate an authorized user, information to designate a period of use, information to designate the number of times of use, information about rentals, information to designate a degree of resolution, information to designate layers, information to designate users, information concerning copyright owners, information concerning copyright numbers, information concerning the manufacturer, information concerning the date of production and/or date of sale, information concerning an outlet store or seller, information about a use set number, information to designate a region, information to designate the language, information to designate the manner of use, information about product users, and information concerning the number of times of use.

The visible information-recording layer 24 can be formed such that the dye, as described above, is dissolved in a solvent to prepare a coating liquid, and the coating liquid is applied. As for the solvent, it is possible to use the same solvent as the solvent that is used for preparing the coating liquid for the data-recording layer 18, as described later on. The procedure can be advanced equivalently to that for the recording layer, as described later on, in relation to, for example, other additives and the coating method.

The layer thickness of the visible information-recording layer 24 is preferably 0.01 to 200 μm, more preferably 0.05 to 100 μm, and even more preferably, 0.1 to 50 μm.

The thickness ratio of the visible information-recording layer 24 to the data-recording layer 18 is preferably 1/100 to 100/1, and more preferably, 1/10 to 10/1.

[Data-Recording Layer 18]

The data-recording layer 18 is a layer on which the code information (coded information) such as digital information is recorded, which includes, for example, those of a write-once type (preferably the dye write-once type), a phase-change type, and a magneto-optical type. Although there are no particular limitations, it is preferable to use those of the dye type.

Specified examples of the dye contained in the dye type data-recording layer 18 may include, for example, cyanine dyes, oxonol dyes, metal complex-based dyes, azo dyes, and phthalocyanine dyes.

It is preferable to use dyes as described in Japanese Laid-Open Patent Publication Nos. 4-74690, 8-127174, 11-53758, 11-334204, 11-334205, 11-334206, 11-334207, 2000-43423, 2000-108513, and 2000-158818, respectively.

The data-recording layer 18 is formed such that a recording substance, such as the aforementioned dye, is dissolved in an appropriate solvent together with a binding agent or the like to thereby prepare a coating liquid, and then, the coating liquid is applied onto a substrate to form a coating film, followed by being dried. The concentration of the recording substance within the coating liquid is generally within a range of 0.01 to 15 % by mass, preferably, within a range of 0.1 to 10 % by mass, more preferably, within a range of 0.5 to 5 % by mass, and even more preferably, within a range of 0.5 to 3 % by mass.

The data-recording layer 18 can be formed by methods including, for example, vapor deposition, sputtering, CVD, and solvent application. However, it is preferable to use solvent application when preparing the data-recording layer 18. In this procedure, the following process can be performed. Specifically, a coating liquid is prepared, for example, such that a quencher and a binding agent are further dissolved within the solvent, in addition to the dye or the like as described above, if desired. Subsequently, the coating liquid is applied onto a surface of the first substrate 16 to form a coating film thereon, followed by being dried.

The coating method may be exemplified by a spray method, a spin coat method, a dip method, a roll coat method, a blade coat method, a doctor roll method, and a screen printing method. The data-recording layer 18 may be formed as a single layer or in multiple layers. The layer thickness of the data-recording layer 18 is generally within a range of 10 to 500 nm, preferably within a range of 15 to 300 nm, and more preferably within a range of 20 to 150 nm.

Various antifading agents can be included within the data-recording layer 18 in order to improve light resistance of the data-recording layer 18. In general, a singlet oxygen quencher is used as an antifading agent. Such antifading agents have already been described in various known published documents, such as patent specifications, and can be utilized for the singlet oxygen quencher.

Specific examples of the material making up the phase-change type data-recording layer 18 may include, for example, Sb-Te alloys, Ge-Sb-Te alloys, Pd-Ge-Sb-Te alloys, Nb-Ge-Sb-Te alloys, Pd-Nb-Ge-Sb-Te alloys, Pt-Ge-Sb-Te alloys, Co-Ge-Sb-Te alloys, In-Sb-Te alloys, Ag-In-Sb-Te alloys, Ag-V-In-Sb-Te alloys, and Ag-Ge-In-Sb-Te alloys.

The layer thickness of the phase-change type data-recording layer 18 is preferably 10 to 50 nm, and more preferably 15 to 30 nm.

The phase-change type data-recording layer 18 described above can be formed, for example, by means of a gas phase thin film deposition method, such as a vacuum vapor deposition method or a sputtering method.

The content of the metal atom contained within the material making up the aforementioned visible information-recording layer 24 can be measured in accordance with an ordinary quantitative determination method.

For example, the content of metal atoms Na, K can be quantitatively determined by means of a flame analysis

method or an absolute calibration curve method, using an atomic absorption apparatus (AA240FS produced by Varian). The content of metal atoms Mg, Ca can also be quantitatively determined by means of a flame analysis method or an absolute calibration curve method. The following pretreatment is also available. Specifically, 2 g of a sample powder is collected from a sample, and $HNO_3$ is added to the sample powder in order to affect a multiwave ashing process. After that, the sample is eluted in water to prepare 50 ml of a sample solution. The metal atom content is then measured for the obtained sample solution, by means of the aforementioned quantitative determination method.

Even after the first optical information-recording medium 10A or the second optical information-recording medium 10B has been produced, the metal atom content can be measured by means of the same method as those described above, by collecting materials from the visible information-recording layer 24.

[First Substrate 16]

The first substrate 16 of the first optical information-recording medium 10A as well as the first substrate 16 of the second optical information-recording medium 10B can be arbitrarily selected from various materials, having hitherto been used as substrates in conventional optical information-recording media.

The materials for the first substrate 16 may include, for example, glass, acrylic resins such as polycarbonate and polymethyl methacrylate, vinyl chloride-based resins such as polyvinyl chloride and vinyl chloride copolymers, epoxy resins, amorphous polyolefin, and polyester. The aforementioned materials may be used in combination, if desired.

The materials described above can be used for the first substrate 16, in a rigid form or in the form of a film. Among the aforementioned materials, it is preferable to use polycarbonate in view of, for example, its resistance to humidity, size stability, and price.

The thickness of each of the first substrate 16 is preferably 0.1 to 1.2 mm, and more preferably 0.2 to 1.1 mm.

An undercoat layer may be provided on the surface (i.e., on a side of the surface on which the pregroove 40 is formed) of the first substrate 16, on a side on which the data-recording layer 18 is provided, in order to improve flatness and adhesive force, and to avoid changes in quality of the data-recording layer 18.

[First Reflective Layer 20, Second Reflective Layer 26]

The first reflective layer 20 is disposed adjacent to the data-recording layer 18 in some cases, in order to improve reflectance during reproduction of information. The second reflective layer 26 also is disposed adjacent to the visible information-recording layer 24 in some cases, in order to obtain satisfactory focusing of the laser beam 38 during writing of visible information on the visible information-recording layer 24.

The light-reflective substance, which is the material for the first reflective layer 20 and the second reflective layer 26, is a substance having a high reflectance with respect to the laser beam 38. Examples of such a light-reflective substance include stainless steel, half metals, and metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi. The substance as described above may be used singly, or alternatively, two or more of the substances described above may be used in combination, or in the form of an alloy. The first reflective layer 20 and the second reflective layer 26 can be formed on each of the data-recording layer 18 and the visible information-recording layer 24 by performing, for example, vapor deposition, sputtering, or ion plating, with the reflective substances described above. The layer thickness of each of the first reflective layer 20 and the second reflective layer 26 is generally within a range of 10 to 300 nm, and preferably within a range of 50 to 200 nm.

[Adhesive Layer 28]

The adhesive layer 28 is formed in order to ensure a tight contact between the data-recording medium section 12 and the visible information-recording medium section 14.

Preferably, a light-curable resin is used for constructing the adhesive layer 28. In particular, it is preferable to use resins in which the rate of shrinkage during curing is small, in order to avoid any warping of the disk. The light-curable resin described above may be exemplified by UV-curable resins (UV-curable adhesives) such as "SD-640" and "SD-347", produced by Dainippon Ink and Chemicals, Inc. In order to enhance elasticity, the thickness of the adhesive layer 28 is preferably within a range of 1 to 1,000 μm, more preferably within a range of 5 to 500 μm, and even more preferably within a range of 10 to 100 μm.

[Second Substrate 22]

A material having the same quality as that of the first substrate 16 can be used for the second substrate 22 (protective substrate).

[Colored Substrate 22a]

The colored substrate 22a (protective substrate) is constructed so as to contain a dye and/or a pigment in the material having the same quality as that of the first substrate 16.
In this case, it is preferable for the colored substrate 22a to be manufactured by adjusting an added amount of the dye and/or the pigment that is contained in the colored substrate 22a, on the basis of an output (preset output: laser power in the present embodiment) of the laser beam 38 radiated from the side of the colored substrate 22a toward the visible information-recording layer 24.
As for the colored substrate 22a, the colorations represented by expressions 1 to 8 in FIG. 9, defining an L*a*b* color system, may be adopted.
The method for manufacturing the colored substrate 22a, i.e., the method for coloring the substrate, includes a method in which a certain amount of pellets called a "master batch", which is prepared by kneading a dyestuff or a pigment at a dense concentration, is mixed with uncolored pellets, a method in which a dye such as a dyestuff or a pigment is directly mixed with a resin, and a method in which a colored layer is provided on a substrate.
The dye, which is directly mixed with the substrate material, or which is used for the master batch or the coloring layer, may include, for example, a cyanine-based dye, a squarylium-based dye, an azo-based dye, a naphthoquinone-based dye, an anthraquinone-based dye, a porphyrin-based dye, a tetraazaporphyrin-based dye, an acridine-based dye, an acridinone-based dye, an oxazine-based dye, a pyrromethene-based dye, a spiro-based dye, a ferrocene-based dye, a fluorene-based dye, a fulgide-based dye, an imidazole-based dye, a thiazole-based dye, a pyrilene-based dye, a phenazine-based dye, a phenothiazine-based dye, a polyene-based dye, an indole-based dye, an aniline-based dye, a quinophthalone-based dye, a phenoxazine-based dye, a diphenylamine-based dye, a coumarin-based dye, a carbostyryl-based dye, a stilbene-based dye, and a fluorein-based dye. The aforementioned dyes may be used singly, or alternatively, the dyes described above may be used in a mixed manner. When used for the visible information-recording layer 24, a dye is selected for the dye that is directly mixed with the substrate material or used for the master batch or the colored layer, which does not have an absorption peak in the vicinity of the absorption peak of the dye that is used for the visible information-recording layer 24.

[First Protective Layer 42 and Second Protective Layer 44]

In some situations, a first protective layer 42 is provided in order to physically and chemically protect the first reflective layer 20 and the data-recording layer 18, and a second protective layer 44 is provided in order to physically and chemically protect the second reflective layer 26 and the visible information-recording layer 24.
Formation of the first protective layer 42 and the second protective layer 44 is not necessarily required in cases where the optical information-recording medium is produced in a form equivalent to a DVD-R type optical information-recording medium, i.e., in cases in which two substrates (including an arrangement in which one of the two substrates makes up the first substrate 16) are stuck to one another, while providing two data-recording layers 18 disposed inside thereof.
As described above, the first optical information-recording medium 10A and the second optical information-recording medium 10B are applicable to a so-called read-only type of optical information-recording medium, having a recording section (pits) with information recorded therein, wherein the information is capable of being reproduced with the laser beam 38.

[Method for Producing Second Optical Information-Recording Medium 10B]

Next, with reference to FIG. 10, an explanation shall be made concerning a method for producing an optical information-recording medium according to the embodiment of the present invention, especially, a method for producing the second optical information-recording medium 10B.
Initially, in Step S1 shown in FIG. 10, a first stamper for producing the first substrate 16 is manufactured. In this procedure, a first stamper having concave/convex portions on the surface thereof is manufactured by selectively applying etching to a master plate in order to provide the first stamper. The first stamper is manufactured, for example, such that the master plate is subjected to highly accurate mastering by means of cutting with DUV (deep ultraviolet light having a wavelength of not more than 330 nm) laser or EB (electron beam).
During this procedure, mastering is applied to the master plate in order to manufacture the first stamper, so that a pregroove 40 may be formed on the surface of the first substrate 16 when the first substrate 16 is formed by means of, for example, injection molding or extrusion molding with a resin material using the first stamper as finally produced.
After that, in Step S2 shown in FIG. 10, the first substrate 16 is manufactured by performing injection molding with a resin material including, for example, polycarbonate for the first stamper. During this procedure, concave/convex

portions of the first stamper are transferred onto the surface of the first substrate 16 in order to form the pregroove 40.

In the example described above, the first substrate 16 is manufactured by performing extrusion molding or injection molding with a resin material such as polycarbonate. However, the pregroove layer may also be formed on the surface of a first substrate 16 which has a flat surface, as described later on respectively, in order to form the pregroove 40.

As for the material of the pregroove layer, a mixture of a photopolymerization initiator and at least one monomer (or oligomer) of a monoester, a diester, a triester, and a tetraester of acrylic acid may be used. As for the first substrate 16, for example, the pregroove layer is formed therein as follows. Specifically, a liquid mixture, which is composed of an acrylic acid ester and a photopolymerization initiator as described above, is applied onto the first stamper. Further, the first substrate 16 is placed on the coating liquid layer, and then ultraviolet light is radiated via the first substrate 16 or via the first stamper. Accordingly, the coating layer is cured so as to secure the first substrate 16 and the coating layer. Subsequently, the first substrate 16 is exfoliated from the first stamper. Accordingly, the first substrate 16 can be obtained, including the pregroove layer having the pregroove 40 formed on the surface thereof.

Subsequently, in Step S3 shown in FIG. 10, the first substrate 16 is cooled, and then a dye, which is to be converted later into the data-recording layer 18, is applied to the surface of the first substrate 16. For example, a coating liquid (dye coating liquid) containing the dye therein is prepared. The dye coating liquid is applied to the surface of the first substrate 16 on which the pregroove 40 is formed, by means of a spin coating method.

After that, in Step S4 shown in FIG. 10, an annealing treatment is performed in order to dry the dye coating liquid. The annealing treatment is applied, for example, at a temperature of 80 °C for 3 hours. The dye coating liquid thus is converted into the data-recording layer 18 by means of the annealing treatment.

After that, in Step S5 shown in FIG. 10, the first reflective layer 20 is formed on the surface of the data-recording layer 18, for example, by means of a sputtering method.

After that, in Step S6 shown in FIG. 10, the first protective layer 42 is formed on the surface of the first reflective layer 20. For example, a UV-curable resin may be dissolved in an appropriate solvent in order to prepare a coating liquid, and then the coating liquid is applied and the resin is cured by radiating UV light. Accordingly, the first protective layer 42 is formed in this manner. At this stage, the data-recording medium section 12 is completed.

On the other hand, in Step S101 shown in FIG. 10, a second stamper for producing the colored substrate 22a is manufactured. In this procedure, the second stamper is manufactured such that, on a portion of the surface of the colored substrate 22a, prepits 32 are formed on an inner peripheral surface side thereof when the colored substrate 22a is formed, for example, by injection molding with a resin material using the second stamper as finally produced.

After that, in Step S102 shown in FIG. 10, an added amount of a dye and/or pigment to be contained in the colored substrate 22a is adjusted.

Specifically, in Step S102a, a distribution characteristic of the light absorption rate of the laser beam 38, which corresponds to the amount of the dye and/or the pigment to be added, is determined on the basis of a predetermined thickness of the colored substrate 22a. As for the distribution characteristic, for example, the light absorption rate increases approximately in a proportional relationship depending on an increase in the amount of the dye to be added. This relationship also holds equivalently for the pigment. Of course, when the dye and the pigment are added in a mixed manner, a characteristic is obtained in which the proportional relationship is changed, depending on the ratio at which the dye and the pigment are added, respectively.

Further, in Step S102b, a range of the light absorption rate (i.e., an effective range of the light absorption rate) is determined, within which visible information can be written on the visible information-recording layer 24, with the power of the laser beam 12 that is to be used.

In Step S102c, the range at which the dye and/or the pigment is added, which is included within the determined range of the light absorption rate, is determined, so as to determine an amount at which the dye and/or the pigment is added, which is included within this range.

At this stage, when the content of the dye and/or the pigment to be added has been determined in Step S102c as described above, the determined amount of the dye and/or the pigment, as described above, is blended, for example, with powdery grains of a base material (for example, polycarbonate) in the next Step S103, in order to provide colored pellets using, for example, an extruding machine.

In Step S104 shown in FIG. 10, the colored pellets that are blended with the dye and/or the pigment are subjected to injection molding or extrusion molding with respect to the second stamper in order to manufacture the colored substrate 22a. In this procedure, the colored substrate 22a (see FIG. 8) having prepits 32 formed on the inner peripheral surface side thereof is manufactured.

Subsequently, in Step S105 shown in FIG. 10, the colored substrate 22a is cooled, and then a dye, which thereafter is to be converted into the visible information-recording layer 24, is applied to the surface of the colored substrate 22a. For example, a coating liquid (dye coating liquid) containing the dye therein is prepared, and the dye coating liquid is applied to the surface of the flat colored substrate 22a, by means of a spin coating method.

Thereafter, in Step S106 shown in FIG. 10, an annealing treatment is performed in order to dry the dye coating liquid. For example, the annealing treatment is applied at a temperature of 80 °C for 3 hours. As a result of the annealing

treatment, the dye coating liquid is converted into the visible information-recording layer 24.

Thereafter, in Step S107 shown in FIG. 10, the second reflective layer 26 is formed on the surface of the visible information-recording layer 24, for example, by means of a sputtering method.

Thereafter, in Step S108 shown in FIG. 10, the second protective layer 44 is formed on the surface of the second reflective layer 26. For example, a UV-curable resin is dissolved in an appropriate solvent to prepare a coating liquid, and then the coating liquid is applied, followed by being cured by radiating UV light, in order to produce the second protective layer 44. At this stage, the visible information-recording medium section 14 is completed.

Thereafter, in Step S201 shown in FIG. 10, the data-recording medium section 12 and the visible information-recording medium section 14 are bonded to one another. In this procedure, the first protective layer 42 formed on the data-recording medium section 12 and the second protective layer 44 formed on the visible information-recording medium section 14 are opposed to one another. The data-recording medium section 12 and the visible information-recording medium section 14 are bonded to one another with an adhesive layer 28 intervening between the data-recording medium section 12 and the visible information-recording medium section 14. As a result of such bonding, the second optical information-recording medium 10B is completed.

As described above, in the production method according to the embodiment of the present invention, the colored substrate 22a is manufactured while adjusting an added amount of the dye and/or the pigment contained in the colored substrate 22a, on the basis of an output (in this example, laser power) of the laser beam 38 that is used for recording the visible information. Thereafter, the visible information-recording layer 24 is formed on the colored substrate 22a. Therefore, even when a colored substrate 22a is used in the second optical information-recording medium 10B wherein an image can be drawn on the label surface, it is possible to suppress output control of the laser beam 38 to a minimum. Further, various colors can be used. Therefore, it is also possible to respond sufficiently to needs in which increased color variation is desired.

FIG. 11 shows various combination modes for the colors of the colored substrate 22a and the visible information-recording layer 24. Exemplary combinations 1 to 5 shown in FIG. 7 are shown by way of example only. It is a matter of course that other combinations may also be conceived of and utilized.

[Method for Recording Visible Information]

The method for recording visible information according to the embodiment of the present invention involves recording visible information on the visible information-recording layer 24 of each of the aforementioned first optical information-recording medium 10A and second optical information-recording medium 10B, characterized in that a laser beam 38 (see FIGS. 5 and 6), which is the same as the laser beam 38 used for recording data on the data-recording layer 18, is used for recording a visible image on the visible information-recording layer 24.

The method for recording visible information according to the embodiment of the present invention is performed by using a recording unit, which makes it possible to record visible information on the visible information-recording layer 24 of each of the first optical information-recording medium 10A and the second optical information-recording medium 10B.

Explanations shall now be given, in greater detail, of two recording methods (a first recording method and a second recording method) that make up visible information-recording methods according to the present embodiments.

First, the first recording method constitutes a recording method for recording visible information on the visible information-recording layer 24 of the optical information-recording medium 10 in accordance with the present embodiment, wherein the visible information is recorded using the same laser beam 38 as the laser beam 38 that is used for recording information on the visible information-recording layer 24.

In the second recording method, visible information is recorded on the visible information-recording layer 24 using the laser beam 38, which is swung in a radial direction of the optical information-recording medium 10, and further, wherein the optical information-recording medium 10 is irradiated multiple times along substantially the same trajectory. In the first recording method as well, similar to the first recording method, it is preferable that the visible information is recorded using the same laser beam 38 as the laser beam 38 that is used for recording data on the data recording layer 18.

According to the first recording method, since the visible information can be recorded using the same laser beam 38 as the laser beam 38 that is used for recording data on the data recording layer 18, use of the laser 38 can be shared in one recording apparatus, hardware resources of the recording apparatus can be suppressed to the necessity minimum, and a general user can record visible information easily using the apparatus. Furthermore, in the optical information-recording medium 10, since the visible information-recording layer 24 includes coloring, an advantage also results in that visible information (images, etc.) can be formed, which are high in contrast and excellent in visibility. Although recording of visible information of images and the like on the visible information-recording layer 24 of the optical information-recording medium 10 is most preferably carried out by the first recording method and the second recording method, the invention is not restricted solely to these methods.

In the first recording method and the second recording method, recording of visible information of images and

the like on the visible information-recording layer 24, as well as the recording of data on the data recording layer 18, can be carried out using a single optical disk drive (recording device) that has recording capabilities for both layers. In the case that such a single optical disk drive is used, after recording has been carried out on either one of the visible information-recording layer 24 and the data recording layer 18, the medium can be reversed and recording can be carried out on the other layer. As an optical disk drive that has the capability to record visible information on the visible information-recording layer 24, the optical disk drives disclosed by Japanese Laid-Open Patent Publication No. 2003-203348, Japanese Laid-Open Patent Publication No. 2003-242750, or the like, can be utilized.

Further, at the time of recording visible information on the visible information-recording layer 24, the recording apparatus moves the optical information-recording medium 10 and a laser pickup relatively to each other along the surface of the optical information-recording medium 10, while the laser beam 38, in synchronism with such relative movement, is modulated corresponding to image data of lettering, pictures, and the like used in forming the image, such that the laser beam 38 is irradiated toward the visible information-recording layer 24, and visible information can be recorded. Such a configuration is disclosed, for example, in Japanese Laid-Open Patent Publication No. 2002-203321.

The recording of normal digital data is ordinarily performed by irradiating the laser beam 38 one time along a substantially elliptical-shaped trajectory. Generally, when forming pits in the colored recording layer, because the formation of pits is emphasized for which sufficient reflectivity and modulation depth is obtained so as to enable recognition by the optical disk drive, as the pigment that is used for the colored recording layer, a pigment is selected for which sufficient reflectivity and modulation depth can be obtained by the aforementioned one-time irradiation of the laser beam.

With respect thereto, recently, as a newly conceived image formation method, the system disclosed in the above-mentioned Japanese Laid-Open Patent Publication No. 2002-203321 has been proposed. With this system, by irradiating the laser beam 38 multiple times along substantially the same trajectory, visible information of images and the like is recorded in the visible information-recording layer 24, which includes pigments or coloring therein. Further, in an ordinary optical disk, since the position for forming pits is preset in the radial direction, the laser beam 38 cannot be swung in the radial direction of the optical information-recording medium 10. On the other hand, in the aforementioned system, visible information is formed by swinging the laser beam 38 in the radial direction of the optical information-recording medium 10, and further, by irradiating the laser beam 38 multiple times along substantially the same trajectory. The pigments utilized in the present embodiment are suited to either of the aforementioned systems, and by means of the aforementioned recording methods, visible information can be formed, which is high and sharp in contrast, and further, for which light resistance thereof is excellent.

Details of the aforementioned visible information-recording methods shall now be explained with reference to FIGS. 12 and 13.

FIG. 12 shows the trajectory of the laser beam 38, which is irradiated for forming an image.

First, as shown in FIG. 12, the laser source is positioned on the inner peripheral side of the optical information-recording medium 10, and at a radial position where the first image forming location exists. Next, the position θ in the circumferential direction is detected, and the laser power is switched to a predetermined high output (i.e., at a value at which the visible light characteristics of the visible information-recording layer 24 changes, for example, at or above 1 mW) at each of the image forming positions in the circumferential direction, which are indicated by the image data in relation to the radial position. As a result, at each of the locations where the high level output laser beam 38 is irradiated, the visible light characteristics (i.e., change in color or the like) of the visible information-recording layer 24 are changed, and image formation is carried out. The laser power of the laser beam 38 is controlled based on the laser power control information corresponding to the color information of the colored substrate 22a. The laser power control information is obtained by detecting information that is recorded in prepits 32, which are formed in the prepit region 30 of the optical information-recording medium 10, or in a BCA.

Thereafter, when the optical information recording medium 10 is rotated one time and returned to the standard position in the circumferential direction, the laser source is transported in the outer peripheral direction a predetermined pitch Δr by a feed motor or the like, and the laser power is switched to a predetermined high output at each of the image forming positions in the circumferential direction, which are indicated by the image data in relation to the radial position thereof. These operations are carried out repeatedly thereafter, whereby, with each round, the laser source is moved successively in the outer circumferential direction by the predetermined pitch Δr, and image formation is performed.

FIG. 12 shows the trajectory of the laser beam 38 on a surface (i.e., a surface on the side of the visible information recording layer 24, hereinafter also referred to as a "label surface") of the optical information-recording medium 10 in accordance with such image forming operations. At the portion 46 where the bold line is drawn, the laser power is switched to a high output level, and image formation is carried out. An enlarged view of the trajectory of the laser beam 38 at the portion 46 where the bold line is drawn is shown in FIG. 13. As shown in FIG. 13, the laser beam 38 is swung in the radial direction of the optical information-recording medium 10, and an image is formed by irradiating at multiple times along substantially the same trajectory. Herein, the swing width of the laser beam 38 and the number of times that the laser beam 38 is irradiated along the substantially same trajectory are set for each recording apparatus.

With the above-mentioned image forming method, scanning is not performed with respect to radial positions

where no image forming locations exist, and the laser source is moved, at once, to the radial position where the next image forming location resides, and then the image formation is carried out. If the pitch Δr is large, an image may be formed with gaps therein, even when an image is to be formed which is connected in the radial direction. If the pitch Δr is made smaller, such gaps can be made inconspicuous, however, the number of circulations needed to form the image over the entire label surface increases, and a longer time is needed to form the image.

Using the apparatus disclosed in Japanese Laid-Open Patent Publication No. 2002-203321, a tracking actuator is driven by a vibration signal (sine wave, triangle wave, etc.), which is generated from a vibration signal generating circuit when image formation is carried out, whereby an objective lens is vibrated in the radial direction of the disk. Accordingly, the laser beam 38 is vibrated in the radial direction, such that image formation can be carried out with a comparatively large pitch Δr yet for which gaps do not exist (or wherein the gaps are few). The frequency of the vibration signal can be set on the order of a few kHZ, for example. Further, the pitch Δr can be set on the order of 50 to 100 μm, for example.

Concerning further details of the aforementioned image formation method, reference can be made to Japanese Laid-Open Patent Publication No. 2002-203321.

The recording device for recording data in the data recording layer 18 includes at least a laser pickup for irradiating the laser beam 38, and a rotating mechanism for rotating the optical information recording medium 10. Recording and reproduction on the data recording layer 18 can be performed by irradiating laser light 38 from the laser pickup toward the data recording layer 18 of the optical information recording medium 10, while in a state of rotation. The structure itself of such a recording device is well known.

Next, an explanation shall be made concerning recording of data (pit information) on the data recording layer 18. In the case that the data recording layer 18 is a colored type, first, while a non-recorded optical information recording medium 10 as discussed above is rotated at a predetermined recording linear velocity, the laser beam 38 is irradiated from the laser pickup. In accordance with the irradiated beam, the pigmentation of the data recording layer 18 absorbs the laser light, so that the temperature rises locally therein, desired voids (pits) are generated, and information is recorded as a result of changes in the optical characteristics thereof.

The recording waveform of the laser beam 38 at the time of forming a single pit can be either a pulse train or a single pulse. The ratio with respect to the length (pit length) to be actually recorded is important.

As for the pulse width of the laser beam 38, a range of 20% to 95% with respect to the length to be actually recorded is preferable, a range of 30% to 90% is more preferable, and a range of 35% to 85% is even more preferable. When the recording waveform is a pulse train, the sum of the pulse train, as being within the aforementioned ranges, is indicated.

As for the power of the laser beam 38, although the power differs according to the recording linear speed, in the case that the recording linear speed is 3.5 m/sec, a range of 1 to 100 mW is preferable, a range of 3 to 50 mW is more preferable, and a range of 5 to 20 mW is even more preferable. Further, in the case that the recording linear speed is doubled, the preferred range for the power of the laser beam 38 becomes $2^{1/2}$ times such ranges, respectively. Further, in order to increase the recording density, the NA (numerical aperture) of the objective lens used at the pickup is preferably 0.55 or greater, and more preferably, 0.60 or greater.

In the present embodiment, as the laser beam 38, a semiconductor laser can be used, which has an oscillation wavelength within a range of 350 to 850 nm.

Next, an explanation shall be given of a case in which the data recording layer 18 is of a phase-change type. In the case of a phase-change type, the data recording layer 18 can be constructed from the aforementioned materials, in which a phase change, between a crystalline phase and an amorphous phase, can be repeatedly performed by irradiation of laser light 38. When information is to be recorded, a concentrated laser beam 38 pulse is irradiated for a short time, whereupon the phase change recording layer becomes partially melted. The melted portions are then rapidly cooled by heat diffusion and solidified, whereby an amorphous state recording mark is formed. Further, when erasing is performed, the laser beam 38 is irradiated onto the recording mark portion, and by heating to a temperature below the melting point of the data recording layer 18 but at or above the crystallization temperature, followed by gradual cooling, the amorphous state recording mark is crystallized, whereupon the original non-recorded condition thereof is restored.

Next, the present invention shall be explained in further detail below with reference to Examples. However, it should be understood that the present invention is not limited to Examples described below.

(Example 1)

The optical information-recording medium of Example 1 is a DVD-R type optical information-recording medium, which is obtained by bonding two disks together. An explanation shall be made below concerning the method for manufacturing the optical information-recording medium of Example 1.

A first substrate 16 having a thickness of 0.6 mm and a diameter of 120 mm, which was provided with a spiral-shaped (helical) groove (depth: 130 nm, width: 300 nm, track pitch: 0.74 μm) therein, was formed by means of injection molding using a polycarbonate resin.

Thereafter, 1.5 g of an oxonol dye represented by the following general formula (ch-63), and 1.5 g of an oxonol dye represented by the following general formula (ch-64), were dissolved in 100 ml of 2,2,3,3,-tetrafluoro-1-propanol in order to prepare a coating liquid. The coating liquid was applied onto a surface of the first substrate 16, on which the pregroove 40 was formed, by means of a spin coating method, thereby forming a data-recording layer 18.

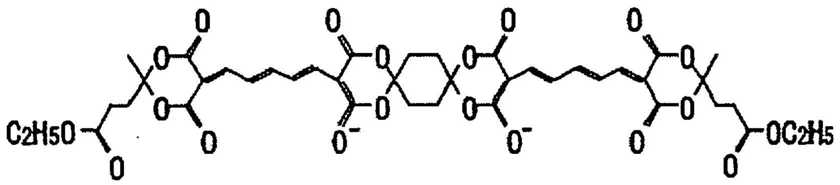

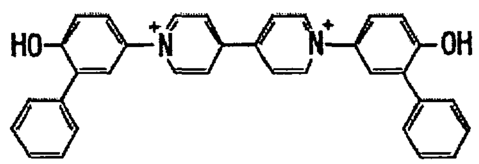

··· (ch-63)

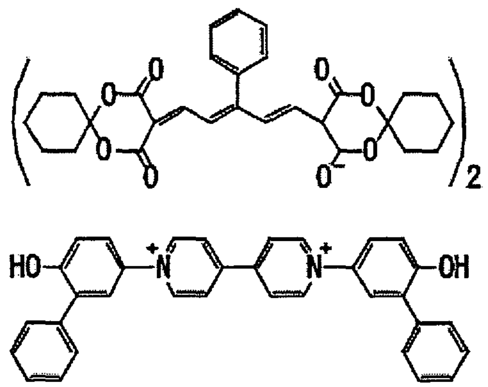

··· (ch-64)

Subsequently, silver was sputtered on the data-recording layer 18, so as to form a first reflective layer 20 having the film thickness of 120 nm. Thereafter, an ultraviolet-curable resin (SD 318 produced by Dainippon Ink and Chemicals, Inc.) was applied by means of a spin coating method, and then, the resin was cured by radiating with ultraviolet light in order to form a first protective layer having a layer thickness of 10 μm. According to the above-described steps, a data-recording medium section 12 was manufactured.

Subsequently, in order to form a visible information-recording layer 24, 1.50 g in total of a phthalocyanine dye represented by the following general formula (ch-65), and a trimethine cyanine dye represented by the following general formula (ch-66) along with metal atoms, as shown in FIG. 14, were dissolved in 100 ml of 2,2,3,3-tetrafluoro-1-propanol, so as to prepare a coating liquid for the visible information-recording layer. The coating liquid for the visible information-recording layer was formed by means of spin coating on a second substrate 22, so as to have a thickness of 0.6 mm and a diameter of 120 mm.

Subsequently, silver was sputtered on the visible information-recording layer 24, thereby forming a second reflective layer 26 having a film thickness of 120 nm. Thereafter, an ultraviolet-curable resin (SD 318 produced by Dainippon Ink and Chemicals, Inc.) was applied by means of a spin coating method, and then, the resin was cured by

radiating with ultraviolet light in order to form a second protective layer having a layer thickness of 10 μm. According to the above-described steps, a visible information-recording medium section 14 was manufactured.

Subsequently, the following steps were performed in order to bond the data-recording medium section 12 and the visible information-recording medium section 14 to one another, so that the first optical information-recording medium 10A was completed. At first, a slow-acting cation polymerization type adhesive (produced by Sony Chemical, SDK 7000) was printed, by means of screen printing, on the first protective layer of the data-recording medium section 12, as well as on the second protective layer of the visible information-recording medium section 14, respectively. During this procedure, the printing plate used for performing screen printing had a mesh size of 300 mesh. Subsequently, ultraviolet light was radiated using a metal halide lamp, immediately after which the data-recording medium section 12 and the visible information-recording medium section 14 were bonded to one another from the sides of the respective protective layers. Thereafter, both surfaces were pressed and left to stand for 5 minutes in order to manufacture the optical information-recording medium according to Example 1.

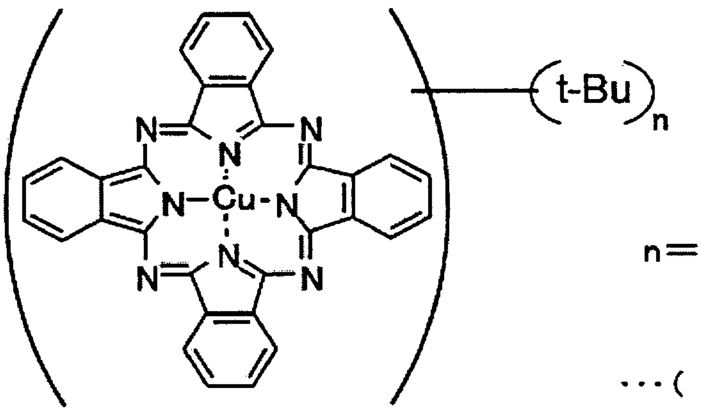

n=1 ~3

···( ch-65 )

Phthalocyanine dye

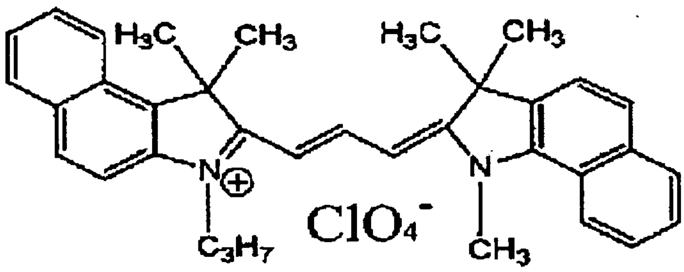

Trimethine cyanine dye

···( ch-66 )

(Examples 2 to 4)

In the optical information-recording media according to Examples 2 to 4, the first optical information-recording medium 10A were produced in basically the same manner as in Example 1, except that the content of metal atoms contained within the coating liquid used for forming the visible information-recording layer, which were adopted when the visible information-recording layer 24 of the visible information-recording medium section 14 of Example 1 was

formed, were changed as shown in FIG. 14.(evaluation of contrast)

Recording was carried out as described below on the optical information-recording mediums manufactured according to the first through fourth examples.

Drawing of an evaluation image on the visible information-recording layer 24 was performed based on the drive drawing conditions shown in FIG. 15A, using the recording apparatus disclosed in Japanese Laid-Open Patent Publication 2002-203321, that is, a recording apparatus (with a semiconductor laser having a wavelength of 660 nm as the laser beam source) having a laser pickup emitting the laser beam 38 and a rotating mechanism for rotating the optical information-recording medium. In this case, while the optical information-recording medium and the laser pickup were moved relatively along the surface of the optical information-recording medium, the laser beam 38 was modulated corresponding to desired image data in synchronism with the relative movement, under conditions with a linear speed of 3.5 m/sec and a recording power of 8 mW, whereby the visible information-recording layer 24 was irradiated in a focus-applied state and visible information was recorded. At this time, the laser beam 38 was swung in a radial direction on the optical information-recording medium, which was irradiated multiple times along substantially the same trajectory, to record the visible information. Further, under a state in which the optical information-recording medium is rotated by the rotating mechanism, recording of pit information can be performed by irradiating the data recording layer 18 with the laser beam 38 from the laser pickup.

With the spectrophotometer measurement conditions shown in FIG. 15B, the absolute reflectivities of the laser irradiated portion and laser non-irradiated portion of the optical information-recording layer 24 were measured on examples 1 to 4 on which visible information was recorded as indicated above, and the values Sv represented by the formula below were determined, whereby the values Sv were taken as a contrast evaluation index. The CIE standard spectral luminous efficiency was as shown in FIG. 16.

$$Sv = \frac{\int_{410}^{720} | D(\lambda) - U(\lambda) | V(\lambda) d\lambda}{\int_{410}^{720} D(\lambda) V(\lambda) d\lambda}$$

D(λ): spectral reflectivity (%) of laser irradiated portion
U(λ): spectral reflectivity (%) of laser non-irradiated portion
V(λ): CIE standard spectral luminous efficiency

Moreover, from the values of Sv determined by the above formula, a 5-step evaluation standard was provided. The evaluation standard is as shown in FIG. 17. Contrast was evaluated in accordance with the evaluation standard of FIG. 17. Evaluation results are shown in FIG. 14.

The light durability as well as heat durability of the images obtained with all of Examples 1 to 4 were excellent. Further, as understood from the contrast evaluation results of FIG. 14, in all of Examples 1 to 4, contrast is satisfactory, and a vividly recorded image is obtained.

It is a matter of course that the optical information-recording medium, the method for producing the optical information-recording medium, the method for recording visible information, as well as the mixture and method for using the mixture according to the present invention, are not limited to the aforementioned embodiments, but rather, such structures and features may be embodied in other various forms, without deviating from the gist or essential characteristics of the present invention.

## Claims

1. An optical information-recording medium capable of recording information by radiating a laser beam (38), said optical information-recording medium comprising:

    a visible information-recording layer (24) on which visible information is to be recorded,

    wherein said visible information-recording layer (24) contains a dye and at least one metal atom selected from the group consisting of Na, Mg, K, and Ca.

2. The optical information-recording medium according to claim 1, wherein said dye is at least one selected from the

group consisting of oxonol dyes, cyanine dyes, azo dyes, phthalocyanine dyes, and pyrromethene dyes.

3. The optical information-recording medium according to claim 1 or 2, wherein said metal atom is contained at a ratio of 0.1 to 100 g with respect to 1 kg of said dye.

4. The optical information-recording medium according to any one of claims 1 to 3, wherein said dye further contains a trimethine cyanine dye and a phthalocyanine dye, having a central metal of Cu.

5. The optical information-recording medium according to claim 4, wherein said metal atom is contained at a ratio of 0.1 to 10 g with respect to 50 g of the content of Cu as said central metal.

6. The optical information-recording medium according to any one of claims 1 to 5, comprising:

a first substrate (16);
a data-recording layer (18) formed on said first substrate (16);
a first reflective layer (20) formed on said data-recording layer (18);
an adhesive layer (28) formed on said first reflective layer (20);
a second reflective layer (26) formed on said adhesive layer (28);
said visible information-recording layer (24), which is formed on said second reflective layer (28); and
a second substrate (22) formed on said visible information-recording layer (24).

7. An optical information-recording medium comprising:

a colored substrate (22a); and
a visible information-recording layer (24), which is formed on said colored substrate (22a), and on which visible information is recorded by means of a laser beam (38),

wherein said colored substrate (22a) is formed such that an added amount of a dye and/or a pigment contained in said colored substrate (22a) is adjusted on the basis of an output of said laser beam (38).

8. An optical information-recording medium comprising:

a colored first substrate (22a);
a visible information-recording layer (24), which is formed on said first substrate (16), and on which visible information is recorded by means of a first laser beam (38);
a second transparent substrate (22); and
a data-recording layer (18), which is formed on said second substrate (22), and on which digital information is recorded by means of a second laser beam (38),

wherein said first substrate (16) is formed such that an added amount of a dye and/or a pigment contained in said first substrate (16) is adjusted on the basis of an output of said first laser beam (38).

9. An optical information-recording medium comprising:

a colored first substrate (22a);
a visible information-recording layer (24), which is formed on said first substrate (22a), and on which visible information is recorded by means of a first laser beam (38);
a second transparent substrate (16);
a data-recording layer (18), which is formed on said second substrate (16), and on which data is recorded by means of a second laser beam (38),

wherein a laser beam control area for controlling said first laser beam (38) is disposed on a side of said first substrate (22a), said laser beam control area having laser power control information for controlling laser power corresponding to color information of the colored first substrate (22a).

10. The optical information-recording medium according to claim 9, wherein at least one of a prepit (32), a pregroove and a code pattern including said laser power control information is formed in said laser beam control area.

**11.** A method for producing an optical information-recording medium (10B) comprising a colored substrate (22a) and a visible information-recording layer (24) formed on said substrate (22a), and wherein visible information may be recorded on said visible information-recording layer (24) by means of a laser beam (38) radiated from a side of said substrate (22a), said method comprising the steps of:

forming said colored substrate (22a) by adjusting an added amount of a dye and/or a pigment contained in said substrate (22a) on the basis of an output of said laser beam (38); and
forming said visible information-recording layer (24) on said substrate (22a).

**12.** A method for producing an optical information-recording medium (10B) comprising a colored first substrate (22a), a visible information-recording layer (24) formed on said first substrate (22a), a second transparent substrate (16), and a data-recording layer (18) formed on said second substrate (16), wherein visible information may be recorded on said visible information-recording layer (24) by means of a laser beam (38) radiated from a side of said first substrate (22a) and digital information is recorded on said data-recording layer (18) by means of a laser beam (38) radiated from a side of said second substrate (16), said method comprising:

a substrate-forming step of forming said first substrate (22a) by adjusting an added amount of a dye and/or a pigment contained in said first substrate (22a) on the basis of an output of said laser beam (38);
a first recording layer-forming step of forming said visible information-recording layer (24) on said first substrate (22a); and
a second recording layer-forming step of forming said data-recording layer (18) on said second substrate (16).

**13.** A method for recording visible information on said visible information-recording layer of said optical information-recording medium as defined in any one of claims 1 to 10, said method comprising:

using, as said laser beam (38) for recording visible information on said visible information-recording layer (24), the same laser beam (38) that is used for recording data on said data-recording layer (18).

**14.** A method for using a mixture for forming an optical information-recording medium having a visible information-recording layer (24), on which information is capable of being recorded by radiating a laser beam (38), and wherein visible information is capable of being recorded on said visible information-recording layer (24), said method comprising:

using said mixture for said visible information-recording layer (24) of said optical information-recording medium,

wherein said mixture is composed of a dye and at least one metal atom selected from the group consisting of Na, Mg, K, and Ca.

**15.** A mixture, which is used for forming a visible information-recording layer (24) of an optical information-recording medium, on which information is capable of being recorded by radiating a laser beam (38), and wherein visible information is capable of being recorded on said visible information-recording layer (24), wherein said mixture is composed of a dye and at least one metal atom selected from the group consisting of Na, Mg, K, and Ca.

FIG. 1

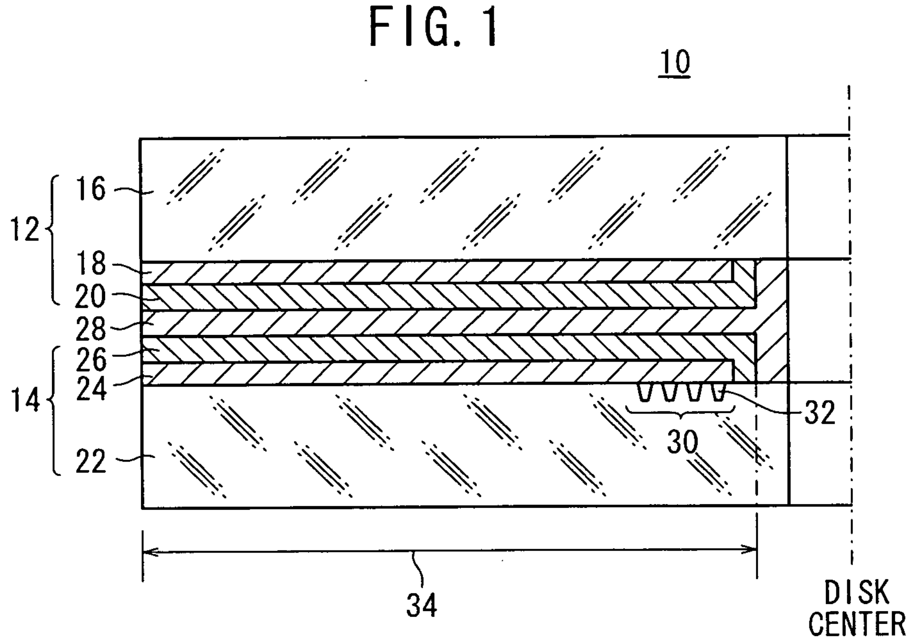

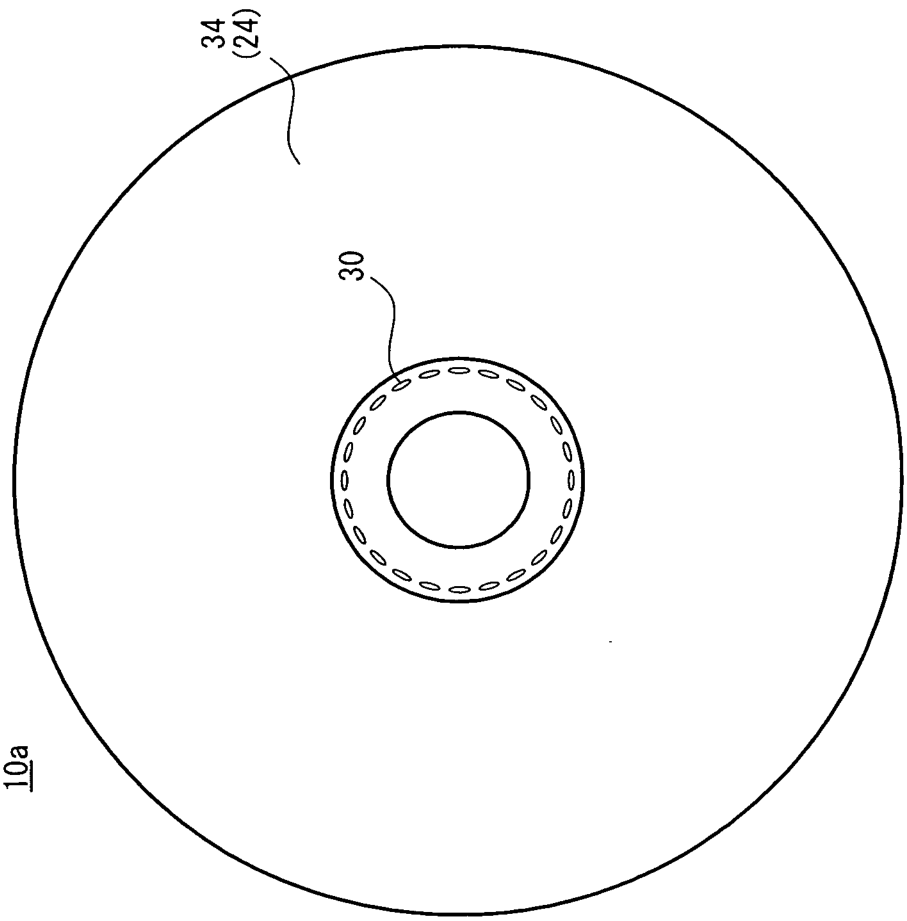


FIG. 2

10a

FIG. 3

10b

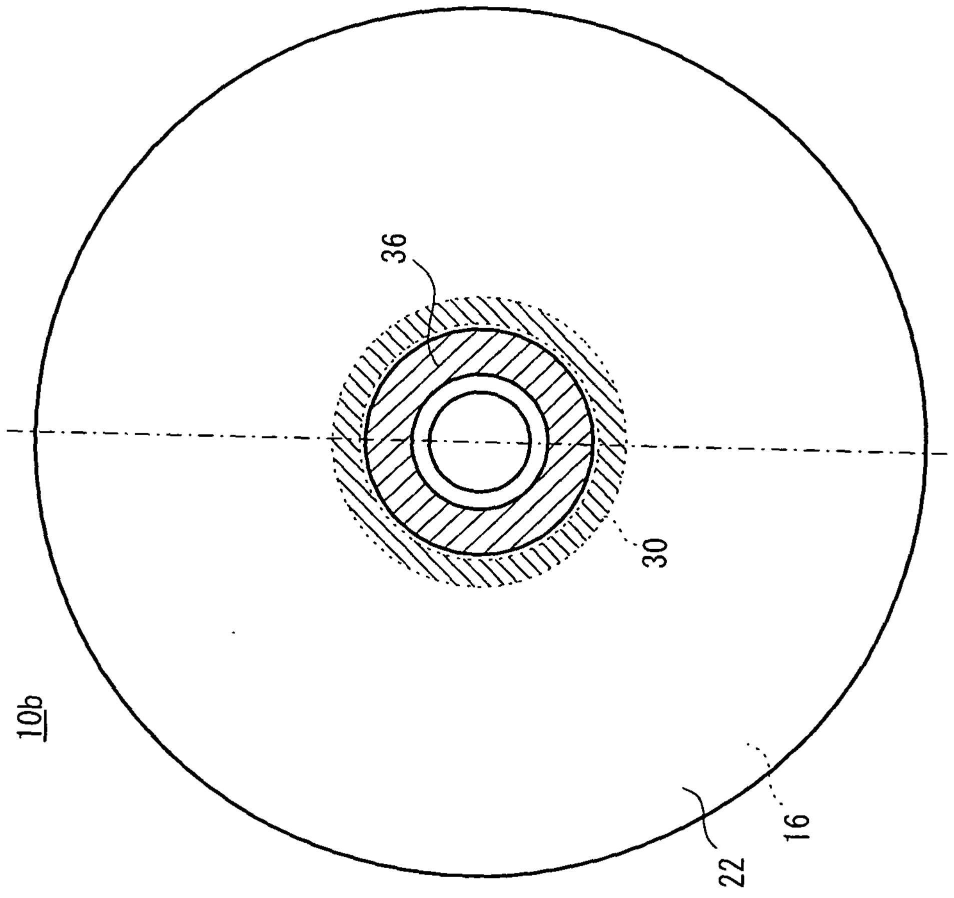

FIG. 4

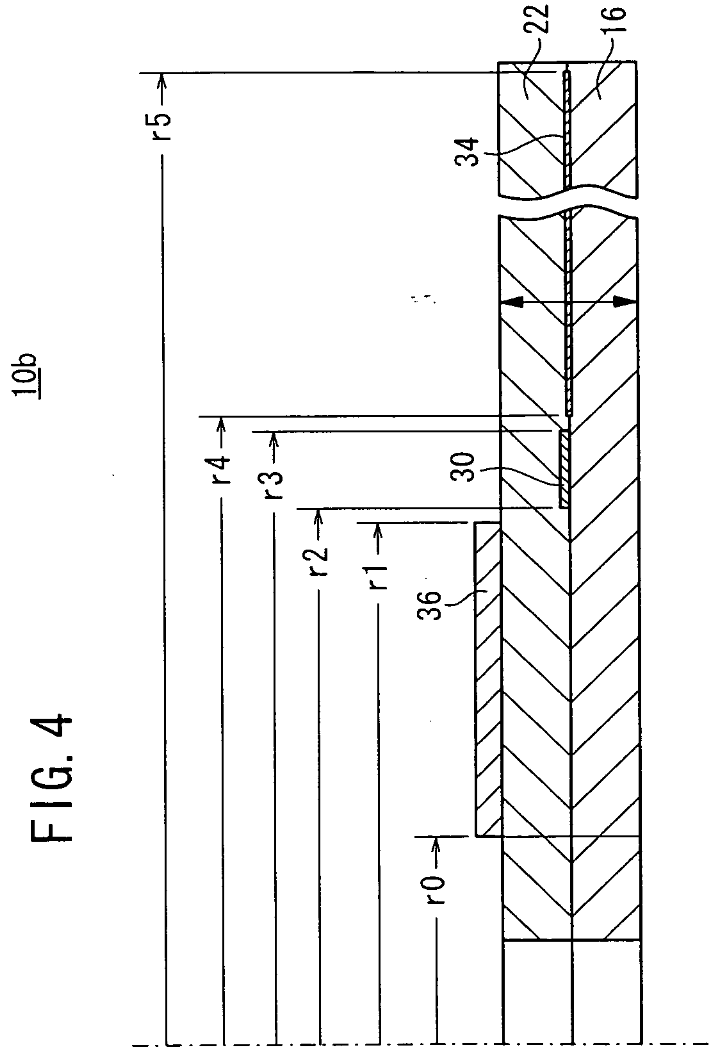

FIG. 5

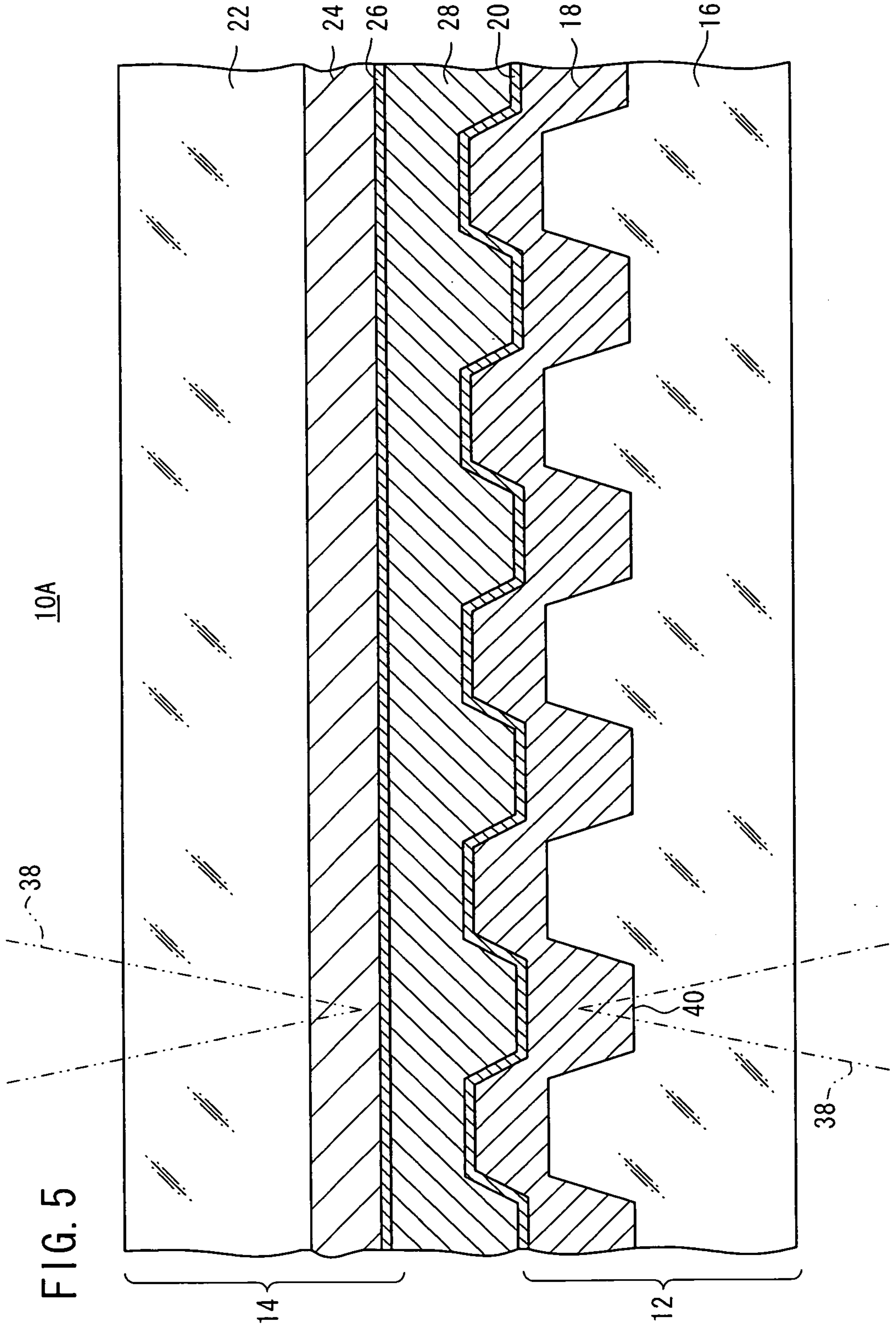

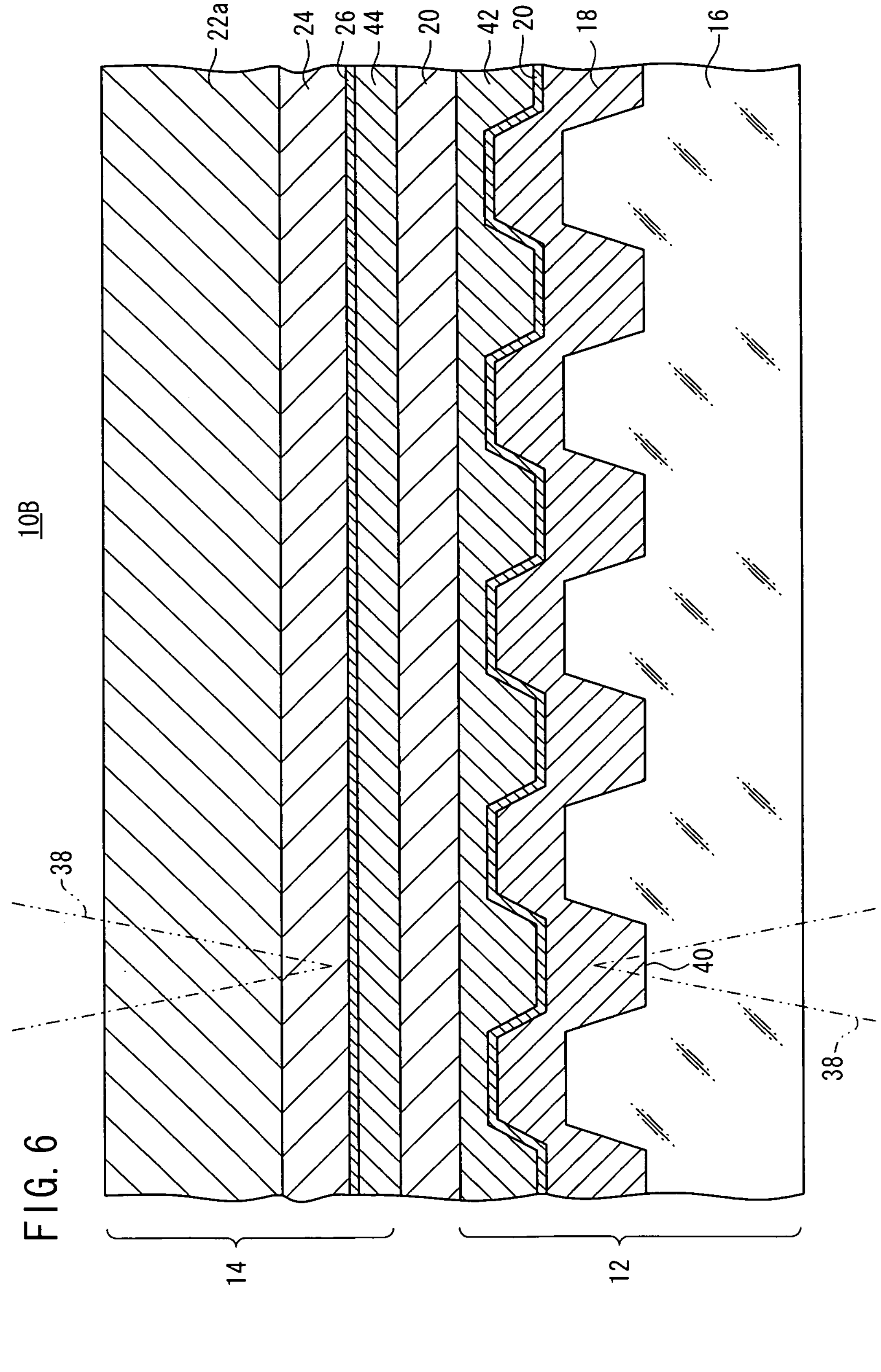


FIG. 6

FIG. 7

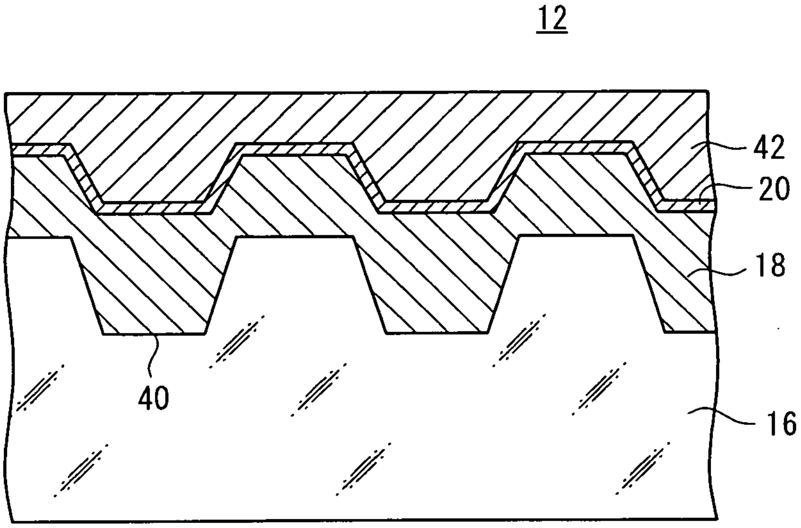

FIG. 8

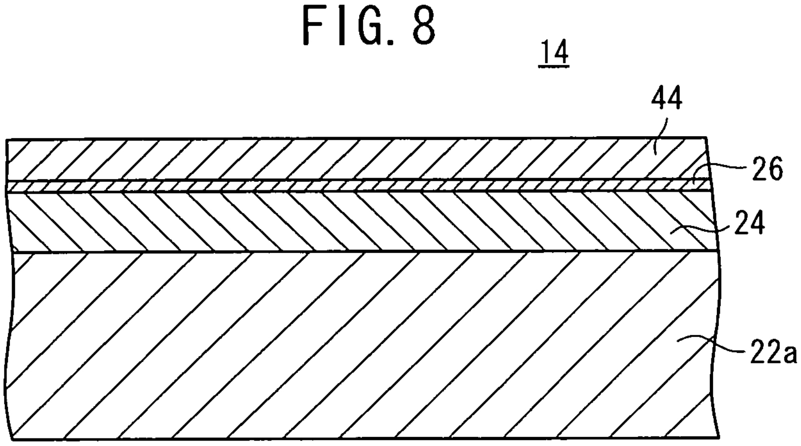

FIG. 9

| EXPRESSION | L* | a* | b* |
|---|---|---|---|
| 1 | 50< | 0< | 0< |
| 2 | 50< | 0> | 0< |
| 3 | 50< | 0> | 0> |
| 4 | 50< | 0< | 0> |
| 5 | 50> | 0< | 0< |
| 6 | 50> | 0> | 0< |
| 7 | 50> | 0> | 0> |
| 8 | 50> | 0< | 0> |

FIG. 10

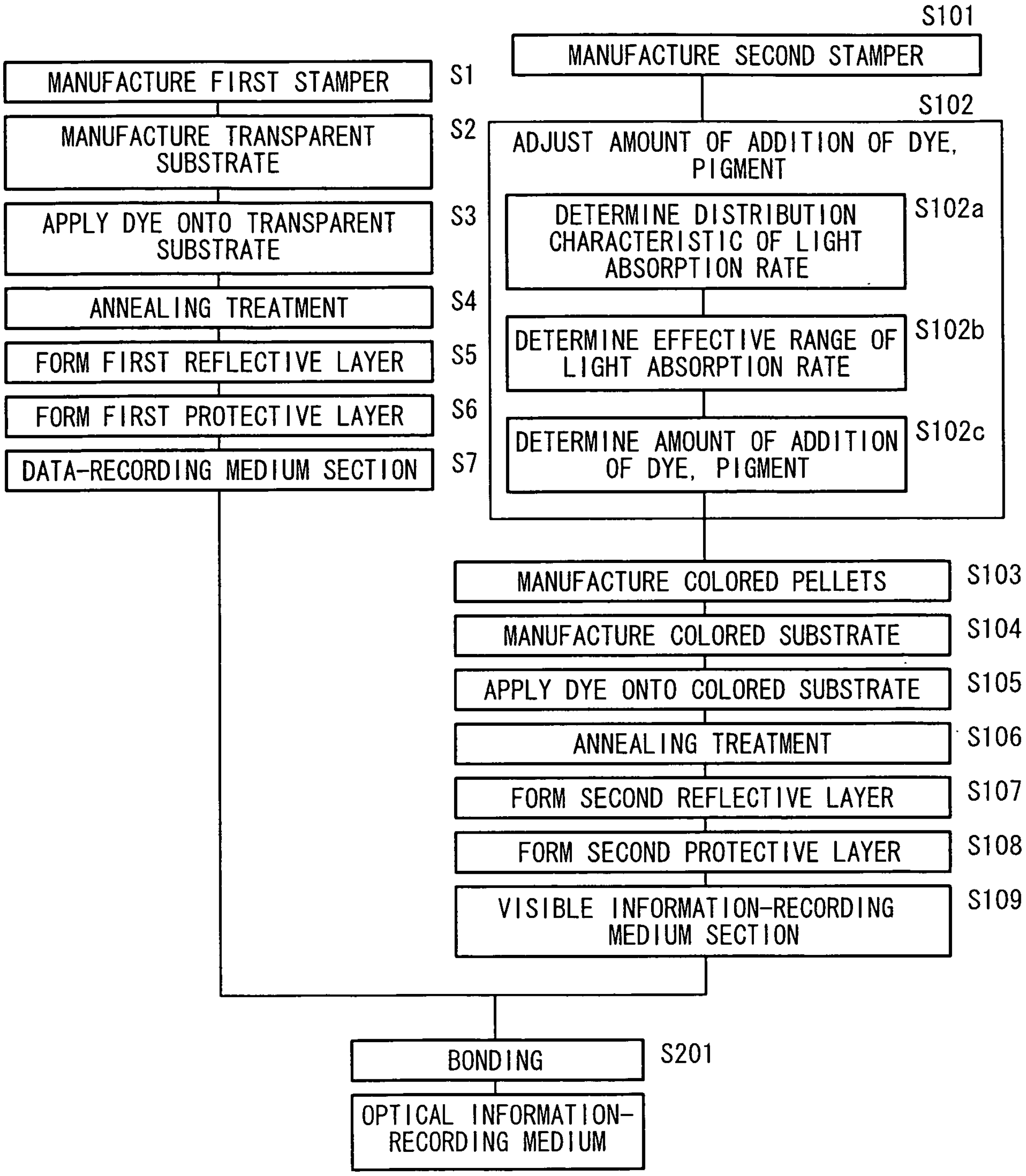
MANUFACTURE FIRST STAMPER
S1
MANUFACTURE TRANSPARENT SUBSTRATE
S2
APPLY DYE ONTO TRANSPARENT SUBSTRATE
S3
ANNEALING TREATMENT
S4
FORM FIRST REFLECTIVE LAYER
S5
FORM FIRST PROTECTIVE LAYER
S6
DATA-RECORDING MEDIUM SECTION
S7
S101
MANUFACTURE SECOND STAMPER
S102
ADJUST AMOUNT OF ADDITION OF DYE, PIGMENT
DETERMINE DISTRIBUTION CHARACTERISTIC OF LIGHT ABSORPTION RATE
S102a
DETERMINE EFFECTIVE RANGE OF LIGHT ABSORPTION RATE
S102b
DETERMINE AMOUNT OF ADDITION OF DYE, PIGMENT
S102c
MANUFACTURE COLORED PELLETS
S103
MANUFACTURE COLORED SUBSTRATE
S104
APPLY DYE ONTO COLORED SUBSTRATE
S105
ANNEALING TREATMENT
S106
FORM SECOND REFLECTIVE LAYER
S107
FORM SECOND PROTECTIVE LAYER
S108
VISIBLE INFORMATION-RECORDING MEDIUM SECTION
S109
BONDING
S201
OPTICAL INFORMATION-RECORDING MEDIUM

FIG. 11

| | COLOR OF COLORED SUBSTRATE | COLOR OF VISIBLE INFORMATION-RECORDING LAYER |
|---|---|---|
| EXEMPLARY COMBINATION 1 | RED | BLUE |
| EXEMPLARY COMBINATION 2 | ORANGE | BLUE |
| EXEMPLARY COMBINATION 3 | GREEN | BLUE |
| EXEMPLARY COMBINATION 4 | RED | GREEN |
| EXEMPLARY COMBINATION 5 | ORANGE | GREEN |

FIG. 12

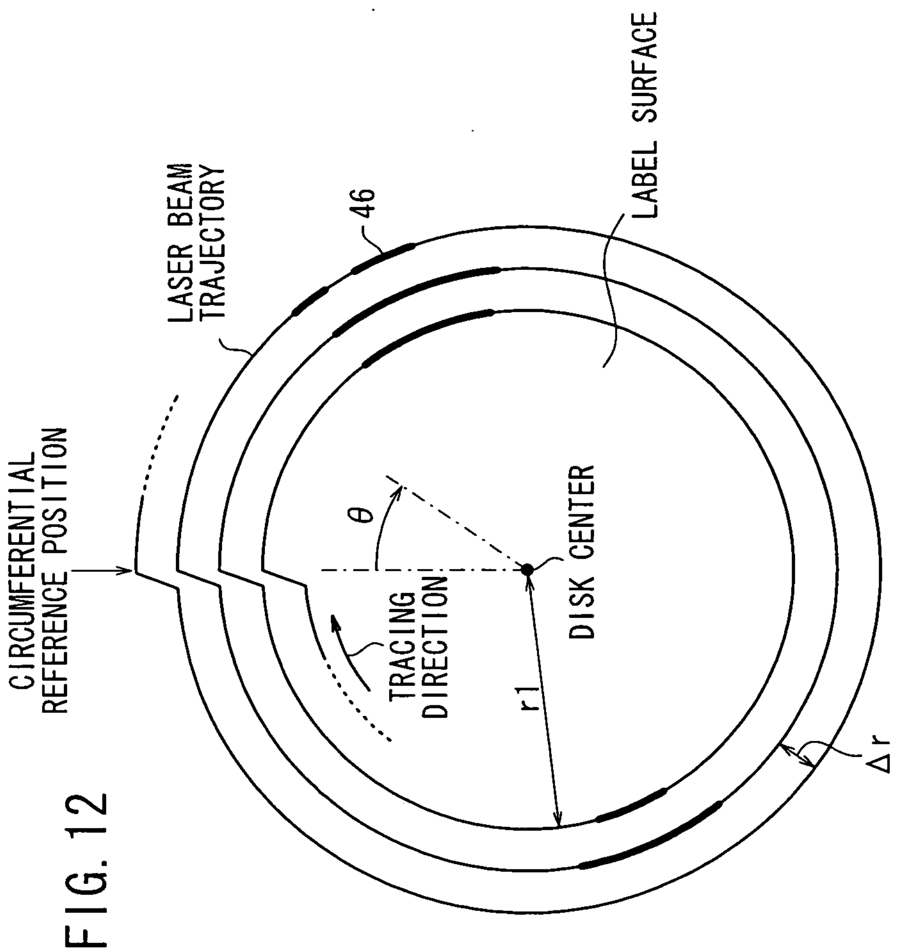
CIRCUMFERENTIAL REFERENCE POSITION
LASER BEAM TRAJECTORY
46
LABEL SURFACE
θ
TRACING DIRECTION
DISK CENTER
r1
Δr

FIG. 13

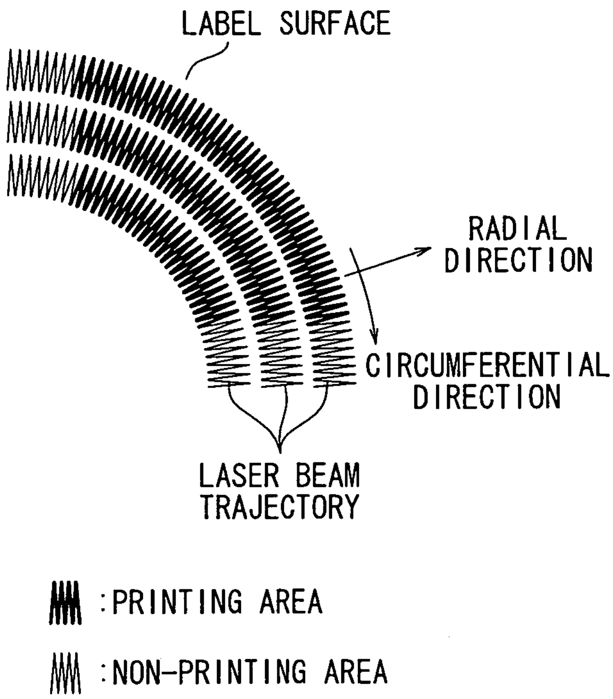
LABEL SURFACE
RADIAL DIRECTION
CIRCUMFERENTIAL DIRECTION
LASER BEAM TRAJECTORY
:PRINTING AREA
:NON-PRINTING AREA

FIG. 14

| | TRIMETHINE CYANINE (kg) | PHTHALOCYANINE (kg) | TOTAL DYE (kg) | Cu (g) | Na (g) | Mg (g) | K (g) | Ca (g) | TOTAL METAL ATOMS (g) | Sv | EVALUATION |
|---|---|---|---|---|---|---|---|---|---|---|---|
| EXAMPLE 1 | 2.33 | 1.00 | 3.33 | 54.70 | 3.36 | 0.20 | 0.13 | 0.48 | 4.17 | 0.30 | 5 |
| EXAMPLE 2 | 2.33 | 1.00 | 3.33 | 54.70 | 1.91 | 0.17 | 0.11 | 0.42 | 2.61 | 0.29 | 5 |
| EXAMPLE 3 | 2.33 | 1.00 | 3.33 | 54.20 | 1.57 | 0.17 | 0.15 | 0.42 | 2.31 | 0.29 | 5 |
| EXAMPLE 4 | 2.33 | 1.00 | 3.33 | 53.70 | 2.02 | 0.51 | 0.19 | 1.11 | 3.83 | 0.30 | 5 |

METHOD FOR MEASURING METAL ATOMS: EDAX ANALYSIS

FIG. 15A

DRIVE RENDERING CONDITIONS

| | |
|---|---|
| LASER BEAM WAVELENGTH | 660 nm |
| NA | 0.66 |
| RENDERING POWER | 8 mW |
| ROTATION SPEED | 4500 rpm (CONSTANT ANGULAR VELOCITY) |
| RENDERING TIME | 6 min |
| SWING FREQUENCY | 200 Hz |
| SWING WIDTH | 50 μm |
| OVERWRITE | 13 times |

FIG. 15B

SPECTROPHOTOMETER CONDITIONS
(ABSOLUTE REFLECTIVITY AT SPECTROPHOTOMETER)

| | |
|---|---|
| WAVELENGTH RANGE | 410-720nm |
| INCIDENT ANGLE WITH RESPECT TO SAMPLE SURFACE | 5° |

FIG. 16

CIE STANDARD SPECTRAL LUMINOUS EFFICIENCY (Spectral luminous efficiency)

| Wavelength λ [nm] | Luminous efficiency V(λ) | Wavelength λ [nm] | Luminous Efficiency V(λ) | Wavelength λ [nm] | Luminous efficiency V(λ) |
|---|---|---|---|---|---|
| 410 | 0.001210 | 515 | 0.608200 | 620 | 0.381000 |
| 415 | 0.002180 | 520 | 0.710000 | 625 | 0.321000 |
| 420 | 0.004000 | 525 | 0.793200 | 630 | 0.265000 |
| 425 | 0.007300 | 530 | 0.862000 | 635 | 0.217000 |
| 430 | 0.011600 | 535 | 0.914850 | 640 | 0.175000 |
| 435 | 0.016840 | 540 | 0.954000 | 645 | 0.138200 |
| 440 | 0.023000 | 545 | 0.980300 | 650 | 0.107000 |
| 445 | 0.029800 | 550 | 0.994950 | 655 | 0.081600 |
| 450 | 0.038000 | 555 | 1.000000 | 660 | 0.061000 |
| 455 | 0.048000 | 560 | 0.995000 | 665 | 0.044580 |
| 460 | 0.060000 | 565 | 0.978600 | 670 | 0.032000 |
| 465 | 0.073900 | 570 | 0.952000 | 675 | 0.023200 |
| 470 | 0.090980 | 575 | 0.915400 | 680 | 0.017000 |
| 475 | 0.112600 | 580 | 0.870000 | 685 | 0.011920 |
| 480 | 0.139020 | 585 | 0.816300 | 690 | 0.008210 |
| 485 | 0.169300 | 590 | 0.757000 | 695 | 0.005723 |
| 490 | 0.208020 | 595 | 0.694900 | 700 | 0.004102 |
| 495 | 0.258600 | 600 | 0.631000 | 705 | 0.002929 |
| 500 | 0.323000 | 605 | 0.566800 | 710 | 0.002091 |
| 505 | 0.407300 | 610 | 0.503000 | 715 | 0.001484 |
| 510 | 0.503000 | 615 | 0.441200 | 720 | 0.001047 |

[Presented by: Publication CIE No. 18.2 (1983), No. 41 (1978)]

FIG. 17

| Sv | CONTRAST | EVALUATION |
| --- | --- | --- |
| 0. 25 AND ABOVE | SUPERIOR | 5 |
| 0. 20 AND ABOVE, LESS THAN 0. 25 | GOOD | 4 |
| 0. 15 AND ABOVE, LESS THAN 0. 20 | PRACTICALLY SATISFACTORY | 3 |
| 0. 10 AND ABOVE, LESS THAN 0. 15 | PARTIALLY UNSATISFACTORY | 2 |
| LESS THAN 0. 10 | UNSATISFACTORY | 1 |

**INTERNATIONAL SEARCH REPORT**

International application No.
PCT/JP2006/323860

A. CLASSIFICATION OF SUBJECT MATTER
*G11B7/24*(2006.01)i, *G11B7/254*(2006.01)i, *G11B7/257*(2006.01)i

According to International Patent Classification (IPC) or to both national classification and IPC

B. FIELDS SEARCHED

Minimum documentation searched (classification system followed by classification symbols)
G11B7/24, G11B7/254, G11B7/257

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-285167 A (Fuji Photo Film Co., Ltd.), 13 October, 2005 (13.10.05), Full text; all drawings (Family: none) | 1-15 |
| A | JP 2004-246981 A (Mitsubishi Chemical Corp.), 02 September, 2004 (02.09.04), Full text; all drawings (Family: none) | 1-15 |
| A | JP 9-241238 A (Mitsui Toatsu Chemicals, Inc.), 16 September, 1997 (16.09.97), Full text; all drawings (Family: none) | 1-15 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 February, 2007 (27.02.07) | 06 March, 2007 (06.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/323860

C (Continuation). DOCUMENTS CONSIDERED TO BE RELEVANT

| Category* | Citation of document, with indication, where appropriate, of the relevant passages | Relevant to claim No. |
|---|---|---|
| A | JP 3-9883 A (TDK Corp.),<br>17 January, 1991 (17.01.91),<br>Full text; all drawings<br>(Family: none) | 1-15 |
| A | JP 2003-242681 A (TDK Corp.),<br>29 August, 2003 (29.08.03),<br>Full text; all drawings<br>(Family: none) | 1-15 |
| A | JP 2004-537823 A (General Electric Co.),<br>16 December, 2004 (16.12.04),<br>& WO 03/013214 A2 & US 6475588 B1<br>& US 2003/0099806 A1 & EP 1461853 A<br>& CN 1565023 A & TW 239523 B | 1-15 |

Form PCT/ISA/210 (continuation of second sheet) (April 2005)

**INTERNATIONAL SEARCH REPORT**

International application No.
PCT/JP2006/323860

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention of claim 1 relates to "an optical information recording medium capable of recording information by laser beam irradiation, the optical information recording medium comprising a visible information recording layer on which visible information is to be recorded, the visible information recording layer containing a coloring matter, and at least one metal atom selected from the group consisting of Na, Mg, K, and Ca".

The inventions of claims 7 to 12 relate to "an optical information recording medium comprising a colored substrate and a visible information recording layer on which visible information is to be recorded by laser beam irradiation,

(continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

INTERNATIONAL SEARCH REPORT

International application No.
PCT/JP2006/323860

Continuation of Box No.III of continuation of first sheet(2)

the visible information recording layer being provided on the colored substrate, wherein, in the colored substrate, the amount of a coloring matter and/or a pigment added to the substrate has been regulated according to the output of the laser beam".

Thus, there is no technical relationship between these inventions involving one or more of the same or corresponding special technical features, so that these inventions are not considered as being so linked as to form a single general inventive concept.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11066617 A
- JP 2000113516 A
- JP 2001283464 A
- JP 2000173096 A
- JP 2004246981 A
- JP 2000052658 A
- JP 2002059652 A
- JP 3922069 B
- JP 433504 A
- JP 52038056 A
- JP 54038129 A
- JP 55010059 A
- JP 58035544 A
- JP 49099620 A
- JP 52092716 A
- JP 59016834 A
- JP 63316853 A
- JP 6440827 B
- GB 1133986 A
- US 3247127 A
- US 4042397 A
- US 4181225 A
- US 5213956 A
- US 5260179 A
- JP 63209995 A
- JP 10309871 A
- JP 2002249674 A
- EP 1424691 A2
- JP 3268994 A
- JP 3061088 A
- JP 7161069 A
- JP 7251567 A
- JP 10204070 A
- JP 11012483 A
- JP 11166125 A
- JP 2001199169 A
- JP 2001152040 A
- JP 2002114922 A
- JP 10226172 A
- JP 10162430 A
- JP 10287819 A
- JP 11043491 A
- JP 11092479 A
- JP 11092682 A
- JP 11165465 A
- JP 11227332 A
- JP 11227333 A
- JP 11255774 A
- JP 11256056 A
- JP 11256057 A
- JP 11302551 A
- JP 11302253 A
- JP 2000048406 A
- JP 2000260064 A
- JP 2002212456 A
- JP 2002154271 A
- JP 2002155076 A
- JP 2002211136 A
- JP 2002363437 A
- JP 2003064274 A
- JP 2003073574 A
- JP 2003140300 A
- JP 2003182219 A
- JP 2003286415 A
- JP 2003266947 A
- JP 2004066459 A
- JP 2004114394 A
- JP 2004122585 A
- WO 03082593 A1
- JP 4074690 A
- JP 8127174 A
- JP 11053758 A
- JP 11334204 A
- JP 11334205 A
- JP 11334206 A
- JP 11334207 A
- JP 2000043423 A
- JP 2000108513 A
- JP 2000158818 A
- JP 2003203348 A
- JP 2003242750 A
- JP 2002203321 A


### Non-patent literature cited in the description


- The Chemistry of Heterocyclic Compounds. Cyanine Dyes and Related Compounds. John Wiley & Sons, 1964
- **SHIRAI ; KOBAYASHI.** Phthalocyanine - Chemistry and Function. IPC, 1-62

- **C. C. LEZNOFF ; A. B. P. LEVER.** Phthalocyanine - Properties and Applications. VCH, 1-54